(19) Europäisches Patentamt / European Patent Office / Office européen des brevets

(11) **EP 3 565 792 B1**

(12) **EUROPÄISCHE PATENTSCHRIFT**

(45) Veröffentlichungstag und Bekanntmachung des Hinweises auf die Patenterteilung:
**03.06.2020 Patentblatt 2020/23**

(21) Anmeldenummer: **19706470.2**

(22) Anmeldetag: **14.02.2019**

(51) Int Cl.:
***C04B 28/10*** (2006.01)

(86) Internationale Anmeldenummer:
**PCT/EP2019/053722**

(87) Internationale Veröffentlichungsnummer:
**WO 2019/141880 (25.07.2019 Gazette 2019/30)**

(54) **VERHINDERN ODER VERMINDERN VON PFLANZENWACHSTUM DURCH BIOZEMENTIERUNG**

PREVENTING OR REDUCING PLANT GROWTH BY BIOCEMENTATION

PROCÉDÉ POUR EMPÊCHER ET RÉDUIRE LA CROISSANCE DE PLANTES PAR BIOCIMENTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA**

(30) Priorität: **14.02.2018 DE 102018103314**

(43) Veröffentlichungstag der Anmeldung:
**13.11.2019 Patentblatt 2019/46**

(73) Patentinhaber: **DUST BIOSOLUTIONS GMBH**
**82152 Planegg (DE)**

(72) Erfinder: **Die Erfindernennung liegt noch nicht vor**

(74) Vertreter: **Eisenführ Speiser**
**Patentanwälte Rechtsanwälte PartGmbB**
**Postfach 31 02 60**
**80102 München (DE)**

(56) Entgegenhaltungen:
**EP-A1- 3 121 156       WO-A1-2006/066326**
**US-A1- 2012 137 931**

- **STOCKS-FISCHER S ET AL: "Microbiological precipitation of CaCO3", SOIL BIOLOGY AND BIOCHEMISTRY, PERGAMON, OXFORD, GB, Bd. 31, Nr. 11, 1. Oktober 1999 (1999-10-01), Seiten 1563-1571, XP002372267, ISSN: 0038-0717, DOI: 10.1016/S0038-0717(99)00082-6**
- **NEMATI M ET AL: "Modification of porous media permeability, using calcium carbonate produced enzymatically in situ", ENZYME AND MICROBIAL TECHNOLOGY, STONEHAM, MA, US, Bd. 33, Nr. 5, 8. Oktober 2003 (2003-10-08), Seiten 635-642, XP002372268, ISSN: 0141-0229, DOI: 10.1016/S0141-0229(03)00191-1**

EP 3 565 792 B1

**Beschreibung**

Die vorliegende Erfindung betrifft primär die Verwendung einer Mischung, die zur Biozementierung in der Lage ist, wie hierin definiert, als Mittel zum Verhindern oder Reduzieren von Pflanzenwachstum, vorzugsweise des Wachstums von Unkraut, auf / in einem Substrat. Die Erfindung betrifft zudem ein Verfahren zum Verhindern oder Reduzieren von Pflanzenwachstum, vorzugsweise des Wachstums von Unkraut, auf / in einem Substrat.

Weitere Aspekte und bevorzugte Ausgestaltungen der vorliegenden Erfindung ergeben sich aus den nachfolgenden Ausführungen, den beigefügten Beispielen und insbesondere den beigefügten Patentansprüchen.

Das unkontrollierte Wachstum von Unkräutern stellt in der Landwirtschaft, in Städten und Kommunen sowie im Heimgartenbereich ein ständiges Problem dar, da es in der Landwirtschaft zu Ertragsverlusten führt und beispielsweise auf Wegen und anderen Flächen als sehr störend und unästhetisch empfunden wird. Aus diesem Grund werden Unkräuter durch thermische Verfahren, wie zum Beispiel Abflammen, durch manuelles Jäten mit der Hand oder unter Zuhilfenahme verschiedener Werkzeuge oder mithilfe chemischer Wirkstoffe bekämpft und / oder vernichtet. Es ist jedoch aktuell zu beobachten, dass gegen viele der bestehenden Produkte immer mehr Resistenzen gebildet werden und diese dadurch wiederholt angewendet werden müssen, was die Kosten ihrer Verwendung weiter steigert. Darüber hinaus kommt es schnell zu einer Wiederbesiedlung der behandelten Flächen durch unkontrollierten Samenzuflug.

Es war daher die primäre Aufgabe der vorliegenden Erfindung, ein Mittel zum Verhindern oder Vermindern von ungewolltem Pflanzenwachstum bereitzustellen, das die oben genannten Probleme überwindet.

Erfindungsgemäß gelöst wird diese primäre gestellte Aufgabe durch die Verwendung einer Mischung, die zur Biozementierung in der Lage ist, als Mittel zum Verhindern oder Reduzieren (jeweils durch die Prozesse der Biozementierung) von Pflanzenwachstum, vorzugsweise des Wachstums von Unkraut, wobei die Mischung folgende Bestandteile umfasst oder daraus besteht:

(i) ein oder mehrere Organismen und / oder Enzyme, das, der bzw. die dazu in der Lage ist / sind, Carbonat zu bilden, die Carbonat-Bildung zu induzieren und / oder zu katalysieren,

(ii) ein oder mehrere Stoffe zur Bildung von Carbonat,

(iii) optional: eine oder mehrere Kationen-Quellen, und

(iv) optional: ein oder mehrere Additive.

Der Begriff Biozementierung steht im Rahmen des vorliegenden Textes für eine im Wesentlichen natürliche Verfestigung und / oder Verhärtung von (permeablen) Substraten (wie im Rahmen des erfindungsgemäßen Verfahrens weiter unten definiert). Auf / in diesen Substraten wird dadurch das Pflanzenwachstum verhindert oder reduziert. Biozement ist im Rahmen dieses Textes das Produkt der hierin definierten Biozementierung.

Gemäß einer bevorzugten Ausführungsform handelt es sich bei besagter im Wesentlichen natürlicher Verfestigung und / oder Verhärtung um einen Vorgang, bei dem Teile des Substrats, auf / in dem das Pflanzenwachstum reduziert oder verhindert werden soll, durch einen oder mehrere Binder, der bzw. die in der erfindungsgemäß zu verwendenden Mischung enthalten ist bzw. sind und / oder aus deren Bestandteilen gebildet wird bzw. werden, miteinander verbunden werden und auf diese Weise eine Verfestigung und / oder Verhärtung (Biozementierung) des Substrats oder Teilen des Substrats bewirkt wird. Gemäß einer besonders bevorzugten Ausführungsform handelt es sich bei besagter natürlicher Verfestigung und / oder Verhärtung um einen Prozess, bei dem (lebende) Organismen, Teile davon oder Enzyme, die vorzugsweise aus den besagten Organismen oder Teilen gewonnen werden und / oder von diesen produziert werden, dazu eingesetzt werden, Carbonat zu bilden, die Carbonat-Bildung zu induzieren und / oder zu katalysieren. Die gebildeten Carbonate verbinden dabei die Teile des Substrats bzw. das Substrat, auf / in welchem das Pflanzenwachstum reduziert oder verhindert werden soll, wodurch eine Verfestigung und / oder Verhärtung des Substrats oder Teilen davon erfolgt. Die gebildeten Carbonate stellen im Rahmen dieses Textes daher vorzugsweise einen Mindestbestandteil des Biozements dar. Optional oder alternativ kann durch die Zugabe bestimmter Additive (wie unten definiert) das Substrat bzw. die Teile des Substrats, auf / in welchem das Pflanzenwachstum reduziert oder verhindert werden soll, (zusätzlich) verfestigt und / oder verhärtet werden. Der Biozement kann daher gemäß einer weiteren Ausführungsform auch aus diesen erfindungsgemäß zu verwendenden Additiven bzw. daraus gewonnenen Substanzen (wie unten definiert) bestehen bzw. diese umfassen.

Gemäß einer bevorzugten Ausführungsform ist daher eine Entfernung des Substrats, auf / in welchem ein Pflanzenwachstum, vorzugsweise ein Wachstum von Unkraut reduziert oder verhindert werden soll, nicht zum Verhindern oder Reduzieren von Pflanzenwachstum notwendig und damit vorzugsweise auch nicht Bestandteil einer erfindungsgemäßen Verwendung, insbesondere da gerade eine Verfestigung und / oder Verhärtung des Substrats (jeweils durch die Prozesse der Biozementierung) das Verhindern oder Reduzieren von Pflanzenwachstum, vorzugsweise des Wachstums von Unkraut, bewirkt.

Gemäß einer weiteren bevorzugten Ausführungsform folgt einer Entfernung des Substrats, auf / in welchem ein Pflanzenwachstum, vorzugsweise ein Wachstum von Unkraut reduziert oder verhindert werden soll, von seinem ursprünglichen Ort eine Mischung des besagten Substrats mit der Mischung, die zur Biozementierung in der Lage ist (wie hierin beschrieben), an einem anderen Ort (beispielsweise in einem Mischgerät) und eine (Wieder-)Aufbringung des erhaltenen Gemisches am ursprünglichen Ort (oder alternativ an einem anderen Ort), an dem eine Biozementierung erfolgen soll).

Des Weiteren ist im Rahmen der erfindungsgemäßen Verwendung wie hierin beschrieben vorteilhafterweise keine Kompaktierung des Substrats, auf / in welchem das Pflanzenwachstum reduziert oder verhindert werden soll, bzw. des Gemsiches aus Substrat und Mischung, die zur Biozementierung in der Lage ist (wie hierin beschrieben), bzw. der ausgebildeten Biozement-Schicht, notwendig, um ein Verhindern oder Reduzieren von Pflanzenwachstum, vorzugsweise des Wachstums von Unkraut, zu erreichen, und damit vorzugsweise auch nicht Bestandteil einer erfindungsgemäßen Verwendung.

Der Begriff Pflanze steht im Rahmen des vorliegenden Textes für Landpflanzen, d.h. die durch einen gemeinsamen, funktionell zu verstehenden Merkmalskomplex aus mehreren Synapomorphien charakterisierte monophyletische Gruppe der Embryophyta. Ihre wichtigsten Gruppen sind: die Lebermoose (Marchantiopsida), Hornmoose (Anthocerotopsida) und Laubmoose (Bryopsida), die häufig in der paraphyletischen Gruppe der Moose zusammengefasst werden, die Bärlappgewächse (Lycopsida), Schachtelhalmgewächse (Equisetopsida) und Farngewächse i.e.S. (Filicopsida), sowie die monophyletischen Samenpflanzen (Spermatophyta) mit den Bedecktsamern (Angiospermen) und den verschiedenen Entwicklungslinien der Nacktsamer (Gymnospermen).

Der Begriff Unkraut steht im Rahmen des vorliegenden Textes für alle Pflanzen (inklusive der Moose und Farne) der spontanen bzw. unerwünschten Begleitvegetation in Kulturpflanzenbeständen, Grünland oder (Heim-)Gartenanlagen, die aus dem Samenpotential des Bodens (als Erstaustrieb oder Wiederaustrieb), über Wurzelausläufer, Pflanzenteile oder Zuflug der Samen zur Entwicklung kommen und vorzugsweise dort nicht gezielt angebaut werden. Synonyme Begriffe für Unkraut sind Beikraut, Wildkraut und Wildpflanze. Der Begriff der Kulturpflanzen steht im Rahmen des vorliegenden Textes für Pflanzen, deren Wuchs erwünscht ist.

Der Prozess der mikrobiellen Biozementierung wird beispielsweise in der Offenlegungsschrift WO 2006/066326 A1 beschrieben. Die Offenlegungsschrift offenbart ein Verfahren zur Bildung von hochfestem Biozement in einem permeablen Ausgangsmaterial, wobei das Ausgangsmaterial mit einer effektiven Menge (i) eines Urease-produzierenden Mikroorganismus, (ii) Harnstoff und (iii) Calcium-Ionen versetzt wird. Durch die Urease-katalysierte Umwandlung des Harnstoffs in Carbonat und dessen Reaktion mit den bereitgestellten Calcium-Ionen entsteht Calciumcarbonat, welches das Ausgangsmaterial verfestigt. Es wird unter anderem beschrieben, dass sich das dort offenbarte Verfahren für Anwendungen im Bergbau, im Bauingenieurwesen oder zur Bereitstellung von Spezialmaterialien eignet.

WO 2016/010434 A1 beschreibt ein Verfahren zur Herstellung eines selbstheilenden zementösen Materials umfassend das Mischen eines Zement-Ausgangsmaterials, einer heilenden Substanz und eines faserförmigen Verstärkungsmaterials, wobei die heilende Substanz bakterielles Material und das faserförmige Verstärkungsmaterial ein biologisch abbaubares Polymer umfasst. Die dort genutzten Bakterien sind dazu in der Lage, Carbonate oder Phosphate bereitzustellen und können gemäß einer Ausführungsform denitrifizierende Bakterien sein.

Der Lösungsansatz der vorliegenden Erfindung beruht auf der Nutzung der Biozementierung zur mechanischen Unterdrückung, d.h. Verhinderung oder Reduktion, von Pflanzenwachstum, vorzugsweise des Wachstums von Unkraut, durch eine biologische Verfestigung des Substrats, auf / in dem die Pflanze wächst. Die erfindungsgemäß zu verwendende Mischung wird daher im Folgenden als Unkrautunterdrückungsmittel bezeichnet. Abhängig von den einzelnen Bestandteilen der erfindungsgemäß zu verwendenden Mischung (siehe unten), können neben der mechanischen Unterdrückung, d.h. Verhinderung oder Reduktion, des Pflanzenwachstums auch weitere Prozesse (wie weiter unten beschrieben) eine Rolle bei der Unterdrückung des Pflanzenwachstums spielen.

Gemäß einer Ausführungsform kann eine erfindungsgemäße Verwendung der Mischung wie hierin beschrieben in einem lokal beschränkten Bereich erfolgen, so dass in dem nicht mit der Mischung (wie hierin beschrieben) behandelten Bereich, in dem keine Verfestigung und / oder Verhärtung des Substrats, auf / in dem die Pflanzen wachsen, stattfindet, (weiterhin) Kulturpflanzen angebaut werden können.

Gemäß einer weiteren Ausführungsform ist es denkbar, das zu behandelnde Substrat, auf / in dem die Pflanzen wachsen, mit einer bestimmen Menge oder Art der Mischung (wie hierin beschrieben) zu behandeln, so dass die resultierende Verfestigung und / oder Verhärtung des besagten Substrats das Wachstum von Kulturpflanzen ermöglicht, jedoch das Wachstum von Unkraut verhindert oder reduziert. In diesem Fall - aber auch generell im Zusammenhang mit der vorliegenden Erfindung - kann die erfindungsgemäß zu verwendende Mischung auch Düngemittel enthalten, die das Wachstum besagter Kulturpflanzen anregt.

Eine bevorzugte Ausführungsform bezieht sich daher auf eine erfindungsgemäße Verwendung einer Mischung wie hierin beschrieben, wobei die resultierende Verfestigung und / oder Verhärtung des Substrats, auf / in dem die Pflanze wächst, das Wachstum von einer oder mehreren Kulturpflanzen ermöglicht, jedoch das Wachstum von Unkraut verhindert oder reduziert.

In einem beispielhaften Versuch wurde ein Feld mit Ackererde gepflügt und gedüngt, Jungpflanzen von Kohlrabi in die Ackererde eingesetzt und die Ackererde intensiv bewässert. Am darauffolgenden Tag wurde eine Mischung, die zur Biozementierung in der Lage ist (wie hierin beschrieben, siehe z.B. Beispielteil unten) entweder als Feststoffmischung per Hand oder als flüssige Mischung mit Hilfe einer Pflanzenschutzspritze auf die Ackererde aufgetragen. Im Gegensatz zu einer Kontrolle, in der anstatt einer Mischung, die zur Biozementierung in der Lage ist (wie hierin beschrieben) lediglich Wasser aufgetragen wurde, ergab sich eine gute Unkrautunterdrückung mit nur vereinzelten Auskeimungen von Unkräutern während die Kulturpflanze (Kohlrabi) weiterwuchs.

Vorteilhafterweise führt eine erfindungsgemäße Verwendung der Mischung zu einer für die hierin beschriebenen Zwecke besonders geeigneten Dicke der Biozementschicht. Vorzugsweise wird hierbei eine Biozement-Schicht mit einer Dicke von wenigstens 1 mm erhalten, vorzugsweise von wenigstens 3 mm, weiter bevorzugt von wenigstens 10 mm. Weiter bevorzugt ist es, wenn die Schichtdicke maximal 100 mm, vorzugsweise maximal 50 mm, weiter bevorzugt maximal 35, weiter bevorzugt maximal 30 mm, beträgt. Im Ergebnis ist es besonders bevorzugt, wenn die Schichtdicke der insgesamt gebildeten Biozementschicht im Bereich von 1 mm bis 100 mm, vorzugsweise von 10 mm bis 50 mm, weiter bevorzugt von 10 mm bis 35 mm, weiter bevorzugt 10 bis 30 mm, liegt. Die Schichtdicke der Biozement-Schicht umfasst den Bereich des Substrats, der durch die Zugabe der Mischung verfestigt wird. Die Dicke der Biozement-Schicht kann durch manuelle Messung nach mechanischem Bruch der Schicht mit Hilfe eines Messschiebers bestimmt werden. Alternativ können je nach Dicke der Verfestigung unterschiedliche (zerstörungsfreie) Messverfahren aus Bau, Landwirtschaft, Geologie oder weiteren Einsatzgebieten verwendet werden (z.B. Handgerät MIT-SCAN-T2).

Gemäß einer bevorzugten Ausführungsform führt eine erfindungsgemäße Verwendung der Mischung wie hierin beschrieben zu einer Biozement-Schicht, die wasserdurchlässig, d.h. wasserpermeabel oder wassersemipermeabel, ist. Dies ist besonders vorteilhaft, da beipielsweise Regenwasser im Außenbereich auch im biozementierten Bereich ohne Hinderung in die gebildete Biozement-Schicht eindringen und abfließen kann. Die Wasserdurchlässigkeit einer Probe wird herkömmlich als Wasserfluss durch die Probe in einer definierten Zeitperiode angegeben. Sie kann als Permeabilitätsrate (in cm/h, mm/h oder cm/Tag) oder alternativ in Form des Durchlässigkeitsbeiwerts (coefficient of permeability, in m/s) ausgedrückt werden. Eine Angabe des Durchlässigkeitsbeiwerts ermöglicht eine Klassifizierung einer Probe, vorzugsweise einer Bodenprobe, beispielsweise in die Kategorien (wasser)permeabel, (wasser)semipermeabel und (wasser)impermeabel.

Im Rahmen des vorliegenden Textes steht der Begriff "wasserpermeable Biozement-Schicht" für eine Biozement-Schicht mit einem (Wasser-)Durchlässigkeitsbeiwert von größer als $10^{-5}$ bis $10^0$ m/s, und der Begriff "wassersemipermeable Biozement-Schicht" für eine Biozement-Schicht mit einem (Wasser-)Durchlässigkeitsbeiwert von größer als $10^{-9}$ bis $10^{-5}$ m/s, und der Begriff "wasserimpermeable Biozement-Schicht" für eine Biozement-Schicht mit einem (Wasser-)Durchlässigkeitsbeiwert von $10^{-11}$ (oder weniger) bis $10^{-9}$ m/s. Gängige Methoden zur Bestimmung des Durchlässigkeitsbeiwerts umfassen Labormethoden (z.B. Rammkernsondierungen und anschließende Bestimmung der wassergesättigten Durchlässigkeit im Labor) und Feldmethoden (z.B. Bestimmung der Infiltrationsrate mit einem Doppelringinfiltrometer).

Eine bevorzugte Ausführungsform bezieht sich auf die Verwendung einer Mischung wie hierin definiert, wobei die gebildete Biozement-Schicht einen (Wasser-)Durchlässigkeitsbeiwert von größer als $10^{-9}$ bis $10^0$ m/s, bevorzugt von größer als $10^{-9}$ bis $10^{-3}$ m/s, weiter bevorzugt von größer als $10^{-8}$ bis $10^{-3}$ m/s, aufweist.

Die erfindungsgemäße Verwendung zeigt eine robuste Funktonalität unter reellen (Umwelt-)Bedingungen, ist einfach anwendbar (oftmals durch eine einmalige Applikation) und ermöglicht den Verzicht auf bzw. die Reduktion von chemische(n) Unkrautbekämpfungsmittel(n). Des Weiteren kann sie auch in Kombination mit bestehenden Produkten bzw. Verfahren zur Bekämpfung von Unkräutern genutzt werden. Vorteilhafterweise ist die erfindungsgemäße Verwendung zudem reversibel, d.h. die Biozementierung des Substrats bzw. von Teilen des Substrats kann bei Bedarf beispielsweise durch die Applikation geeigneter Säuren oder durch mechanisches Brechen sowie durch Verwitterung und natürlichen Abbau wieder rückgängig gemacht werden. Das Substrat bzw. Teile des Substrats können auf diese Weise wieder zum Anbau von Kulturpflanzen zugänglich gemacht werden.

Eine bevorzugte Ausführungsform bezieht sich daher auf die Verwendung einer Mischung wie hierin definiert, wobei die Biozementierung des Substrats bzw. von Teilen des Substrats rückgängig gemacht werden kann bzw. vorzugsweise rückgängig gemacht wird.

Gemäß einer bevorzugten Ausführungsform ist der Organismus bzw. sind die Organismen in Bestandteil (i) der erfindungsgemäß zu verwendenden Mischung ein Organismus/mehrere Organismen, der/die bei Durchführung eines Assays A umfassend folgende Schritte

Assay A

(i) Bereitstellen und Inkontaktbringen eines zu charakterisierenden Organismus oder einer zu charakterisierenden Mischung von Organismen, eines oder mehrerer Stoffe zur Bildung von Carbonat (und optional weiterer Stoffe) und optional eines Substrats,

(ii) Bereitstellen eines Mittels zur Feststellung einer Ureolyse und/oder Carbonatbildung,

(iii) Kombinieren der in Schritt (i) resultierenden Mischung mit dem Mittel aus Schritt (ii), und

(iv) Bestimmen anhand des Mittels aus Schritt (ii), ob eine Ureolyse und/oder Carbonatbildung vorliegt,

in Schritt (iv) dazu führt, dass eine Ureolyse und/oder Carbonatbildung festgestellt wird, vorzugsweise - sofern ein Substrat bereitgestellt wurde - dass eine Biozementierung festgestellt wird, vorzugsweise eine, die ausreicht zum Verhindern oder Reduzieren von Pflanzenwachstum, vorzugsweise des Wachstums von Unkraut (für Details zur Kontrolle der Verhinderung oder Reduzierung von Pflanzenwachstum s. unten, Beispielteil).

Vorteilhafterweise können im Rahmen des Assays A sowohl ureolytische als auch nicht-ureolytische Organismen auf ihre Fähigkeit zur ausreichenden Biozementierung untersucht werden.

Die folgenden Ausführungen können bei der Auswahl von im Rahmen einer erfindungsgemäßen Verwendung geeigneten Organismen hilfreich sein.

Der/die in Schritt (i) von Assay A wie hierin definiert bereitzustellenden Stoff(e) zur Bildung von Carbonat und das optional bereitzustellende Substrat, das durch die Biozementierung verfestigt oder verhärtet wird, sind weiter unten im Text näher definiert, auch anhand ausgewählter und bevorzugter Beispiele. Bei den optionalen weiteren Stoffen kann es sich beispielsweise um Nährmedien, Nährstoff-Quellen, Kationen-Quellen (wie weiter unten im Text beschrieben) und/oder Additive (wie weiter unten im Text beschrieben) handeln.

In Schritt (i) von Assay A wie hierin definiert können z.B. Reinkulturen des zu charakterisierenden Organismus (z.B. aus Stammsammlungen) bereitgestellt werden, und/oder der zu charakterisierende Organismus bzw. die zu charakterisierende Mischung von Organismen können beispielsweise aus einer geeigneten Probe (z.B. Bodenprobe) mittels eines Nährstoffmediums (z.B. Christensen-Urea-Agar, B4-Medium oder M-3P-Medium) isoliert und zu einer für die weitere Untersuchung geeigneten Zellkultur kultiviert werden. Das zur Isolierung und Kultivierung verwendete Nährstoffmedium kann flüssig oder fest sein. Dem Fachmann ist bekannt, dass das Nährmedium nach den Ansprüchen des Organismus / der Organismen variiert werden kann. Der / die Organismen werden vorzugsweise bis zu einer Zelldichte zwischen $1 \times 10^7$ bis $1 \times 10^{12}$ Zellen/ml kultiviert. Dem Fachmann ist bekannt, dass beispielsweise die Kultivierungstemperatur und die Mediumzusammensetzung gemäß den Bedürfnissen des Organismus bzw. der Mischung von Organismen ausgewählt werden. Die bereit- bzw. hergestellte Zellkultur wird dann mit dem / den Stoff(en) zur Bildung von Carbonat (und optional weiterer Stoffe) und optional einem Substrat in Kontakt gebracht, um eine Mischung zu erhalten, die dann in Schritt (iii) mit dem Mittel aus Schritt (ii) kombiniert wird.

Das Mittel zur Feststellung einer Ureolyse und/oder Carbonatbildung in Schritt (ii) von Assay A wie hierin definiert ist beispielsweise ein pH-Indikator, eine Vorrichtung und/oder ein oder mehrere Stoff(e) zur Messung der Ureaseaktivität, eine Vorrichtung und/oder ein oder mehrere Stoff(e) zur Messung der durch die Biozementierung gebildeten Carbonatmenge, oder eine Vorrichtung zur Messung des Grades der Verfestigung des Substrats (durch die Biozementierung).

Die Bestimmung, ob eine Ureolyse und/oder Carbonatbildung vorliegt, in Schritt (iv) des Assays A wie hierin definiert, insbesondere die Feststellung einer Biozementierung, vorzugsweise einer Biozementierung, die ausreicht zum Verhindern oder Reduzieren von Pflanzenwachstum, vorzugsweise des Wachstums von Unkraut, kann qualitativ oder bevorzugt quantitativ erfolgen.

Eine bevorzugte Methode zur besagten Bestimmung ist beispielsweise die Zugabe eines geeigneten pH-Indikators (z.B. Phenolrot, vorzugsweise in einer Konzentration von 15 mg/L) zur in Schritt (i) resultierenden Mischung. Im Falle des Vorliegens einer Ureolyse und/oder Carbonatbildung erhöht sich der pH-Wert der Mischung, was zu einer Farbänderung des Indikators (z.B. im Falle von Phenolrot zur Pinkfärbung) führt.

Wird der Mischung aus Schritt (i) (zusätzlich zu dem einen oder den mehreren Stoff(en) zur Bildung von Carbonat) eine Kationen-Quelle, vorzugsweise eine Calcium-Quelle, hinzugefügt, kommt es im Falle des Vorliegens einer Ureolyse und/oder Carbonatbildung bei Festmedien in der Regel zur Kalkkrustenbildung um die Kolonien bzw. auf den Kolonien des Organismus bzw. der Organismen. Bei flüssigen Nährmedien kommt es bei ausreichender Verfügbarkeit einer Kationen-Quelle, vorzugsweise einer Calcium-Quelle (z.B $CaCl_2$), und einer Carbonat-Quelle (z.B. Harnstoff) in der Regel zu Kalkpräzipitationen. Auch diese Kalkkrustenbildung bzw. Kalkpräzipitation kann als optischer Nachweis für eine Ureolyse und/oder Carbonatbildung dienen bzw. können die besagten Kalkkrustenbildungen bzw. Kalkpräzipitationen durch eine qualitative und/oder quantitative Carbonatbestimmung, vorzugsweise mit Hilfe der (halb-)quantitativen Carbonatbestimmung nach Scheibler oder einer Weiterentwicklung dieser Methode (z.B. wie in Horváth, B. et al., A Simple Method for Measuring the Carbonate Content of Soils, Soil Science Society of America Journal 2005, 69, 1066-1068 beschrieben), analysiert werden.

Eine weitere bevorzugte Methode zur besagten Bestimmung ist beispielsweise eine Messung der Ureaseaktivität des Organismus oder der Mischung von Organismen. Dabei wird der zu analysierende Organismus oder die zu analysierende Mischung von Organismen u.a. mit gepuffertem Harnstoff (z.B. 1,5 M Harnstoff in 0,1 M Tris-HCl, pH 7,5) gemischt und die Bildung der entstandenen Ammoniumionen konduktometrisch als Anstieg des Messsignals über die Zeit gemessen und die Ureaseaktivität berechnet (wie z.B. in V. S. Whiffin, Microbial CaCO3 Precipitation for the production of Biocement, Dissertation, 2004, Murdoch University, Western Australia beschrieben). Die Ureaseaktivität liegt vorzugsweise zwischen $1 \times 10^{-7}$ bis $1 \times 10^{-11}$ mM hydrolisierter Harnstoff/min/cm/Zellen/ml, weiter bevorzugt zwischen $1 \times 10^{-8}$ bis $1 \times 10^{-10}$ mM hydrolisierter Harnstoff/min/cm/Zellen/ml, weiter bevorzugt zwischen $1 \times 10^{-8}$ bis $1 \times 10^{-9}$ mM hydrolisierter Harnstoff/min/cm/Zellen/ml. Ersteres entspricht ungefähr einer Harnstoffhydrolysrate von 0 - 300 mM hydrolisierter Harnstoff / min, je nach eingesetzter Zellzahl. Eine weitere bevorzugte Methode zur besagten Bestimmung stellt beispielsweise die Messung der durch die Biozementierung gebildeten Carbonatmenge, vorzugsweise mit Hilfe der (halb-)quantitativen Carbonatbestimmung nach Scheibler, dar. Die zu untersuchende Mischung wird vorzugswesie 48 h offen bei Raumtemperatur (25 °C) inkubiert. Anschließend kann durch Zentrifugation und Trocknung zur weiteren Verwendung ein präzipitiertes Pellet gewonnen werden. Mit dem getrockneten Pellet kann der (halb-)quantitive Nachweis des gebildeten Calciumcarbonates, vorzugsweise durch die Carbonatbestimmung nach Scheibler, erfolgen. Optional kann das getrocknete Präzipitat vorher gewogen und die Fällungseffizienz berechnet werden. Optional kann parallel dazu eine zusätzliche qualitative Bestimmung, ob eine Ureolyse und/oder Carbonatbildung vorliegt, durchgeführt werden. Dazu kann der Mischung aus Schritt (i) Phenolrot (15 mg/L) zugesetzt werden. Der zu verwerfende Überstand bei der Gewinnung des Pellets ist dann beim Vorliegen einer Ureolyse und/oder Carbonatbildung in der Regel pink gefärbt.

Eine weitere bevorzugte Methode zur besagten Bestimmung stellt beispielsweise die Messung des Grades der Verfestigung des Substrats (durch das während der Biozementierung enstandene Carbonat) dar. Ein geeignetes Substrat hierfür ist z.B. Quartzsand, vorzugsweise mit einer Korngröße von 0 bis 2 mm (als Modell-Substrat). Die übrigen Bestandteile der Mischung aus Schritt (i) werden vorzugsweise in einer Menge der resultierenden Mischung von 5 l/m$^2$ (im Falle einer flüssigen Mischung) auf bzw. in das Substrat auf-/eingebracht. Die anschließende Inkubation sollte offen und bei Raumtemperatur oder oberhalb von Raumtemperatur für mindestens 2 Tage (vorzugsweise für mindestens 10 Tage) erfolgen. Anschließend wird die Festigkeit der gebildeten Biozementschicht durch bruchmechanische Analyse mit Hilfe eines digitalen (Bruch-)Kraftmessgeräts in Anlehnung an DIN EN 196-1:2005-05 ermittelt. Im Vergleich zur Kontrolle (Aufbringen einer Vergleichsmischung ohne Organismus bzw. Organismen auf das Substrat) sollten Unterschiede in der Bruchkraft von $\geq$ 3 N (bzw. $\geq$ 0,01 MPa), vorzugsweise von $\geq$ 30 N (bzw. $\geq$ 0,1 MPa), detektierbar sein.

Im Rahmen des Assays A kann auch die Dicke der Biozement-Schicht mit Hilfe eines Messschiebers bestimmt werden; diese sollte bei erfolgreicher Verfestigung vorzugsweise im untersuchten Bereich durchschnittlich $\geq$ 3 mm betragen.

Gemäß einer bevorzugten Ausführungsform ist der Organismus bzw. sind die Organismen in Bestandteil (i) der erfindungsgemäß zu verwendenden Mischung ein Organismus/mehrere Organismen, der/die in Schritt (iv) des Assays A wie hierin definiert in Bezug auf zwei oder mehr der vorstehend beschriebenen Bestimmungsmethoden, vorzugsweise drei oder mehr, besonders bevorzugt vier oder mehr, ganz besonders bevorzugt alle Bestimmungsmethoden, dazu führt, dass eine Ureolyse und/oder Carbonatbildung, vorzugsweise eine Biozementierung festgestellt wird, vorzugsweise eine, die ausreicht zum Verhindern oder Reduzieren von Pflanzenwachstum, vorzugsweise des Wachstums von Unkraut (für Details zur Kontrolle der Verhinderung oder Reduzierung von Pflanzenwachstum s. unten, Beispielteil).

Bevorzugt ist eine Verwendung wie vorangehend beschrieben, wobei die Mischung in flüssiger Form, als Gel, Paste oder als Pulver vorliegt.

Die erfindungsgemäß zu verwendende Mischung kann in Form einer flüssigen, gelartigen, pastösen oder pulverförmigen Mischung oder in Form von zwei, drei, vier oder mehr getrennt voneinander vorliegenden flüssigen und / oder gelartigen und / oder pastösen und / oder pulverförmigen Vor-Mischungen, die vor oder während der Verwendung miteinander vermischt werden, vorliegen bzw. angewendet werden.

Insbesondere in Form eines Pulvers weist die Mischung bzw. weisen die Vor-Mischungen vorteilhafterweise eine besonders lange Lagerstabilität, vorzugsweise von mindestens 12 bis 24 Monaten, auf.

Eine Pulverform der Mischung bzw. Vor-Mischung kann durch dem Fachmann geläufige Standardverfahren, beispielsweise durch Sprühtrocknung, Gefriertrocknung, (Niedertemperatur-)Vakuumtrocknung, Wirbelschichttrocknung und / oder unter Zuhilfenahme einer Filtration mit Filterhilfsmitteln, erhalten werden.

Pulverförmig bedeutet im Rahmen dieses Textes, dass der Gehalt an flüssigen Komponenten, vorzugsweise an Wasser, in der Mischung 10 Gew.-% oder weniger, vorzugsweise 5 Gew.-% oder weniger, vorzugsweise 2,5 Gew.-% oder weniger, weiter bevorzugt 1,0 Gew.-% oder weniger, am meisten bevorzugt 0,1 Gew.-% oder weniger, bezogen auf das Gesamtgewicht der erfindungsgemäß zu verwendenden Mischung bzw. der Vor-Mischung, beträgt.

Der Gehalt an flüssigen Komponenten, vorzugsweise an Wasser, in der Mischung bzw. Vor-Mischung kann durch dem Fachmann bekannte Standardverfahren bestimmt werden. Beispielsweise kann eine gravimetrische Gehaltsbestimmung der flüssigen Komponenten durchgeführt werden, wobei die entnommene Probe gewogen wird, dann über einen ausreichenden Zeitraum bis zur Trocknung auf eine Temperatur über dem Siedepunkt der flüssigen Komponenten erwärmt wird und anschließend erneut gewogen wird. Aus der Gewichtsdifferenz vor und nach der Trocknung lässt sich der Gehalt in Gew.-% an flüssigen Komponenten, vorzugsweise an Wasser, bestimmen.

Gemäß einer weiteren Ausführungsform kann die erfindungsgemäß zu verwendende Mischung auch in Form einer gelartigen oder pastösen Mischung oder in Form von zwei, drei, vier oder mehr getrennt voneinander vorliegenden festen und / oder flüssigen und / oder gelartigen und / oder pastösen Vor-Mischungen, die vor oder während der Verwendung miteinander vermischt werden, vorliegen bzw. angewendet werden.

Bevorzugt ist eine Verwendung wie vorangehend beschrieben, wobei einer bzw. der, mehrere oder sämtliche Organismen ausgewählt ist / sind aus der Gruppe bestehend aus Mikroorganismen, vorzugsweise ausgewählt aus der Gruppe bestehend aus Mikroorganismen der Abteilung Firmicutes, vorzugsweise der Klasse Bacilli, vorzugsweise der Ordnung Bacillales, vorzugsweise der Familien Planococcaceae oder Bacillaceae, vorzugsweise der Gattungen *Sporosarcina, Lysinibacillus* oder *Bacillus,* vorzugsweise ausgewählt aus den Arten *Sporosarcina pasteurii, Sporosarcina ureae, Lysinibacillus sphaericus, Lysinibacillus fusiformis, Bacillus megaterium, Lysinibacillus sp., Bacillus pseudofirmus, Bacillus halodurans* oder *Bacillus cohnii;* und Mikroorganismen der Abteilung Proteobacteria, vorzugsweise der Klassen Alphaproteobacteria, Gammaproteobacteria, Deltaproteobacteria oder Epsilonproteobacteria, vorzugsweise der Ordnungen Enterobacteriales, Myxococcales, Campylobacterales, Pseudomonadales oder Caulobacterales, vorzugsweise der Familien Enterobacteriaceae, Myxococcaceae, Helicobacteraceae, Pseudomonadaceae oder Caulobacteraceae, vorzugsweise der Gattungen *Proteus, Myxococcus, Helicobacter, Pseudomonas* oder *Brevundimonas,* vorzugsweise ausgewählt aus den Arten *Proteus vulgaris, Proteus mirabilis, Myxococcus xanthus, Helicobacter pylori, Pseudomonas aeruginosa* oder *Brevundimonas diminuta;* und Mikroorganismen der Abteilung Actinobacteria, vorzugsweise der Klasse Actinobacteria, vorzugsweise der Ordnung Actinomycetales, vorzugsweise der Familien Brevibacteriaceae oder Micrococcineae, vorzugsweise der Gattungen *Brevibacterium* oder *Micrococcaceae,* vorzugsweise ausgewählt aus den Arten *Brevibacterium linens* oder *Arthrobacter crystallopoietes;* und Mikroorganismen der Abteilung Cyanobacteria, vorzugsweise der Klasse Cyanobacteria, vorzugsweise der Ordnung Synechococcales, vorzugsweise der Familie Synechococcaceae, vorzugsweise der Gattung *Synechococcus,* vorzugsweise der Art *Synechococcus;* und aeroben Bakterien, anaeroben Bakterien, fakultativ anaeroben Bakterien und deren Zwischenstufen.

Hiervon umfasst sind auch sämtliche Varianten, Serotypen, Mutanten und Sporen sowie etwaige abgeleitete genetisch veränderte Mikroorganismen.

Der vorgenannte Organismus bzw. die vorgenannten Organismen, vorzugsweise Mikroorganismen, kann / können (gemeinsam oder getrennt voneinander) in Flüssigkeit(en) wie beispielsweise Pufferlösungen, Lösungsmittel, Nährmedien und / oder Mischungen davon, vorliegen, wobei diese Mischungen auch tiefgefroren sein können, oder in Pulver-Form vorliegen können.

Gemäß der vorliegenden Erfindung ist der Organismus oder sind die Organismen, der bzw. die dazu in der Lage ist / sind, Carbonat zu bilden, die Carbonat-Bildung zu induzieren und / oder zu katalysieren, Bestandteil der verwendeten Mischung.

Alternativ ist es denkbar und im Rahmen dieses Textes ebenfalls offenbart, dass (indigene) Organismen, die im Substrat, vorzugsweise Boden, in / auf dem das Pflanzenwachstum stattfindet, vorliegen bzw. aus besagtem Substrat isoliert, im Labor kultiviert und dann wieder auf/in das Substrat eingebracht werden, dazu in der Lage ist / sind, Carbonat zu bilden, die Carbonat-Bildung zu induzieren und / oder zu katalysieren. In diesem Fall sind alternative bzw. äquivalente Ausführungsformen denkbar (und dementsprechend hierin als erfindungsgemäß umfasst), in denen die Organismen der erfindungsgemäß zu verwendenden Mischung und die (indigenen) Organismen in / auf dem Substrat gemeinsam das Carbonat bilden, die Carbonat-Bildung induzieren und / oder katalysieren bzw. in denen die zu verwendende Mischung selbst keine Organismen enthält, die dazu in der Lage ist / sind, Carbonat zu bilden, die Carbonat-Bildung zu induzieren und / oder zu katalysieren. Gemäß einer bevorzugten Ausführungsform umfasst oder besteht Bestandteil (i) der erfindungsgemäß zu verwendenden Mischung aus einer Kombination von einem Organismus oder mehreren Organismen, die dazu in der Lage ist / sind, Carbonat zu bilden, die Carbonat-Bildung zu induzieren und / oder zu katalysieren, und solchen, die nicht dazu in der Lage sind.

Gemäß einer bevorzugten Ausführungsform umfasst oder besteht Bestandteil (i) der erfindungsgemäß zu verwendenden Mischung aus einer Kombination von aeroben Bakterien, anaeroben Bakterien und / oder fakultativ anaeroben Bakterien und / oder deren Zwischenstufen.

Gemäß einer weiteren bevorzugten Ausführungsform umfasst oder besteht Bestandteil (i) der erfindungsgemäß zu verwendenden Mischung aus einer Kombination von einem Organismus oder mehreren Organismen, die dazu in der Lage ist / sind, Carbonat ureolytisch zu bilden, die Carbonat-Bildung ureolytisch zu induzieren und / oder zu katalysieren, und solchen, der bzw. die nicht zur Ureolyse in der Lage ist / sind bzw. überhaupt nicht dazu in der Lage sind, Carbonat zu bilden, die Carbonat-Bildung zu induzieren und / oder zu katalysieren.

Dem Fachmann ist dabei bekannt, dass eine Biozementierung (wie hierin definiert) unter erfindungsgemäßer Verwendung einer Mischung (wie hierin definiert) besonders effizient in einem bestimmten Zellzahl-Spektrum der verwendeten Organismen abläuft. Laut eigener Untersuchungen beträgt die Zellzahl des Organismus bzw. der Organismen in der erfindungsgemäß zu verwendenden Mischung vorzugsweise mindestens $10^7$ Zellen / mL, weiter bevorzugt mindestens $10^8$ Zellen / mL, und / oder vorzugsweise höchstens $10^{12}$ Zellen / mL, bevorzugt höchstens $10^{10}$ Zellen / mL, weiter bevorzugt höchstens $10^9$ Zellen / mL. Gemäß einer bevorzugten Ausführungsform beträgt die Zellzahl des Organismus bzw. der Organismen in der erfindungsgemäß zu verwendenden Mischung $10^8$ bis $10^9$ Zellen / mL.

Bevorzugt ist eine Verwendung wie vorangehend beschrieben, wobei ein bzw. das, mehrere oder sämtliche Enzyme ausgewählt ist / sind aus der Gruppe bestehend aus Urease, Asparaginase, Carboanhydrase und metabolischen Enzymen.

Bei metabolischen Enzymen handelt es sich im Rahmen des vorliegenden Textes bevorzugt um Enzyme des Stoffwechsels eines oder mehrerer (Mikro-)Organismen wie hierin beschrieben, die, beispielsweise unter Umsetzung von Acetat und/oder Lactat, in der Lage sind, Carbonat zu bilden, die Carbonat-Bildung zu induzieren und / oder zu katalysieren. Vorzugsweise wird / werden in Bestandteil (i) der erfindungsgemäß zu verwendenden Mischung ein Organismus oder mehrere Organismen (wie vorangehend definiert) verwendet, der / die ein oder mehrere der vorgenannten Enzyme produzieren können, bzw. vorzugsweise werden die vorgenannten Enzyme aus den oben genannten Organismen gewonnen oder freigesetzt.

Handelt es sich bei dem verwendeten Organismus bzw. den verwendeten Organismen um einen pathogenen Organismus / pathogene Organismen, so ist es im Rahmen des vorliegenden Textes bevorzugt, wenn in Bestandteil (i) der erfindungsgemäß zu verwendenden Mischung lediglich die daraus gewonnenen oder freigesetzten, nicht pathogenen, Enzyme verwendet werden.

Gemäß einer weiteren bevorzugten Ausführungsform können in Bestandteil (i) der erfindungsgemäß zu verwendenden Mischung Kombinationen aus Enzymen, die aus den oben genannten Organismen gewonnen oder freigesetzt werden, mit Enzymen nichtmikrobieller Herkunft (beispielsweise pflanzliche Enzyme) verwendet werden. Das Enzym Urease kann beispielsweise aus Soja-Bohnen gewonnen und erfindungsgemäß verwendet werden.

Gemäß einer weiteren bevorzugten Ausführungsform können in Bestandteil (i) der erfindungsgemäß zu verwendenden Mischung Kombinationen aus einem oder mehreren der oben genannten Organismen, der bzw. die dazu in der Lage ist / sind, Carbonat zu bilden, die Carbonat-Bildung zu induzieren und / oder zu katalysieren, mit einem oder mehreren der oben genannten Enzyme, das bzw. die dazu in der Lage ist / sind, Carbonat zu bilden, die Carbonat-Bildung zu induzieren und / oder zu katalysieren, verwendet werden.

Carbonate können mit Hilfe der oben genannten Enzyme durch verschiedene Stoffwechselprozesse generiert werden. Beispielsweise kann durch aerobe Verstoffwechslung organischer Kohlenstoffquellen eine Ammonifikation stattfinden (z.B. Enzym Asparaginase) oder es kann eine heterotrophe Verstoffwechslung organischer Kohlenstoffquellen (z.B. Calciumlactat oder Calciumacetat) stattfinden. Beide Prozesse stellen Carbonate bereit. Auch die aerobe und anaerobe Photosynthese kann zur Bildung von Carbonaten herangezogen werden, genauso wie die anaerobe Denitrification, anaerobe Sulfatreduktion und (an)aerobe Methanoxidation.

Die Biozementierung mit Hilfe der erfindungsgemäß zu verwendenden Mischung kann daher auf einem oder mehreren der vorgenannten Stoffwechselprozesse beruhen.

Bevorzugt ist daher eine Verwendung wie vorangehend beschrieben, wobei ein bzw. der, mehrere oder sämtliche Stoffe zur Bildung von Carbonat ausgewählt ist / sind aus der Gruppe bestehend aus Harnstoff und dessen Salze, organischen Säuren wie Milchsäure und deren Salze, bevorzugt Carboxylate, und deren Ester, Gluconsäure und deren Salze, bevorzugt Carboxylate, und deren Ester, Essigsäure und deren Salze, bevorzugt Carboxylate, und deren Ester, Ameisensäure und deren Salze, bevorzugt Carboxylate, und deren Ester, Peptide, vorzugsweise enthaltend Asparagin, Glutamin und / oder Glutaminsäure, Aminosäuren, vorzugsweise Asparagin, Glutamin und Glutaminsäure, und deren Salze, bevorzugt Carboxylate, und deren Ester, pflanzliche und tierische Komplexsubstrate, insbesondere Pepton, Hefeextrakt, Fleischextrakt, Nährbouillon und Casaminosäure, industrielle Reststoffströme, insbesondere Maisquellwasser, Lactose-Mutterlauge, Proteinlysate, vorzugsweise aus Erbsen, Fleisch oder Tomaten, anaerobe Substrate, vorzugsweise Kohlenstoffdioxid und Methan.

Bevorzugt ist des Weiteren eine Verwendung wie vorangehend beschrieben, wobei ein bzw. das, mehrere oder sämtliche Kationen-Quellen ausgewählt ist / sind aus der Gruppe bestehend aus organischen und anorganischen Calcium-Salzen, vorzugsweise Calciumnitrat, Calciumacetat, Calciumlactat und Calciumchlorid, Magnesium-Salzen, Mangan-Salzen, Zink-Salzen, Cobalt-Salzen, Nickel-Salzen, Kupfer-Salzen, Blei-Salzen, Eisen-Salzen, Cadmium-Salzen, Polymeren, vorzugsweise kationischen Polymeren, Schwermetall-Kationen, Leichtmetall-Kationen, radioaktiven Kationen sowie deren Mischungen.

Gemäß der vorliegenden Erfindung kann bzw. können die Kationen-Quelle(n) in der erfindungsgemäß zu verwendenden Mischung enthalten sein oder nicht. Wenn Sie nicht in der Mischung enthalten ist bzw. sind, kann/können sie auf / in dem Substrat, auf / in dem die Pflanze wächst, vorhanden sein oder diesem zugegeben werden, um die Biozementierung zu ermöglichen.

Bevorzugt ist zudem eine Verwendung wie vorangehend beschrieben, wobei ein bzw. das, mehrere oder sämtliche Additive ausgewählt ist / sind aus der Gruppe bestehend aus folgenden Stoffen / Stoffgemischen (vorzugsweise sofern diese(r) nicht schon in Bestandteil (ii) enthalten ist/sind) Nährstoffen; (Bio-)Polymeren, vorzugsweise Polyhydroxybutyrat (PHB), Polylactid (PLA), Polybutylensuccinat (PBS), Polyacrylsäure (PAA), Polymethacrylat (PMA), Poly(2-hydroxyethylmethacrylat) (PHEMA), Polyvinylalkohol (PVOH), Polyvinylacetat (PVAC), Polyvinylpyrrolidon (PVP), Poly(2-ethyl-2-oxazolin), Polystyrol (PS), Polyamid, Copolymerisate, Polyaminosäuren, Cellulose und deren Derivate, Stärke und deren Derivate, Lignine und deren Derivate, Pektine und deren Derivate, natürliche Klebstoffe, insbesondere Gummi arabicum, Latex, Kautschuk, und deren Derivate, Chitin und dessen Derivate, Chitosan und dessen Derivate, Cyclodextrine und deren Derivate, Dextrine und deren Derivate; Hydrogelbildner, vorzugsweise Xanthan, Alginate und Agar Agars; kaltlösliche und / oder warmlösliche (Pflanzen-)Leime; Calciumcarbonate und Mischungen enthaltend Calciumcarbonate, vorzugsweise Perlmutter, amorphe Calciumcarbonate, präzipitiertes Calciumcarbonat, Aragonit, Calcit, Vaterit sowie Mischformen und Derivate davon; Polysaccharide und extrazelluläre polymere Substanzen (EPS), vorzugsweise mikrobielle Exopolysaccharide, vorzugsweise enthaltend oder bestehend aus Maleinsäure, Essigsäure, Milchsäure, Lactose, Saccharose, Glucose, Fructose und / oder Inulin; Proteinquellen, Fasern und Faserstoffe, vorzugsweise Casein, Albumin, Hefeextrakte, Peptone, Cellulosefasern, Holzfasern, Holzcellulosefasern; Reststoffe und Industriestoffe, vorzugsweise Maisquellwasser, Lactose-Mutterlauge, Proteinlysate, Melasse, Proteinabfälle, vorzugsweise aus der Hefeproduktion, Fleischherstellung, Milchindustrie und Papierfabrikation; Silikate und deren Derivate; Acrylate und deren Derivate; Wassergläser und Wasserglas-ähnliche Bindemittel; Zemente und Zementaddtive, vorzugsweise Sand, Kalk und dessen Derivate, Aluminiumoxid, Calciumoxid, Calciumhydroxid, Aluminiumhydrooxid, Asche, vorzugsweise Flugasche und Knochenasche, Microsilica, Kaoline, Bentonite, Füllmaterialien, vorzugsweise Weisskalk(hydrat), Kalksteinbrechsand und Kalksteinmehl; Harze und Epoxide; natürliche und chemische Herbizide; Fungizide; Molluskizide; Insektizide; Hydrophobizierer und Wachsemulsionen; Emulgierhilfen; Bindemittel; Thixotropiermittel; Kristallisationskeime und Kristallisationsmodifizierer; Fettsäuren; Mineralien und Spurenelemente; Salze, vorzugsweise Phosphate und Sulfate; Gesteine, vorzugsweise Bimsstein und Schiefermehl; Bakterien, die zur Bildung von Polymeren in der Lage sind; und Substanz(en), die die Biozementierung modifiziert / modifizieren.

Das bzw. die Additiv(e) sind im Rahmen der vorliegenden Erfindung bevorzugt entweder Stoffe, die den Vorgang der Biozementierung selbst beeinflussen (beispielsweise Nährstoffe) oder Stoffe, die das entstehende Produkt der Biozementierung, d.h. die Eigenschaften des Biozements (z.B. dessen Wasserbeständigkeit), beeinflussen oder Stoffe, die die Pflanze, dessen Wachstum unterdrückt wird, beeinflussen (beispielsweise Herbizide).

Beispiele für Stoffe, die die Eigenschaften des Biozements beeinflussen können, sind vorzugsweise erfindungsgemäß zu verwendende Additive, die dazu in der Lage sind, das Substrat bzw. die Teile des Substrats, auf / in welchem das Pflanzenwachstum reduziert oder verhindert werden soll, (zusätzlich) zu verfestigen und / oder zu verhärten. Dabei kann es sich beispielsweise um Zuckermoleküle (wie vorangehend definiert) oder um Polymere, die von Bakterien gebildet werden, handeln. Wie vorangehend beschrieben, sind die besagten erfindungsgemäß zu verwendenden Additive in diesem Fall ein - gegebenenfalls alleiniger - Bestandteil des Biozements (alternativ zu oder neben dem / den vorzugsweise gebildeten Carbonat(en)).

Gemäß der vorliegenden Erfindung kann bzw. können das / die Additiv(e) in der erfindungsgemäß zu verwendenden Mischung vorhanden sein (d.h. Bestandteil der zu verwendenden Mischung sein) oder auf / in dem Substrat, auf / in dem das Pflanzenwachstum stattfindet, enthalten sein. Alternativ können sie auch nicht vorhanden sein.

Im Rahmen des vorliegenden Textes gelten auch die Monomere der vorangehend genannten Additive, insbesondere der genannten (Bio-)Polymere, als erfindungsgemäß zu verwendende Additive.

Dem Fachmann ist bekannt, dass die Einsatzmenge und Wirkungsweise des Additivs bzw. der Additive stark von dessen / deren eigenen Eigenschaften bzw. den Eigenschaften der anderen Bestandteile der erfindungsgemäß zu verwendenden Mischung bzw. den Eigenschaften des Substrats abhängig ist und wird dementsprechend geeignete Kombinationen und Einsatzmengen des Additivs bzw. der Additive wählen.

Bevorzugt ist zudem eine Verwendung wie vorangehend beschrieben, wobei die Pflanze bzw. das Unkraut ausgewählt ist aus der Gruppe bestehend aus Dikotylen der Gattungen: *Abutilon, Aegopodium, Aethusa, Amaranthus, Ambrosia, Anachusa, Anagallis, Anoda, Anthemis, Aphanes, Arabidopsis, Atriplex, Barbarea, Bellis, Bidens, Bunias, Capsella, Carduus, Cassia, Centaurea, Chenopodium, Chrysanthemum, Cirsium, Conium, Conyza, Consolida, Convolvulus, Datura, Descurainia, Desmodium, Emex, Equisetum, Erigeron, Erodium, Erysimum, Euphorbia, Fumaria, Galeopsis, Galinsoga, Galium, Geranium, Heracleum, Hibiscus, Ipomoea, Kochia, Lamium, Lapsana, Lathyrus, Lepidium, Lithoserpermum, Linaria, Lindernia, Lycopsis, Malva, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Sisymbrium, Solanum, Sonchus, Sphenoclea, Stachys, Stellaria, Taraxacum, Thlaspi, Trifolium, Tussaligo, Urtica, Veronica, Viola, Xanthium;* Dikotylen der Gattungen: *Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia;* Monokotylen der Gattungen: *Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Juncus, Leptochloa, Lolium, Monochoria, Panicum, Paspalum, Phalaris, Phleum, Poa, Rottboellia, Sagittaria, Scirpus, Setaria, Sorghum;* und Monokotylen der Gattungen: *Allium, Ananas, Asparagus, Avena, Hordeum, Oryza, Panicum, Saccharum, Secale, Sorghum, Triticale, Triticum, Zea;* Moosen der Abstammungslinien Lebermoose (Marchantiosida), Hornmoose (Anthocerotopsida), Laubmoose (Bryopsida); vorzugsweise wobei das Wachstum von wenigstens zwei, drei, vier, fünf, sechs, sieben, acht, neun, zehn, mehr als zehn oder sämtlichen dieser Pflanzen verhindert oder reduziert wird.

Gemäß einer bevorzugten Ausführungsform der erfindungsgemäßen Verwendung handelt es sich bei der, einer, mehreren oder sämtlichen Pflanzen um ein oder mehrere Lebermoos(e) ausgewählt aus der Gruppe bestehend aus den Gattungen: *Acolea, Acrobolbus, Acrochila, Acromastigum, Acroscyphella, Acroscyphus, Acrostolia, Adelocolia, Aitchisoniella, Alicularia, Allisonia, Allisoniella, Alobiella, Alobiellopsis, Amazoopsis, Amphicephalozia, Amphilophocolea, Andrewsianthus, Aneura, Anomacaulis, Anomoclada, Anomylia, Anthelia, Anthelis, Aphanolejeunea, Aplozia, Apomarsupella, Apometzgeria, Apotreubia, Arachniopsis, Arctoscyphus, Arnellia, Ascidiota, Asterella, Athalamia, Austrofossombronia, Austrolembidium, Austrolophozia, Austrometzgeria, Austroscyphus, Balantiopsis, Bazzania, Blasia, Blepharidophyllum, Blepharostoma, Brevianthus, Calycularia, Calypogeia, Calyptrocolea, Campanocolea, Castanoclobos, Cavicularia, Cephalojonesia, Cephalolobus, Cephalomitrion, Cephalozia, Cephaloziella, Cephaloziopsis, Ceratolejeunea, Cesius, Chaetophyllopsis, Chiastocaulon, Chiloscyphus, Chloranthelia, Chonecolea, Cladomastigum, Cladopodiella, Clandarium, Clasmatocolea, Cololejeunea, Colura, Conocephalum, Conoscyphus, Corsinia, Cronisia, Crossogyna, Cryptochila, Cryptocolea, Cryptocoleopsis, Cryptomitrium, Cryptostipula, Cryptothallus, Cuspidatula, Cyanolophocolea, Cyathodium, Cylindrocolea, Delavayella, Dendrobazzania, Dendromastigophora, Denotarisia, Dichiton, Dinckleria, Diplocolea, Diplophyllum, Douinia, Drepanolejeunea, Drucella, Dumortiera, Dumortieropsis, Enigmella, Eocalypogeia, Eoisotachis, Eopleurozia, Eotrichocolea, Eremonotus, Eucalyx, Evansia, Evansianthus, Exormotheca, Fossombronia, Frullania, Fuscocephaloziopsis, Gackstroemia, Geocalyx, Geothallus, Gerhildiella, Goebeliella, Goebelobryum, Gongylanthus, Gottschea, Gottschelia, Greeneothallus, Grollea, Gymnanthe, Gymnocoleopsis, Gymnomitrion, Gymnoscyphus, Gyrothyra, Haesselia, Haplomitrium, Harpalejeunea, Harpanthus, Hattoria, Hattorianthus, Hattoriella, Hepatostolonophora, Herbertus, Herpetium, Herpocladium, Herzogianthus, Herzogobryum, Heterogemma, Heteroscyphus, Horikawaella, Hyalolepidozia, Hygrobiellalwatsukia, Hygrolembidium, Hygrophila, Hymenophyton, Hypoisotachis, Isolembidium, Isotachis, Jamesoniella, Jensenia, Jubula, Jubulopsis, Jungermannia, Jungermannites, Krunodiplophyllum, Kurzia, Kymatocalyx, Lamellocolea, Leiocolea, Leiomitra, Leiomylia, Leioscyphus, Lejeunea, Lembidium, Lepidogyna, Lepidolaena, Lepidozia, Leptolejeunea, Leptophyllopsis, Leptoscyphopsis, Leptoscyphus, Lethocolea, Liochlaena, Lobatiriccardia, Lophocolea, Lophonardia, Lophozia, Lophoziopsis, Lunularia, Macrodiplophyllum, Maculia, Makinoa, Mannia, Marchantia, Marchesinia, Marsupella, Marsupidium, Massula, Massularia, Mastigobryum, Mastigopelma, Mastigophora, Mastigopsis, Mesoptychia, Metacalypogeia, Metahygrobiella, Metzgeria, Metzgeriopsis, Micrisophylla, Microlejeunea, Microlepidozia, Micropterygium, Mizutania, Mnioloma, Moerckia, Monocarpus, Monoclea, Monodactylopsis, Monosolenium, Mytilopsis, Nanomarsupella, Nardia, Neesioscyphus, Neogrollea, Neohodgsonia, Neotrichocolea, Noteroclada, Nothogymnomitrion, Nothostrepta, Notoscyphus, Nowellia, Obtusifolium, Odontolejeunea, Odontoschisma, Oleolophozia, Oxymitra, Pachyglossa, Pachyschistochila, Pallavicinia, Paracromastigum, Paraschistochila, Patarola, Pedinophyllopsis, Pedinophyllum, Pellia, Peltolepis, Perdusenia, Perssoniella, Petalophyllum, Phycolepidozia, Phyllothallia, Physiotium, Physotheca, Pisanoa, Plagiochasma, Plagiochila, Plagiochilidium, Plagiochilion, Platycaulis, Plectocolea, Pleuranthe, Pleuroclada, Pleurocladopsis, Pleurocladula, Pleurozia, Podanthe, Podomitrium, Porella, Prasanthus, Preissia, Prionolobus, Protolophozia, Protomarsupella, Protosyzgiella, Protosyzygiella, Pseudocephalozia, Pseudocephaloziella, Pseudolophocolea, Pseudolophozia, Pseudomarsupidium, Pseudoneura, Pseudotritomaria, Psiloclada, Pteropsiella, Ptilidium, Radula, Reboulia, Rhizocaulia, Rhodoplagiochila, Riccardia, Riccia, Ricciella, Ricciocarpos, Riella, Roivainenia, Ruizanthus, Ruttnerella, Saccobasis, Saccogyna, Sandeothallus, Sarcocyphos, Sarcomitrium, Sauteria, Scapania, Scaphophyllum, Schiffneria, Schisma, Schistochila, Schistochilaster, Schistochilopsis, Schofieldia, Sendtnera, Seppeltia, Sewardiella, Simodon, Solenostoma, Southbya, Sphaerocarpos, Sphagnoecetis, Sprucella, Steereella, Steereocolea, Stenorrhipis, Stephandium, Stephaniella, Stephaniellidium, Stephensoniella, Symphyogyna, Symphyogynopsis, Symphyomitra, Synhymenium, Syzygiella, Taeniolejeunea, Targionia, Tegulifolium, Telaranea, Thallocarpus, Treubia, Triandrophyllum, Trichocolea, Trichocoleopsis, Trichostylium, Trichotemnoma, Trilophozia, Tritomaria, Tylimanthus, Vanaea, Vandiemenia, Verdoornia, Vetaforma, Wettsteinia, Wiesnerella, Xenochila, Xenothallus, Zoopsidella, Zoopsis.*

Gemäß einer weiteren bevorzugten Ausführungsform der erfindungsgemäßen Verwendung handelt es sich bei der, einer, mehreren oder sämtlichen Pflanzen um ein oder mehrere Laubmoos(e) ausgewählt aus der Gruppe bestehend aus den Gattungen: *Abietinella, Acanthocladiella, Acanthocladium, Acanthodium, Acanthorrhynchium, Acaulon, Acaulonopsis, Achrophyllum, Acidodontium, Acrocladium, Acroporium, Acroschisma, Actinodontium, Actinothuidium, Adelothecium, Aequatoriella, Aerobryidium, Aerobryopsis, Aerobryum, Aerolindigia, Algaria, Aligrimmia, Alleniella, Allioniellopsis, Aloina, Aloinella, Alophosia, Alsia, Amblyodon, Amblyodum, Amblystegiella, Amblystegium, Amblytropis, Ambuchanania, Amphidium, Amphoridium, Amphoritheca, Anacalypta, Anacamptodon, Anacolia, Ancistrodes, Andoa, Andreaea, Andreaeobryum, Anictangium, Anisothecium, Anodon, Anodontium, Anoectangium, Anomobryum, Anomodon, Antitrichia, Aongstroemia, Aongstroemiopsis, Apalodium, Aphanorrhegma, Apiocarpa, Aplodon, Apterygium, Aptychella, Aptychopsis, Aptychus, Arbuscula, Arbusculohypopterygium, Archephemeropsis, Archidium, Arctoa, Argyrobryum, Arthrocormus, Aschisma, Aschistodon, Asteriscium, Astomiopsis, Astomum, Astrodontium, Astrophyllum, Atractylocarpus, Atrichopsis, Atrichum, Aulacomitrium, Aulacomnium, Aulacopilum, Austinella, Austrohondaella, Austrophilibertiella, Baldwiniella, Barbella, Barbellopsis, Barbula, Bartramia, Bartramiopsis, Beeveria, Bellibarbula, Benitotania, Bestia, Bissetia, Blindia, Boulaya, Brachelyma, Brachydontium, Brachymenium, Brachymitrion, Brachyodus, Brachys-*

*teleum, Brachytheciastrum, Brachytheciella, Brachythecium, Brachytrichum, Braithwaitea, Braunfelsia, Braunia, Breidieria, Breutelia, Brothera, Brotherella, Brotherobryum, Bruchia, Bryhnia, Brymela, Bryoandersonia, Bryobeckettia, Bryobrittonia, Bryobrothera, Bryoceuthospora, Bryochenea, Bryocrumia, Bryodixonia, Bryodusenia, Bryoerythrophyllum, Bryohaplocladium, Bryohumbertia, Bryomaltaea, Bryomanginia, Bryomnium, Bryonoguchia, Bryonorrisia, Bryophixia, Bryosedgwickia, Bryostreimannia, Bryotestua, Bryum, Buckiella, Bucklandiella, Burnettia, Buxbaumia, Callialaria, Callicladium, Callicosta, Callicostella, Callicostellopsis, Calliergidium, Calliergon, Calohypnum, Calymperastrum, Calymperes, Calymperidium, Calymperopsis, Calyptopogon, Calyptothecium, Calyptrochaeta, Camptochaete, Camptodontium, Camptothecium, Campyliadelphus, Campylidium, Campylium, Campylodontium, Campylophyllum, Campylopodiella, Campylopodium, Campylopus, Campylostelium, Canalohypopterygium, Cardotia, Cardotiella, Caribaeohypnum, Catagoniopsis, Catagonium, Catharinea, Catharinella, Catharomnion, Catoscopium, Cecalyphum, Ceratodon, Ceuthospora, Ceuthotheca, Chaetomitrella, Chaetomitriopsis, Chaetomitrium, Chaetophora, Chamaebryum, Chamberlainia, Chameleion, Cheilothela, Chenia, Chileobryon, Chionoloma, Chionostomum, Chorisodontium, Chryso-hypnum, Chrysoblastella, Chrysocladium, Chrysohypnum, Cinclidium, Circulifolium, Cirriphyllum, Cladastomum, Cladomnion, Cladophascum, Cladopodanthus, Cladopodanthus, Claopodium, Clasmatodon, Clastobryella, Clastobryophilum, Clastobryopsis, Clastobryum, Clavitheca, Cleistocarpidium, Cleistostoma, Climacium, Cnestrum, Codonoblepharon, Codonoblepharum, Codriophorus, Coelidium, Coleochaetium, Colobodontium, Conardia, Conomitrium, Conostomum, Coscinodon, Coscinodontella, Costesia, Craspedophyllum, Cratoneurella, Cratoneuron, Cratoneuropsis, Crosbya, Crossidium, Crossomitrium, Crumia, Crumuscus, Cryhphaea, Cryphaeadelphus, Cryptocarpon, Cryptodicranum, Cryptogonium, Cryptoleptodon, Cryptopapillaria, Cryptopodia, Cryptopodium, Cryptotheca, Ctenidiadelphus, Ctenidium, Ctenium, Cupressina, Curvicladium, Curviramea, Cyathophorella, Cyathophorum, Cyclodictyon, Cygniella, Cylicocarpus, Cynodon, Cynodontiella, Cynodontium, Cynontodium, Cyrto-hypnum, Cyrtomnium, Cyrtopodendron, Daltonia, Dasymitrium, Dawsonia, Dendro-hypnum, Dendroalsia, Dendrocyathophorum, Dendrohypopterygium, Dendroligotrichum, Dermatodon, Desmatodon, Desmotheca, Dialytrichia, Diaphanophyllum, Dichelodontium, Dichelyma, Dichodontium, Dicladiella, Dicnemoloma, Dicranella, Dicranodon, Dicranodontium, Dicranoloma, Dicranoweisia, Dicranum, Didymodon, Dimerodontium, Dimorphocladon, Diobelon, Diobelonella, Diphascum, Diphyscium, Diplocomium, Diploneuron, Diplostichum, Discelium, Discophyllum, Dissodon, Distichia, Distichium, Distichophyllidium, Distichophyllum, Ditrichopsis, Ditrichum, Dixonia, Dolichomitra, Dolichomitriopsis, Dolotortula, Donnellia, Donrichardsia, Dorcadion, Dozya, Drepanium, Drepano-hypnum, Drepanocladus, Drepanophyllaria, Drepanophyllum, Drummondia, Dryptodon, Dusenia, Duthiella, Eccremidium, Echinodiopsis, Echinodium, Echinophyllum, Ectropotheciella, Ectropotheciopsis, Ectropothecium, Eleutera, Elharveya, Elmeriobryum, Elodium, Encalypta, Endotrichella, Endotrichellopsis, Endotrichum, Entodon, Entosthodon, Entosthymenium, Eobruchia, Eohypopterygiopsis, Eoleucodon, Eosphagnum, Ephemerella, Ephemeridium, Ephemeropsis, Ephemerum, Epipterygium, Eremodon, Eriodon, Eriopus, Erpodium, Erythrobarbula, Erythrodontium, Erythrophyllastrum, Erythrophyllopsis, Erythrophyllum, Esenbeckia, Eucamptodontopsis, Eucatagonium, Eucladium, Euephemerum, Eumyurium, Euptychium, Eurhynchiadelphus, Eurhynchiastrum, Eurhynchiella, Eurhynchium, Eurohypnum, Eustichia, Euzygodon, Exodictyon, Exostratum, Exsertotheca, Fabroleskea, Fabronialschyrodon, Fabronidium, Fallaciella, Fauriella, Felipponea, Fiedleria, Fifealsotheciadelphus, Fissidens, Flabellidium, Fleischerobryum, Floribundaria, Florschuetziella, Flowersia, Fontinalis, Foreauella, Forsstroemia, Frahmiella, Funaria, Funariella, Gammiella, Ganguleea, Garckea, Garovaglia, Gasterogrimmia, Geheebia, Gemmabryum, Georgia, Gertrudia, Gertrudiella, Gigaspermum, Giraldiella, Globulina, Globulinella, Glossadelphus, Glyphomitrium, Glyphomitrium, Glyphothecium, Glyptothecium, Gollania, Gongronia, Goniobryum, Goniomitrium, Gradsteinia, Grimmia, Groutiella, Guembelia, Guerramontesia, Gymnostomiella, Gymnostomum, Gyroweisia, Habrodon, Habrodonlshibaealwatsukiella, Hageniella, Hamatocaulis, Hampeella, Hampeohypnum, Handeliobryum, Haplocladium, Haplodon, Haplodontium, Haplohymenium, Haptymenium, Harpidium, Harpophyllum, Harrisonia, Harveya, Hebantialtatiella, Hedenaesia, Hedenasiastrum, Hedwigia, Hedwigidium, Helicoblepharum, Helicodontiadelphus, Helicodontium, Heliconema, Helicophyllum, Helodium, Hemiragis, Henicodium, Hennediella, Herpetineuron, Herzogiella, Heterocladium, Heterodon, Heterophylliium, Hildebrandtiella, Hilpertia, Himantocladium, Holoblepharum, Holodontium, Holomitriopsis, Holomitrium, Homalia, Homaliadelphus, Homaliodendron, Homaliopsis, Homalotheciella, Homalothecium, Homomallium, Hondaella, Hookeria, Hookeriopsis, Horikawaea, Horridohypnum, Husnotiella, Hyalophyllum, Hydrocryphaealsodrepanium, Hydrogonium, Hydropogon, Hydropogonella, Hygroamblystegium, Hygrodicranum, Hygrohypnella, Hygrohypnum, Hylocomiadelphus, Hylocomiastrum, Hylocomiopsis, Hylocomium, Hymenodon, Hymenodontopsis, Hymenoloma, Hymenostomum, Hymenostyliella, Hymenostylium, Hyocomium, Hyophila, Hyophiladelphus, Hyophilopsis, Hypnella, Hypnites, Hypnobartlettia, Hypnodendron, Hypnum, Hypodontium, Hypopterygium, Imbribryum, Indopottia, Indothuidium, Indusiella, Inouethuidium, Isopterygiopsis, Isopterygium, Isotheciopsis, Isothecium, Jaegerina, Jaegerinopsis, Jaffueliobryum, Juratzkaeella, Kiaeria, Kindbergia, Kingiobryum, Kleioweisiopsis, Koponenia, Kurohimehypnum, Lamprophyllum, Leersia, Leiodontium, Leiomela, Leiomitrium, Leiotheca, Lembophyllum, Lepidopilidium, Lepidopilum, Leptangium, Leptobarbula, Leptobryum, Leptocladiella, Leptocladium, Leptodictyum, Leptodontiella, Leptodontiopsis, Leptodontium, Leptohymenium, Leptophascum, Leptopterigynandrum, Leptostomopsis, Leptostomum, Leptotheca, Leptotrichella, Leptotrichum, Lepyrodon, Lepyrodontopsis, Leratia, Leratiella, Lescuraea, Leskea, Leskeadelphus, Leskeella, Leskeodon, Leskeodontopsis, Lesquereuxia, Leucobryum, Leucodon, Leucodon-*

*tella, Leucolepis, Leucoloma, Leucomium, Leucoperichaetium, Leucophanella, Leucophanes, Levierella, Limbella, Limnobium, Limprichtia, Lindbergia, Lindigia, Loeskeobryum, Loeskypnum, Loiseaubryum, Looseria, Lophiodon, Lopidium, Lorentzia, Lorentziella, Loxotis, Ludorugbya, Luisierella, Lyellia, Macgregorella, Macouniella, Macrocoma, Macrodictyum, Macrohymenium, Macromitrium, Macrosporiella, Macrothamniella, Macrothamnium, Mamillariella, Mandoniella, Maschalanthus, Maschalocarpus, Mastopoma, Matteria, Meesia, Meiotheciella, Meiotheciopsis, Meiothecium, Meiotrichum, Merceya, Merceyopsis, Mesochaete, Mesonodon, Mesotus, Metadistichophyllum, Metaneckera, Meteoridium, Meteoriella, Meteoriopsis, Meteorium, Metzlerella, Metzleria, Micralsopsis, Microbryum, Microcampylopus, Microcrossidium, Microctenidium, Microdus, Microeurhynchium, Micromitrium, Micropoma, Microthamnium, Microtheciella, Microthuidium, Miehea, Mielichhoferia, Mildea, Mildeella, Mironia, Mitrobryum, Mittenia, Mittenothamnium, Mitthyridium, Miyabea, Mniadelphus, Mniobryum, Mniodendron, Mniomalia, Mnium, Moenkemeyera, Molendoa, Mollia, Morinia, Moseniella, Muelleriella, Muellerobryum, Muscoflorschuetzia, Muscoherzogia, Myrinia, Myurella, Myuriopsis, Myurium, Myuroclada, Nanobryum, Nanomitriopsis, Nanomitrium, Neckera, Neckeradelphus, Neckerites, Neckeropsis, Nematocladia, Neobarbella, Neocardotia, Neodicladiella, Neodolichomitra, Neohyophila, Neolescuraea, Neolindbergia, Neomacounia, Neomeesia, Neonoguchia, Neophoenix, Neorutenbergia, Neosharpiella, Niphotrichum, Nobregaea, Nogopterium, Noguchiodendron, Notoligotrichum, Ochiobryum, Ochrobryum, Ochyraea, Octodiceras, Oedicladium, Oedipodiella, Oedipodium, Okamuraea, Oligotrichum, Oncophorus, Oreas, Oreoweisia, Orontobryum, Orthoamblystegium, Orthodicranum, Orthodon, Orthodontium, Orthodontopsis, Orthogrimmia, Orthomitrium, Orthomnion, Orthomniopsis, Orthopus, Orthopyxis, Orthorrhynchidium, Orthorrhynchium, Orthostichella, Orthostichidium, Orthostichopsis, Orthotheciella, Orthothecium, Orthothecium, Orthothuidium, Orthotrichum, Osterwaldiella, Oticodium, Oxyrrhynchium, Oxystegus, Pachyneuropsis, Pachyneurum, Palaeocampylopus, Palamocladium, Palisadula, Paludella, Palustriella, Panckowia, Pancovia, Papillaria, Papillidiopsis, Paraleucobryum, Paramyurium, Pararhacocarpus, Parisia, Pelekium, Pendulothecium, Pentastichella, Penzigiella, Peromnion, Pharomitrium, Phasconica, Phascopsis, Phascum, Philibertiella, Philonotis, Philophyllum, Photinophyllum, Phyllodon, Phyllodrepanium, Phyllogonium, Physcomitrella, Physcomitrium, Physedium, Picobryum, Pictus, Piloecium, Pilopogon, Pilopogonella, Piloseriopus, Pilotrichella, Pilotrichidium, Pilotrichum, Pinnatella, Pirea, Pireella, Plagiobryoides, Plagiobryum, Plagiomnium, Plagiopus, Plagioracelopus, Plagiothecium, Plasteurhynchium, Platydictya, Platygyriella, Platygyrium, Platyhypnidium, Platyhypnum, Platyloma, Platylomella, Platyneuron, Plaubelia, Pleuriditrichum, Pleuridium, Pleurochaete, Pleurophascum, Pleuropus, Pleurorthotrichum, Pleuroweisia, Pleurozium, Pleurozygodon, Pocsiella, Podperaea, Poecilophyllum, Pogonatum, Pohlia, Polla, Polymerodon, Polypodiopsis, Polytrichadelphus, Polytrichastrum, Polytrichites, Polytrichum, Porothamnium, Porotrichella, Porotrichodendron, Porotrichopsis, Porotrichum, Potamium, Pottia, Pottiopsis, Powellia, Powelliopsis, Pringleella, Prionidium, Prionodon, Pseudatrichum, Pseudephemerum, Pseudisothecium, Pseudoamblystegium, Pseudobarbella, Pseudobraunia, Pseudobryum, Pseudocalliergon, Pseudocampylium, Pseudochorisodontium, Pseudocrossidium, Pseudodimerodontium, Pseudodistichium, Pseudoditrichum, Pseudohygrohypnum, Pseudohyophila, Pseudohypnella, Pseudoleskea, Pseudoleskeella, Pseudoleskeopsis, Pseudopiloecium, Pseudopilotrichum, Pseudopleuropus, Pseudopohlia, Pseudopterobryum, Pseudoracelopus, Pseudorhynchostegiella, Pseudoscleropodium, Pseudosymblepharis, Pseudotimmiella, Pseudotrismegistia, Psilopilum, Pterigynandrum, Pterobryella, Pterobryidium, Pterobryon, Pterobryopsis, Pterogoniadelphus, Pterogonidium, Pterogoniella, Pterogonium, Pterygoneurum, Pterygophyllum, Ptilium, Ptychodium, Ptychomitriopsis, Ptychomitrium, Ptychomniella, Ptychomnion, Ptychostomum, Puiggaria, Puiggariella, Puiggariopsis, Pulchrinodus, Pungentella, Pursellia, Pylaisia, Pylaisiadelpha, Pylaisiella, Pylaisiobryum, Pyramidula, Pyramitrium, Pyromitrium, Pyrrhobryum, Quaesticula, Racelopodopsis, Racelopus, Racomitrium, Racopilum, Radulina, Raineria, Rauia, Rauiella, Regmatodon, Reimersia, Remyella, Renauldia, Rhabdodontium, Rhabdoweisia, Rhacocarpus, Rhacopilopsis, Rhamphidium, Rhaphidorrhynchium, Rhaphidostegium, Rhaphidostichum, Rhexophyllum, Rhizofabronia, Rhizogonium, Rhizohypnum, Rhizomnium, Rhizopelma, Rhodobryum, Rhyncho-hypnum, Rhynchostegiella, Rhynchostegiopsis, Rhynchostegium, Rhystophyllum, Rhytidiadelphus, Rhytidiastrum, Rhytidiopsis, Rhytidium, Richardsiopsis, Rigodiadelphus, Roellia, Rosulabryum, Rottleria, Rutenbergia, Saelania, Sagenotortula, Sainthelenia, Saitoa, Saitobryum, Saitoella, Sanionia, Saproma, Sarconeurum, Sarmentypnum, Sasaokaea, Sauloma, Scabridens, Schimperella, Schimperobryum, Schistidium, Schistomitrium, Schistophyllum, Schistostega, Schizomitrium, Schizymenium, Schliephackea, Schlotheimia, Schraderobryum, Schwetschkea, Schwetschkeopsis, Sciadocladus, Sciaromiella, Sciaromiopsis, Sciaromium, Sciuro-hypnum, Sclerodontium, Sclerohypnum, Scleropodiopsis, Scleropodium, Scopelophila, Scorpidium, Scorpiurium, Scouleria, Scytalina, Sebillea, Sehnemobryum, Sekra, Seligeria, Sematophyllites, Sematophyllum, Semibarbula, Serpoleskea, Serpotortella, Sharpiella, Shevockia, Sigmatella, Simophyllum, Simplicidens, Sinocalliergon, Sinskea, Skitophyllum, Skottsbergia, Solmsia, Solmsiella, Sorapilla, Sphaerangium, Sphaerocephalus, Sphaerothecium, Sphagnum, Spiridentopsis, Spirula, Splachnum, Sporledera, Spruceella, Squamidium, Stableria, Steerecleus, Steereobryon, Stegonia, Stellariomnium, Stenocarpidiopsis, Stenodesmus, Stenodictyon, Stenotheciopsis, Stenothecium, Steppomitra, Stereodon, Stereodontopsis, Stereohypnum, Steyermarkiella, Stokesiella, Stonea, Stoneobryum, Straminergon, Straminergon, Streblopilum, Streblotrichum, Streimannia, Strephedium, Streptocalypta, Streptocolea, Streptopogon, Streptotrichum, Stroemia, Strombulidens, Struckia, Struckia, Stylocomium, Swartzia, Symblepharis, Symphyodon, Symphysodon, Symphysodontella, Syntrichia, Syrrhopodon, Systegium, Taiwanobryum, Takakia, Tamariscella, Taxicaulis, Taxiphyllum, Taxithelium,*

*Tayloria, Teichodontium, Teniolophora, Teretidens, Terrestria, Tetracoscinodon, Tetraphidopsis, Tetraphis, Tetraplodon, Tetrapterum, Tetrastichium, Tetrodontium, Thamniella, Thamniopsis, Thamnium, Thamnobryum, Thamnomalia, Thelia, Thiemea, Thuidiopsis, Thuidium, Thyridium, Thysanomitrion, Timmia, Timmiella, Timokoponenia, Toloxis, Tomentypnum, Tortella, Tortula, Touwia, Touwiodendron, Trachybryum, Trachycarpidium, Trachycladiella, Trachycystis, Trachyloma, Trachymitrium, Trachyodontium, Trachyphyllum, Trachythecium, Trachyxiphium, Trematodum, Trichodon, Trichodontium, Tricholepis, Trichosteleum, Trichostomopsis, Trichostomum, Tridontium, Trigonodictyon, Tripterocladium, Triquetrella, Trismegistia, Tristichium, Tuerckheimia, Uleastrum, Uleobryum, Ulota, Unclejackia, Valdonia, Venturiella, Verrucidens, Vesicularia, Vesiculariopsis, Vetiplanaxis, Viridivellus, Vittia, Voitia, Vrolijkheidia, Warburgiella, Wardia, Warnstorfia, Webera, Weisiodon, Weisiopsis, Weissia, Weissiodicranum, Werneriobryum, Weymouthia, Wijkia, Wildia, Willia, Wilsoniella, Yunnanobryon, Zelometeorium, Zygodon, Zygotrichia.*

Gemäß einer weiteren bevorzugten Ausführungsform der erfindungsgemäßen Verwendung handelt es sich bei der, einer, mehreren oder sämtlichen Pflanzen um ein oder mehrere Hornmoos(e) ausgewählt aus der Gruppe bestehend aus den Gattungen: *Anthoceros, Dendroceros, Folioceros, Hattorioceros, Leiosporoceros, Megaceros, Mesoceros, Nothoceros, Notothylas, Paraphymatoceros, Phaeoceros, Phaeomegaceros, Phymatoceros, Sphaerosporoceros.*

Eine bevorzugte Ausführungsform bezieht sich auf eine Verwendung wie hierin beschrieben, wobei die Biozementierungsreaktion keine exotherme Reaktion ist. Im Rahmen dieses Textes ist eine exotherme Reaktion eine Reaktion, bei der bei konstantem Druck Energie in Form von Wärme an die Umgebung abgegeben wird, vorzugsweise eine Reaktion, bei der sich bei konstantem Druck die Temperatur der Edukte, Zwischenstufen und/oder Produkte während der Biozementierungsreaktion um mehr als 5°C, weiter bevorzugt um mehr als 10, 20, 30, 40, 50, 60, 70, 80, 90 oder 100°C, erhöht (relativ zur Ausgangstemperatur vor dem Start der Biozementierungsreaktion).

Ein weiterer Aspekt der vorliegenden Erfindung betrifft ein Verfahren zum Verhindern oder Reduzieren von Pflanzenwachstum, vorzugsweise des Wachstums von Unkraut, auf / in einem Substrat, bestehend aus oder umfassend folgende Schritte:

(a) Identifizieren eines zu behandelnden Substrats, auf / in dem ein Pflanzenwachstum, vorzugsweise ein Wachstum von Unkraut, verhindert oder reduziert werden soll,

(b) Bereitstellen einer Mischung (wie oben definiert),

(c) Auftragen und/oder Einbringen der in Schritt (b) bereitgestellten Mischung auf / in das zu behandelnde Substrat, in einer Menge, die ausreicht, um eine Biozementierung zu ermöglichen, und

(d) Ausbilden einer Biozement (wie oben definiert)-Schicht, so dass das Pflanzenwachstum bzw. das Wachstum von Unkraut auf / in dem Substrat verhindert oder reduziert wird.

Gemäß einer bevorzugten Ausführungsform des erfindungsgemäßen Verfahrens findet in Schritt (c) (nur) ein Auftragen der in Schritt (b) bereitgestellten Mischung auf / in das zu behandelnde Substrat statt. Gemäß einer weiteren bevorzugten Ausführungsform des erfindungsgemäßen Verfahrens findet in Schritt (c) ein Auftragen und anschließendes Einbringen, beispielsweise durch Untermischung, der in Schritt (b) bereitgestellten Mischung auf / in das zu behandelnde Substrat statt.

Gemäß einer weiteren bevorzugten Ausführungsform des erfindungsgemäßen Verfahrens findet in Schritt (c) (nur) ein Einbringen der in Schritt (b) bereitgestellten Mischung auf / in das zu behandelnde Substrat statt.

Gemäß einer weiteren bevorzugten Ausführungsform des erfindungsgemäßen Verfahrens wird das in Schritt (a) identifizierte Substrat oder Teile davon vom ursprünglichen Ort entfernt, mit der in Schritt (b) bereitgestellten Mischung in einer Menge vermischt, die ausreicht, um eine Biozementierung zu ermöglichen (beispielsweise in einem Mischgerät), die erhaltene Mischung an den ursprünglichen Ort des Substrats zurückgebracht (oder alternativ an einen anderen Ort gebracht, an dem eine Biozement-Schicht gebildet werden soll), gefolgt von Schritt (d) wie hierin beschrieben. In einer solchen bevorzugten Ausführungsform entfällt Schritt (c) des Verfahrens wie hierin beschrieben.

Abhängig von der Form (fest bzw. pulverförmig oder flüssig oder gelartig oder pastös) der in Schritt (b) des erfindungsgemäßen Verfahrens bereitgestellten Mischung (vgl. hierzu die obigen Ausführungen), kann das Auftragen und/oder Einbringen in Schritt (c) auf unterschiedliche Art und Weise erfolgen. Pulverförmige Mischungen können beispielsweise auf das zu behandelnde Substrat aufgestreut und/oder in das Substrat eingearbeitet werden. Flüssige Mischungen werden beispielsweise auf das zu behandelnde Substrat gegossen oder aufgesprüht und optional anschließend in das Substrat eingearbeitet. Vorteilhafterweise reicht in der Regel ein einmaliges Auftragen und/oder Einbringen der in Schritt (b) bereitgestellten Mischung auf / in das zu behandelnde Substrat aus, um eine Biozement-Schicht wie in Schritt (d) des erfindungegemäßen Verfahrens definiert, auszubilden. Bevorzugt reicht ein einmaliges Auftragen der in Schritt (b) bereitgestellten Mischung auf / in das zu behandelnde Substrat aus, um eine Biozement-Schicht wie in Schritt (d) des erfindungegemäßen Verfahrens definiert, auszubilden.

Dem Fachmann ist dabei bekannt, dass eine Biozementierung (wie hierin definiert) im erfindungsgemäßen Verfahren besonders effizient bei einem bestimmten Applikationsvolumen bzw. einer bestimmten Konzentration der Mischung aus Schritt (b) abläuft (siehe hierzu auch die bevorzugten Zellzahlen des Organismus bzw. der Organismen in der erfindungsgemäß zu verwendenden Mischung wie vorangehend definiert). Laut eigenen Untersuchungen beträgt das Applikationsvolumen der erfindungsgemäß zu verwendenden Mischung (wie oben definiert) vorzugsweise mindestens 0,1 l/m², weiter bevorzugt mindestens 0,5 l/m², weiter bevorzugt mindestens 1,0 l/m², weiter bevorzugt mindestens 2,0 l/m², mindestens 3,0 l/m², mindestens 4,0 l/m² oder mindestens 5,0 l/m², und / oder vorzugsweise höchstens 20,0 l/m², weiter bevorzugt höchstens 10,0 l/m².

Für einen effektiven Biozementierungsprozess in Schritt (d) des erfindungsgemäßen Verfahrens ist es vorteilhaft, wenn das System aus erfindungsgemäß einzusetzender Mischung und Substrat (wie hierin definiert) einen Wassergehalt von mehr als 10 Gew.-% bezogen auf das Gesamtgewicht des besagten Systems aufweist. Wird die erfindungsgemäß einzusetzende Mischung in Schritt (b) des erfindungsgemäßen Verfahrens in pulverförmiger Form (wie oben definiert) eingesetzt und ist auch das Substrat in Schritt (a) bzw. (c) des erfindungsgemäßen Verfahrens im wesentlichen wasserfrei, so dass ein Wassergehalt des besagten Systems von 10 Gew.-% oder weniger bezogen auf das Gesamtgewicht des Systems resultiert, so ist es vorteilhaft, wenn das erfindungsgemäße Verfahren einen weiteren Schritt umfasst, in welchem entweder der Mischung aus Schritt (b) des Verfahrens vor oder nach dem Auftragen oder Einbringen auf / in das zu behandelnde Substrat, genügend Wasser bzw. wässrige Lösung zugesetzt wird, so dass ein Wassergehalt des besagten Systems von mehr als 10 Gew.-% bezogen auf das Gesamtgewicht des besagten Systems resultiert. Alternativ oder gleichzeitig kann dem zu behandelnden Substrat vor oder nach dem Auftragen oder Einbringen der in Schritt (b) des erfindungsgemäßen Verfahrens bereitgestellten Mischung eine entsprechende Menge an Wasser bzw. wässrige Lösung zugesetzt werden.

Des Weiteren ist es bei Einsatz des erfindungsgemäßen Verfahrens im Außenbereich vorteilhaft, das Verfahren beispielsweise nicht bei zu starkem Regen bzw. Wind durchzuführen. Starker Regen oder Wind können unter Umständen zu einem Verlust oder einer erheblichen Verdünnung an erfindungsgemäß einzusetzender Mischung schon vor der Ausbildung der Biozement-Schicht (Schritt (d)) führen, was die Ausbildung der Biozement-Schicht verhindern könnte bzw. ihre Festigkeit und / oder Dicke negativ beeinflussen könnte. Nach dem Auftragen oder Einbringen der in Schritt (b) des erfindungsgemäßen Verfahrens bereitgestellten Mischung auf / in das zu behandelnde Substrat, d.h. in Schritt (d) des erfindungsgemäßen Verfahrens, erfolgt das Ausbilden der Biozement-Schicht vorzugsweise über einen Inkubationszeitraum von mindestens 6 Stunden, vorzugsweise von mindestens 24 Stunden, weiter bevorzugt von mindestens 48 Stunden, in welchem vorzugsweise keine Menge an Regen bzw. Wind bzw. künstlicher Bewässerung auftritt, welche zu einem signifikanten Verlust an erfindungsgemäß einzusetzender Mischung führt. Der benötigte Inkubationszeitraum für das Ausbilden der Biozement-Schicht in Schritt (d) des erfindungsgemäßen Verfahrens ist dabei abhängig von verschiedenen Umweltparametern, wie beispielsweise der Raum- bzw. Außentemperatur und der Luftfeuchtigkeit, und vom eingesetzten Applikationsvolumen der Mischung. Sollte es während des besagten Inkubationszeitraums von mindestens 6 Stunden, vorzugsweise von mindestens 24 Stunden, weiter bevorzugt von mindestens 48 Stunden, durch Regen oder Wind zu einem signifikanten Verlust an erfindungsgemäß einzusetzender Mischung kommen, so ist es vorteilhaft, die Schritte (b) bis (d) des erfindungsgemäßen Verfahrens so oft wie nötig, vorzugsweise einmal, zweimal, dreimal oder mehr, zu wiederholen, bis eine ausreichende Dicke und Festigkeit der Biozement-Schicht zum Verhindern oder Reduzieren von Pflanzenwachstum, vorzugsweise des Wachstums von Unkraut, auf / in dem Substrat, erreicht wird. Zudem bzw. alternativ kann es sich als vorteilhaft erweisen, die Schritte (b) bis (d) des erfindungsgemäßen Verfahrens zu wiederholen, vorzugsweise einmal, zweimal, dreimal oder mehr zu wiederholen, sollte die Dicke und / oder Festigkeit der ausgebildeten Biozement-Schicht auf / in dem Substrat im Laufe der Zeit durch Verwitterung und / oder natürlichen Abbau abnehmen und dadurch nicht mehr zum Verhindern oder Reduzieren von Pflanzenwachstum, vorzugsweise des Wachstums von Unkraut, auf / in dem Substrat, ausreichend sein.

Die Dicke der Biozement-Schicht kann durch manuelle Messung nach mechanischem Bruch der Schicht mit Hilfe eines Messschiebers bestimmt werden. Alternativ können je nach Dicke der Verfestigung unterschiedliche (zerstörungsfreie) Messverfahren aus Bau, Landwirtschaft, Geologie oder weiteren Einsatzgebieten verwendet werden (z.B. Handgerät MIT-SCAN-T2). Die Schichtdicke der Biozement-Schicht umfasst den Bereich des Substrats, der durch die Zugabe der Mischung verfestigt wird.

Die Festigkeit der Biozement-Schicht entspricht der Bruchkraft (in Newton (N)), die aufgewendet werden muss, um die Biozement-Schicht zu brechen. Das Brechen der Biozementierungsschicht ist der Punkt bei der keine (plastische) Verformung der Schicht bei Krafteinwirkung mehr auftritt, sondern es zum Durchbruch der (Biozementierungs-)Schicht kommt. Man erkennt das Brechen durch einen Abfall der gemessenen Kraft. Die Bruchkraft (Maximalwert der Kraftmessung) kann mit Hilfe des folgenden Verfahrens bestimmt werden: Das Verfahren ist angelehnt an das normierte Prüfverfahren zur Festigkeitsbestimmung in Zement DIN EN 196-1:2005-05. Mittels eines digitalen (Bruch-)Kraftmessgeräts wird nach Angaben des Herstellers die Bruchkraft gemessen. Ein Prüfkörper wird mit Hilfe eines Kurbelprüfstandes in die Probe (bis zum Bruch) gedrückt und die aufgebrachte Kraft kontinuierlich gemessen. Aus mehreren Messungen (>3) wird die mittlere Bruchkraft errechnet. Die mittlere Bruchkraft beträgt vorzugsweise zwischen 0,5 und 1000 N, weiter bevorzugt zwischen 3 und 300 N.

Bevorzugt ist zudem ein Verfahren wie hierin beschrieben, wobei die (in Schritt (d) des erfindungsgemäßen Verfahrens) gebildete Biozement-Schicht einen (Wasser-)Durchlässigkeitsbeiwert von größer als $10^{-9}$ bis $10^0$ m/s, bevorzugt von größer als $10^{-9}$ bis $10^{-3}$ m/s, weiter bevorzugt von größer als $10^{-8}$ bis $10^{-3}$ m/s, aufweist.

Optional kann nach Schritt (d) des erfindungsgemäßen Verfahrens ein weiterer Schritt (e) erfolgen, der das Kontrollieren, ob ein Pflanzenwachstum, vorzugsweise ein Wachstum von Unkraut, verhindert oder reduziert wurde, umfasst oder daraus besteht. Die besagte Kontrolle kann beispielsweise durch Bestimmung des Deckungsgrades des Pflanzen- bzw. Unkrautwuchses durch manuelle visuelle Bonitur wie in den nachfolgenden Beispielen beschrieben erfolgen. Schritt (e) des erfindungsgemäßen Verfahrens kann bei Bedarf in regelmäßigen Abständen, beispielsweise alle 24 oder 48 Stunden, wiederholt werden.

Bevorzugt ist ein Verfahren wie vorangehend beschrieben, wobei das Substrat ausgewählt ist aus der Gruppe bestehend aus Sand, Erde, vorzugsweise Landerde und Pflanzenerde, Humus, Schotter, Kies, Lehm, Ton, Schluff, Sägemehl, Papier, Karton, Spanplatten, Weichholz, Kalkstein, Kohle sowie Gemische davon.

Weiter bevorzugt ist das in dem erfindungsgemäßen Verfahren verwendete Substrat ausgewählt aus der Gruppe bestehend aus organischem und anorganischem Material sowie Mischformen davon, in dem Pflanzenwachstum möglich ist, vorzugsweise Kabelsand, Feinsand, Natursand, Quarzsand, Kristallquarzsand, Vogelsand, Kiessand, Fugensand, Brechsand, Quarzmehl, Mineralgemisch (Stein, Splitt, Kies), Triple Hell, Savonniere Steinmehl, Gips, Löss, Mutterboden, Kalksteinbrechsand, Kalksteinmehl, Calciumcarbonat (inkl. Polymorphe, Derivate und Mischformen, sowie natürlich basiert (GCC Ground calcium carbonate) als auch synthetisch PCC (precipitated calcium carbonate)), Talkum, Dolomit, Weißkalk(hydrat), Trass, Zemente und Mischungen, Microsilicate, Kreide(mischung), Marmor, Perlit, Abraum, Haldenmaterial, Hämatit, Rötel, Magnesit, Eisenerz, Steatit, Speckstein, Kaolin, Mergel, Tonerde, Attapulgit, Tonmineralien, Bentonit, Zeolith, (Calco)Stuk, Kies(abbau), Glasmehl, Aluminiumoxid, Aluminiumhydroxid, Magnesiumoxid, Calciumoxid, Calciumhydrooxid, Magnesit, Schiefermehl, Bimsstein, Cristobalit(sand), Romanzement, Bauxit, Pyrite, Sphalerite, Silikate, Oxide, Carbonate, Holz(späne), Mulch, Alluvialboden, Laterit, Hämatit, Asche, (Holz-, Flug-, Knochen-Asche), (Schweine-)Farmböden, LUFA Standard Böden (s. z.B. http://www.lufa-speyer.de/ oder Gemischen davon.

Weiter bevorzugt ist ein Verfahren wie vorangehend beschrieben, wobei das Substrat eine Boden- oder Nutzfläche, vorzugsweise im Freiland, wie beispielsweise eine (Heim-)Gartenfläche, eine Fugenfläche von Terrassen oder Ein- und Ausfahrten, eine Ackerfläche, eine Obstplantage, eine Fläche zum Weinbau, eine Baumschulfläche, ein Park, ein Teil eines bebauten Grundstücks oder Stadtgebiets, ein Fahrweg, eine Straße, ein Gehweg, eine Bahnstrecke oder eine Fläche, die industriell benutzt wird, ist.

Abhängig von den Eigenschaften des zu behandelnden Substrats kann es sich als vorteilhaft erweisen, das Substrat (oder Bestandteil (i), (ii) und / oder (iii) der in Schritt (b) bereitgestellten Mischung) mit einem oder mehreren der oben genannten Additive zu versetzen, um beispielsweise die Reaktivität des Substrats mit dem während des erfindungsgemäßen Verfahrens gebildeten Biozement zu verbessern. Dies führt vorteilhafterweise zu einer besonders harten bzw. stabilen Biozement-Schicht, welche das Unkrautwachstum besonders effektiv unterdrückt.

Das erfindungsgemäße Verfahren ermöglicht es beispielsweise, Fugenflächen von Terrassen, Ein- und Ausfahrten, Fahrwegen, Straßen oder Gehwegen oder offene Flächen mit Hilfe der Biozementierung zu verschließen und / oder zu verhärten und so effektiv das Wachstum von Pflanzen, vorzugsweise Unkräutern, in / auf diesen Substraten zu unterdrücken. Auch eine Anwendung des erfindungsgemäßen Verfahrens zur Unkrautunterdrückung in der Landwirtschaft, beispielsweise auf Nutzflächen im Getreide- oder Obstanbau, ist möglich.

Eine bevorzugte Ausführungsform bezieht sich daher auf ein erfindungsgemäßes Verfahren wie hierin beschrieben, wobei die in Schritt (d) gebildete Biozement-Schicht das (weitere) Wachstum von Kulturpflanzen ermöglicht, jedoch das Wachstum neuer Unkräuter verhindert oder reduziert.

Bevorzugt ist ein Verfahren wie vorangehend beschrieben, wobei die Pflanze bzw. das Unkraut ausgewählt ist aus der Gruppe bestehend aus Dikotylen der Gattungen: *Abutilon, Aegopodium, Aethusa, Amaranthus, Ambrosia, Anachusa, Anagallis, Anoda, Anthemis, Aphanes, Arabidopsis, Atriplex, Barbarea, Bellis, Bidens, Bunias, Capsella, Carduus, Cassia, Centaurea, Chenopodium, Chrysanthemum, Cirsium, Conium, Conyza, Consolida, Convolvulus, Datura, Descurainia, Desmodium, Emex, Equisetum, Erigeron, Erodium, Erysimum, Euphorbia, Fumaria, Galeopsis, Galinsoga, Galium, Geranium, Heracleum, Hibiscus, Ipomoea, Kochia, Lamium, Lapsana, Lathyrus, Lepidium, Lithosermum, Linaria, Lindernia, Lycopsis, Malva, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Sisymbrium, Solanum, Sonchus, Sphenoclea, Stachys, Stellaria, Taraxacum, Thlaspi, Trifolium, Tussaligo, Urtica, Veronica, Viola, Xanthium;* Dikotylen der Gattungen: *Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia;* Monokotylen der Gattungen: *Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Juncus, Leptochloa, Lolium, Monochoria, Panicum, Paspa-*

*lum, Phalaris, Phleum, Poa, Rottboellia, Sagittaria, Scirpus, Setaria, Sorghum;* und Monokotylen der Gattungen: *Allium, Ananas, Asparagus, Avena, Hordeum, Oryza, Panicum, Saccharum, Secale, Sorghum, Triticale, Triticum, Zea;* Moosen der Abstammungslinien Lebermoose (Marchantiosida), Hornmoose (Anthocerotopsida), Laubmoose (Bryopsida).

Gemäß einer bevorzugten Ausführungsform des erfindungsgemäßen Verfahrens handelt es sich bei der, einer, mehreren oder sämtlichen Pflanzen um ein oder mehrere Lebermoos(e) ausgewählt aus der Gruppe bestehend aus den Gattungen: *Acolea, Acrobolbus, Acrochila, Acromastigum, Acroscyphella, Acroscyphus, Acrostolia, Adelocolia, Aitchisoniella, Alicularia, Allisonia, Allisoniella, Alobiella, Alobiellopsis, Amazoopsis, Amphicephalozia, Amphilophocolea, Andrewsianthus, Aneura, Anomacaulis, Anomoclada, Anomylia, Anthelia, Anthelis, Aphanolejeunea, Aplozia, Apomarsupella, Apometzgeria, Apotreubia, Arachniopsis, Arctoscyphus, Arnellia, Ascidiota, Asterella, Athalamia, Austrofossombronia, Austrolembidium, Austrolophozia, Austrometzgeria, Austroscyphus, Balantiopsis, Bazzania, Blasia, Blepharidophyllum, Blepharostoma, Brevianthus, Calycularia, Calypogeia, Calyptrocolea, Campanocolea, Castanoclobos, Cavicularia, Cephalojonesia, Cephalolobus, Cephalomitrion, Cephalozia, Cephaloziella, Cephaloziopsis, Ceratolejeunea, Cesius, Chaetophyllopsis, Chiastocaulon, Chiloscyphus, Chloranthelia, Chonecolea, Cladomastigum, Cladopodiella, Clandarium, Clasmatocolea, Cololejeunea, Colura, Conocephalum, Conoscyphus, Corsinia, Cronisia, Crossogyna, Cryptochila, Cryptocolea, Cryptocoleopsis, Cryptomitrium, Cryptostipula, Cryptothallus, Cuspidatula, Cyanolophocolea, Cyathodium, Cylindrocolea, Delavayella, Dendrobazzania, Dendromastigophora, Denotarisia, Dichiton, Dinckleria, Diplocolea, Diplophyllum, Douinia, Drepanolejeunea, Drucella, Dumortiera, Dumortieropsis, Enigmella, Eocalypogeia, Eoisotachis, Eopleurozia, Eotrichocolea, Eremonotus, Eucalyx, Evansia, Evansianthus, Exormotheca, Fossombronia, Frullania, Fuscocephaloziopsis, Gackstroemia, Geocalyx, Geothallus, Gerhildiella, Goebeliella, Goebelobryum, Gongylanthus, Gottschea, Gottschelia, Greeneothallus, Grollea, Gymnanthe, Gymnocoleopsis, Gymnomitrion, Gymnoscyphus, Gyrothyra, Haesselia, Haplomitrium, Harpalejeunea, Harpanthus, Hattoria, Hattorianthus, Hattoriella, Hepatostolonophora, Herbertus, Herpetium, Herpocladium, Herzogianthus, Herzogobryum, Heterogemma, Heteroscyphus, Horikawaella, Hyalolepidozia, Hygrobiellalwatsukia, Hygrolembidium, Hygrophila, Hymenophyton, Hypoisotachis, Isolembidium, Isotachis, Jamesoniella, Jensenia, Jubula, Jubulopsis, Jungermannia, Jungermannites, Krunodiplophyllum, Kurzia, Kymatocalyx, Lamellocolea, Leiocolea, Leiomitra, Leiomylia, Leioscyphus, Lejeunea, Lembidium, Lepidogyna, Lepidolaena, Lepidozia, Leptolejeunea, Leptophyllopsis, Leptoscyphopsis, Leptoscyphus, Lethocolea, Liochlaena, Lobatiriccardia, Lophocolea, Lophonardia, Lophozia, Lophoziopsis, Lunularia, Macrodiplophyllum, Maculia, Makinoa, Mannia, Marchantia, Marchesinia, Marsupella, Marsupidium, Massula, Massularia, Mastigobryum, Mastigopelma, Mastigophora, Mastigopsis, Mesoptychia, Metacalypogeia, Metahygrobiella, Metzgeria, Metzgeriopsis, Micrisophylla, Microlejeunea, Microlepidozia, Micropterygium, Mizutania, Mnioloma, Moerckia, Monocarpus, Monoclea, Monodactylopsis, Monosolenium, Mytilopsis, Nanomarsupella, Nardia, Neesioscyphus, Neogrollea, Neohodgsonia, Neotrichocolea, Noteroclada, Nothogymnomitrion, Nothostrepta, Notoscyphus, Nowellia, Obtusifolium, Odontolejeunea, Odontoschisma, Oleolophozia, Oxymitra, Pachyglossa, Pachyschistochila, Pallavicinia, Paracromastigum, Paraschistochila, Patarola, Pedinophyllopsis, Pedinophyllum, Pellia, Peltolepis, Perdusenia, Perssoniella, Petalophyllum, Phycolepidozia, Phyllothallia, Physiotium, Physotheca, Pisanoa, Plagiochasma, Plagiochila, Plagiochilidium, Plagiochilion, Platycaulis, Plectocolea, Pleuranthe, Pleuroclada, Pleurocladopsis, Pleurocladula, Pleurozia, Podanthe, Podomitrium, Porella, Prasanthus, Preissia, Prionolobus, Protolophozia, Protomarsupella, Protosyzgiella, Protosyzygiella, Pseudocephalozia, Pseudocephaloziella, Pseudolophocolea, Pseudolophozia, Pseudomarsupidium, Pseudoneura, Pseudotritomaria, Psiloclada, Pteropsiella, Ptilidium, Radula, Reboulia, Rhizocaulia, Rhodoplagiochila, Riccardia, Riccia, Ricciella, Ricciocarpos, Riella, Roivainenia, Ruizanthus, Ruttnerella, Saccobasis, Saccogyna, Sandeothallus, Sarcocyphos, Sarcomitrium, Sauteria, Scapania, Scaphophyllum, Schiffneria, Schisma, Schistochila, Schistochilaster, Schistochilopsis, Schofieldia, Sendtnera, Seppeltia, Sewardiella, Simodon, Solenostoma, Southbya, Sphaerocarpos, Sphagnoecetis, Sprucella, Steereella, Steereocolea, Stenorrhipis, Stephandium, Stephaniella, Stephaniellidium, Stephensoniella, Symphyogyna, Symphyogynopsis, Symphyomitra, Synhymenium, Syzygiella, Taeniolejeunea, Targionia, Tegulifolium, Telaranea, Thallocarpus, Treubia, Triandrophyllum, Trichocolea, Trichocoleopsis, Trichostylium, Trichotemnoma, Trilophozia, Tritomaria, Tylimanthus, Vanaea, Vandiemenia, Verdoornia, Vetaforma, Wettsteinia, Wiesnerella, Xenochila, Xenothallus, Zoopsidella, Zoopsis.*

Gemäß einer weiteren bevorzugten Ausführungsform des erfindungsgemäßen Verfahrens handelt es sich bei der, einer, mehreren oder sämtlichen Pflanzen um ein oder mehrere Laubmoos(e) ausgewählt aus der Gruppe bestehend aus den Gattungen: *Abietinella, Acanthocladiella, Acanthocladium, Acanthodium, Acanthorrhynchium, Acaulon, Acaulonopsis, Achrophyllum, Acidodontium, Acrocladium, Acroporium, Acroschisma, Actinodontium, Actinothuidium, Adelothecium, Aequatoriella, Aerobryidium, Aerobryopsis, Aerobryum, Aerolindigia, Algaria, Aligrimmia, Alleniella, Allioniellopsis, Aloina, Aloinella, Alophosia, Alsia, Amblyodon, Amblyodum, Amblystegiella, Amblystegium, Amblytropis, Ambuchanania, Amphidium, Amphoridium, Amphoritheca, Anacalypta, Anacamptodon, Anacolia, Ancistrodes, Andoa, Andreaea, Andreaeobryum, Anictangium, Anisothecium, Anodon, Anodontium, Anoectangium, Anomobryum, Anomodon, Antitrichia, Aongstroemia, Aongstroemiopsis, Apalodium, Aphanorrhegma, Apiocarpa, Aplodon, Apterygium, Aptychella, Aptychopsis, Aptychus, Arbuscula, Arbusculohypopterygium, Archephemeropsis, Archidium, Arctoa, Argyrobryum, Arthrocormus, Aschisma, Aschistodon, Asteriscium, Astomiopsis, Astomum, Astrodontium, Astrophyllum, Atractylocarpus,*

*Atrichopsis, Atrichum, Aulacomitrium, Aulacomnium, Aulacopilum, Austinella, Austrohondaella, Austrophilibertiella, Baldwiniella, Barbella, Barbellopsis, Barbula, Bartramia, Bartramiopsis, Beeveria, Bellibarbula, Benitotania, Bestia, Bissetia, Blindia, Boulaya, Brachelyma, Brachydontium, Brachymenium, Brachymitrion, Brachyodus, Brachysteleum, Brachytheciastrum, Brachytheciella, Brachythecium, Brachytrichum, Braithwaitea, Braunfelsia, Braunia, Breidieria, Breutelia, Brothera, Brotherella, Brotherobryum, Bruchia, Bryhnia, Brymela, Bryoandersonia, Bryobeckettia, Bryobrittonia, Bryobrothera, Bryoceuthospora, Bryochenea, Bryocrumia, Bryodixonia, Bryodusenia, Bryoerythrophyllum, Bryohaplocladium, Bryohumbertia, Bryomaltaea, Bryomanginia, Bryomnium, Bryonoguchia, Bryonorrisia, Bryophixia, Bryosedgwickia, Bryostreimannia, Bryotestua, Bryum, Buckiella, Bucklandiella, Burnettia, Buxbaumia, Callialaria, Callicladium, Callicosta, Callicostella, Callicostellopsis, Calliergidium, Calliergon, Calohypnum, Calymperastrum, Calymperes, Calymperidium, Calymperopsis, Calyptopogon, Calyptothecium, Calyptrochaeta, Camptochaete, Camptodontium, Camptothecium, Campyliadelphus, Campylidium, Campylium, Campylodontium, Campylophyllum, Campylopodiella, Campylopodium, Campylopus, Campylostelium, Canalohypopterygium, Cardotia, Cardotiella, Caribaeohypnum, Catagoniopsis, Catagonium, Catharinea, Catharinella, Catharomnion, Catoscopium, Cecalyphum, Ceratodon, Ceuthospora, Ceuthotheca, Chaetomitrella, Chaetomitriopsis, Chaetomitrium, Chaetophora, Chamaebryum, Chamberlainia, Chameleion, Cheilothela, Chenia, Chileobryon, Chionoloma, Chionostomum, Chorisodontium, Chryso-hypnum, Chrysoblastella, Chrysocladium, Chrysohypnum, Cinclidium, Circulifolium, Cirriphyllum, Cladastomum, Cladomnion, Cladophascum, Cladopodanthus, Cladopodanthus, Claopodium, Clasmatodon, Clastobryella, Clastobryophilum, Clastobryopsis, Clastobryum, Clavitheca, Cleistocarpidium, Cleistostoma, Climacium, Cnestrum, Codonoblepharon, Codonoblepharum, Codriophorus, Coelidium, Coleochaetium, Colobodontium, Conardia, Conomitrium, Conostomum, Coscinodon, Coscinodontella, Costesia, Craspedophyllum, Cratoneurella, Cratoneuron, Cratoneuropsis, Crosbya, Crossidium, Crossomitrium, Crumia, Crumuscus, Cryhphaea, Cryphaeadelphus, Cryptocarpon, Cryptodicranum, Cryptogonium, Cryptoleptodon, Cryptopapillaria, Cryptopodia, Cryptopodium, Cryptotheca, Ctenidiadelphus, Ctenidium, Ctenium, Cupressina, Curvicladium, Curviramea, Cyathophorella, Cyathophorum, Cyclodictyon, Cygniella, Cylicocarpus, Cynodon, Cynodontiella, Cynodontium, Cynontodium, Cyrto-hypnum, Cyrtomnium, Cyrtopodendron, Daltonia, Dasymitrium, Dawsonia, Dendro-hypnum, Dendroalsia, Dendrocyathophorum, Dendrohypopterygium, Dendroligotrichum, Dermatodon, Desmatodon, Desmotheca, Dialytrichia, Diaphanophyllum, Dichelodontium, Dichelyma, Dichodontium, Dicladiella, Dicnemoloma, Dicranella, Dicranodon, Dicranodontium, Dicranoloma, Dicranoweisia, Dicranum, Didymodon, Dimerodontium, Dimorphocladon, Diobelon, Diobelonella, Diphascum, Diphyscium, Diplocomium, Diploneuron, Diplostichum, Discelium, Discophyllum, Dissodon, Distichia, Distichium, Distichophyllidium, Distichophyllum, Ditrichopsis, Ditrichum, Dixonia, Dolichomitra, Dolichomitriopsis, Dolotortula, Donnellia, Donrichardsia, Dorcadion, Dozya, Drepanium, Drepano-hypnum, Drepanocladus, Drepanophyllaria, Drepanophyllum, Drummondia, Dryptodon, Dusenia, Duthiella, Eccremidium, Echinodiopsis, Echinodium, Echinophyllum, Ectropotheciella, Ectropotheciopsis, Ectropothecium, Eleutera, Elharveya, Elmeriobryum, Elodium, Encalypta, Endotrichella, Endotrichellopsis, Endotrichum, Entodon, Entosthodon, Entosthymenium, Eobruchia, Eohypopterygiopsis, Eoleucodon, Eosphagnum, Ephemerella, Ephemeridium, Ephemeropsis, Ephemerum, Epipterygium, Eremodon, Eriodon, Eriopus, Erpodium, Erythrobarbula, Erythrodontium, Erythrophyllastrum, Erythrophyllopsis, Erythrophyllum, Esenbeckia, Eucamptodontopsis, Eucatagonium, Eucladium, Euephemerum, Eumyurium, Euptychium, Eurhynchiadelphus, Eurhynchiastrum, Eurhynchiella, Eurhynchium, Eurohypnum, Eustichia, Euzygodon, Exodictyon, Exostratum, Exsertotheca, Fabroleskea, Fabronialschyrodon, Fabronidium, Fallaciella, Fauriella, Felipponea, Fiedleria, Fifealsotheciadelphus, Fissidens, Flabellidium, Fleischerobryum, Floribundaria, Florschuetziella, Flowersia, Fontinalis, Foreauella, Forsstroemia, Frahmiella, Funaria, Funariella, Gammiella, Ganguleea, Garckea, Garovaglia, Gasterogrimmia, Geheebia, Gemmabryum, Georgia, Gertrudia, Gertrudiella, Gigaspermum, Giraldiella, Globulina, Globulinella, Glossadelphus, Glyphomitrium, Glyphomitrium, Glyphothecium, Glyptothecium, Gollania, Gongronia, Goniobryum, Goniomitrium, Gradsteinia, Grimmia, Groutiella, Guembelia, Guerramontesia, Gymnostomiella, Gymnostomum, Gyroweisia, Habrodon, Habrodonlshibaealwatsukiella, Hageniella, Hamatocaulis, Hampeella, Hampeohypnum, Handeliobryum, Haplocladium, Haplodon, Haplodontium, Haplohymenium, Haptymenium, Harpidium, Harpophyllum, Harrisonia, Harveya, Hebantialtatiella, Hedenaesia, Hedenasiastrum, Hedwigia, Hedwigidium, Helicoblepharum, Helicodontiadelphus, Helicodontium, Heliconema, Helicophyllum, Helodium, Hemiragis, Henicodium, Hennediella, Herpetineuron, Herzogiella, Heterocladium, Heterodon, Heterophyllium, Hildebrandtiella, Hilpertia, Himantocladium, Holoblepharum, Holodontium, Holomitriopsis, Holomitrium, Homalia, Homaliadelphus, Homaliodendron, Homaliopsis, Homalotheciella, Homalothecium, Homomallium, Hondaella, Hookeria, Hookeriopsis, Horikawaea, Horridohypnum, Husnotiella, Hyalophyllum, Hydrocryphaealsodrepanium, Hydrogonium, Hydropogon, Hydropogonella, Hygroamblystegium, Hygrodicranum, Hygrohypnella, Hygrohypnum, Hylocomiadelphus, Hylocomiastrum, Hylocomiopsis, Hylocomium, Hymenodon, Hymenodontopsis, Hymenoloma, Hymenostomum, Hymenostyliella, Hymenostylium, Hyocomium, Hyophila, Hyophiladelphus, Hyophilopsis, Hypnella, Hypnites, Hypnobartlettia, Hypnodendron, Hypnum, Hypodontium, Hypopterygium, Imbribryum, Indopottia, Indothuidium, Indusiella, Inouethuidium, Isopterygiopsis, Isopterygium, Isotheciopsis, Isothecium, Jaegerina, Jaegerinopsis, Jaffueliobryum, Juratzkaeella, Kiaeria, Kindbergia, Kingiobryum, Kleioweisiopsis, Koponenia, Kurohimehypnum, Lamprophyllum, Leersia, Leiodontium, Leiomela, Leiomitrium, Leiotheca, Lembophyllum, Lepidopilidium, Lepidopilum, Leptangium, Leptobarbula, Leptobryum, Leptocladiella, Leptocladium, Leptodictyum, Leptodontiella, Lepto-*

*dontiopsis, Leptodontium, Leptohymenium, Leptophascum, Leptopterigynandrum, Leptostomopsis, Leptostomum, Leptotheca, Leptotrichella, Leptotrichum, Lepyrodon, Lepyrodontopsis, Leratia, Leratiella, Lescuraea, Leskea, Leskeadelphus, Leskeella, Leskeodon, Leskeodontopsis, Lesquereuxia, Leucobryum, Leucodon, Leucodontella, Leucolepis, Leucoloma, Leucomium, Leucoperichaetium, Leucophanella, Leucophanes, Levierella, Limbella, Limnobium, Limprichtia, Lindbergia, Lindigia, Loeskeobryum, Loeskypnum, Loiseaubryum, Looseria, Lophiodon, Lopidium, Lorentzia, Lorentziella, Loxotis, Ludorugbya, Luisierella, Lyellia, Macgregorella, Macouniella, Macrocoma, Macrodictyum, Macrohymenium, Macromitrium, Macrosporiella, Macrothamniella, Macrothamnium, Mamillariella, Mandoniella, Maschalanthus, Maschalocarpus, Mastopoma, Matteria, Meesia, Meiotheciella, Meiotheciopsis, Meiothecium, Meiotrichum, Merceya, Merceyopsis, Mesochaete, Mesonodon, Mesotus, Metadistichophyllum, Metaneckera, Meteoridium, Meteoriella, Meteoriopsis, Meteorium, Metzlerella, Metzleria, Micralsopsis, Microbryum, Microcampylopus, Microcrossidium, Microctenidium, Microdus, Microeurhynchium, Micromitrium, Micropoma, Microthamnium, Microtheciella, Microthuidium, Miehea, Mielichhoferia, Mildea, Mildeella, Mironia, Mitrobryum, Mittenia, Mittenothamnium, Mitthyridium, Miyabea, Mniadelphus, Mniobryum, Mniodendron, Mniomalia, Mnium, Moenkemeyera, Molendoa, Mollia, Morinia, Moseniella, Muelleriella, Muellerobryum, Muscoflorschuetzia, Muscoherzogia, Myrinia, Myurella, Myuriopsis, Myurium, Myuroclada, Nanobryum, Nanomitriopsis, Nanomitrium, Neckera, Neckeradelphus, Neckerites, Neckeropsis, Nematocladia, Neobarbella, Neocardotia, Neodicladiella, Neodolichomitra, Neohyophila, Neolescuraea, Neolindbergia, Neomacounia, Neomeesia, Neonoguchia, Neophoenix, Neorutenbergia, Neosharpiella, Niphotrichum, Nobregaea, Nogopterium, Noguchiodendron, Notoligotrichum, Ochiobryum, Ochrobryum, Ochyraea, Octodiceras, Oedicladium, Oedipodiella, Oedipodium, Okamuraea, Oligotrichum, Oncophorus, Oreas, Oreoweisia, Orontobryum, Orthoamblystegium, Orthodicranum, Orthodon, Orthodontium, Orthodontopsis, Orthogrimmia, Orthomitrium, Orthomnion, Orthomniopsis, Orthopus, Orthopyxis, Orthorrhynchidium, Orthorrhynchium, Orthostichella, Orthostichidium, Orthostichopsis, Orthotheciella, Orthothecium, Orthothecium, Orthothuidium, Orthotrichum, Osterwaldiella, Oticodium, Oxyrrhynchium, Oxystegus, Pachyneuropsis, Pachyneurum, Palaeocampylopus, Palamocladium, Palisadula, Paludella, Palustriella, Panckowia, Pancovia, Papillaria, Papillidiopsis, Paraleucobryum, Paramyurium, Pararhacocarpus, Parisia, Pelekium, Pendulothecium, Pentastichella, Penzigiella, Peromnion, Pharomitrium, Phasconica, Phascopsis, Phascum, Philibertiella, Philonotis, Philophyllum, Photinophyllum, Phyllodon, Phyllodrepanium, Phyllogonium, Physcomitrella, Physcomitrium, Physedium, Picobryum, Pictus, Piloecium, Pilopogon, Pilopogonella, Piloseriopus, Pilotrichella, Pilotrichidium, Pilotrichum, Pinnatella, Pirea, Pireella, Plagiobryoides, Plagiobryum, Plagiomnium, Plagiopus, Plagioracelopus, Plagiothecium, Plasteurhynchium, Platydictya, Platygyriella, Platygyrium, Platyhypnidium, Platyhypnum, Platyloma, Platylomella, Platyneuron, Plaubelia, Pleuriditrichum, Pleuridium, Pleurochaete, Pleurophascum, Pleuropus, Pleurorthotrichum, Pleuroweisia, Pleurozium, Pleurozygodon, Pocsiella, Podperaea, Poecilophyllum, Pogonatum, Pohlia, Polla, Polymerodon, Polypodiopsis, Polytrichadelphus, Polytrichastrum, Polytrichites, Polytrichum, Porothamnium, Porotrichella, Porotrichodendron, Porotrichopsis, Porotrichum, Potamium, Pottia, Pottiopsis, Powellia, Powelliopsis, Pringleella, Prionidium, Prionodon, Pseudatrichum, Pseudephemerum, Pseudisothecium, Pseudoamblystegium, Pseudobarbella, Pseudobraunia, Pseudobryum, Pseudocalliergon, Pseudocampylium, Pseudochorisodontium, Pseudocrossidium, Pseudodimerodontium, Pseudodistichium, Pseudoditrichum, Pseudohygrohypnum, Pseudohyophila, Pseudohypnella, Pseudoleskea, Pseudoleskeella, Pseudoleskeopsis, Pseudopiloecium, Pseudopilotrichum, Pseudopleuropus, Pseudopohlia, Pseudopterobryum, Pseudoracelopus, Pseudorhynchostegiella, Pseudoscleropodium, Pseudosymblepharis, Pseudotimmiella, Pseudotrismegistia, Psilopilum, Pterigynandrum, Pterobryella, Pterobryidium, Pterobryon, Pterobryopsis, Pterogoniadelphus, Pterogonidium, Pterogoniella, Pterogonium, Pterygoneurum, Pterygophyllum, Ptilium, Ptychodium, Ptychomitriopsis, Ptychomitrium, Ptychomniella, Ptychomnion, Ptychostomum, Puiggaria, Puiggariella, Puiggariopsis, Pulchrinodus, Pungentella, Pursellia, Pylaisia, Pylaisiadelpha, Pylaisiella, Pylaisiobryum, Pyramidula, Pyramitrium, Pyromitrium, Pyrrhobryum, Quaesticula, Racelopodopsis, Racelopus, Racomitrium, Racopilum, Radulina, Raineria, Rauia, Rauiella, Regmatodon, Reimersia, Remyella, Renauldia, Rhabdodontium, Rhabdoweisia, Rhacocarpus, Rhacopilopsis, Rhamphidium, Rhaphidorrhynchium, Rhaphidostegium, Rhaphidostichum, Rhexophyllum, Rhizofabronia, Rhizogonium, Rhizohypnum, Rhizomnium, Rhizopelma, Rhodobryum, Rhyncho-hypnum, Rhynchostegiella, Rhynchostegiopsis, Rhynchostegium, Rhystophyllum, Rhytidiadelphus, Rhytidiastrum, Rhytidiopsis, Rhytidium, Richardsiopsis, Rigodiadelphus, Roellia, Rosulabryum, Rottleria, Rutenbergia, Saelania, Sagenotortula, Sainthelenia, Saitoa, Saitobryum, Saitoella, Sanionia, Saproma, Sarconeurum, Sarmentypnum, Sasaokaea, Sauloma, Scabridens, Schimperella, Schimperobryum, Schistidium, Schistomitrium, Schistophyllum, Schistostega, Schizomitrium, Schizymenium, Schliephackea, Schlotheimia, Schraderobryum, Schwetschkea, Schwetschkeopsis, Sciadocladus, Sciaromiella, Sciaromiopsis, Sciaromium, Sciuro-hypnum, Sclerodontium, Sclerohypnum, Scleropodiopsis, Scleropodium, Scopelophila, Scorpidium, Scorpiurium, Scouleria, Scytalina, Sebillea, Sehnemobryum, Sekra, Seligeria, Sematophyllites, Sematophyllum, Semibarbula, Serpoleskea, Serpotortella, Sharpiella, Shevockia, Sigmatella, Simophyllum, Simplicidens, Sinocalliergon, Sinskea, Skitophyllum, Skottsbergia, Solmsia, Solmsiella, Sorapilla, Sphaerangium, Sphaerocephalus, Sphaerothecium, Sphagnum, Spiridentopsis, Spirula, Splachnum, Sporledera, Spruceella, Squamidium, Stableria, Steerecleus, Steereobryon, Stegonia, Stellariomnium, Stenocarpidiopsis, Stenodesmus, Stenodictyon, Stenotheciopsis, Stenothecium, Steppomitra, Stereodon, Stereodontopsis, Stereohypnum, Steyermarkiella, Stokesiella, Stonea, Stoneobryum, Straminergon, Straminergon, Streblo-*

*pilum, Streblotrichum, Streimannia, Strephedium, Streptocalypta, Streptocolea, Streptopogon, Streptotrichum, Stroemia, Strombulidens, Struckia, Struckia, Stylocomium, Swartzia, Symblepharis, Symphyodon, Symphysodon, Symphysodontella, Syntrichia, Syrrhopodon, Systegium, Taiwanobryum, Takakia, Tamariscella, Taxicaulis, Taxiphyllum, Taxithelium, Tayloria, Teichodontium, Teniolophora, Teretidens, Terrestria, Tetracoscinodon, Tetraphidopsis, Tetraphis, Tetraplodon, Tetrapterum, Tetrastichium, Tetrodontium, Thamniella, Thamniopsis, Thamnium, Thamnobryum, Thamnomalia, Thelia, Thiemea, Thuidiopsis, Thuidium, Thyridium, Thysanomitrion, Timmia, Timmiella, Timokoponenia, Toloxis, Tomentypnum, Tortella, Tortula, Touwia, Touwiodendron, Trachybryum, Trachycarpidium, Trachycladiella, Trachycystis, Trachyloma, Trachymitrium, Trachyodontium, Trachyphyllum, Trachythecium, Trachyxiphium, Trematodum, Trichodon, Trichodontium, Tricholepis, Trichosteleum, Trichostomopsis, Trichostomum, Tridontium, Trigonodictyon, Tripterocladium, Triquetrella, Trismegistia, Tristichium, Tuerckheimia, Uleastrum, Uleobryum, Ulota, Unclejackia, Valdonia, Venturiella, Verrucidens, Vesicularia, Vesiculariopsis, Vetiplanaxis, Viridivellus, Vittia, Voitia, Vrolijkheidia, Warburgiella, Wardia, Warnstorfia, Webera, Weisiodon, Weisiopsis, Weissia, Weissiodicranum, Werneriobryum, Weymouthia, Wijkia, Wildia, Willia, Wilsoniella, Yunnanobryon, Zelometeorium, Zygodon, Zygotrichia.*

Gemäß einer weiteren bevorzugten Ausführungsform des erfindungsgemäßen Verfahrens handelt es sich bei der, einer, mehreren oder sämtlichen Pflanzen um ein oder mehrere Hornmoos(e) ausgewählt aus der Gruppe bestehend aus den Gattungen: *Anthoceros, Dendroceros, Folioceros, Hattorioceros, Leiosporoceros, Megaceros, Mesoceros, Nothoceros, Notothylas, Paraphymatoceros, Phaeoceros, Phaeomegaceros, Phymatoceros, Sphaerosporoceros.*

Weiter bevorzugt ist ein Verfahren wie vorangehend beschrieben, wobei die Mischung in flüssiger Form, als Gel, Paste oder als Pulver vorliegt (vgl. oben).

Die in Schritt (b) des erfindungsgemäßen Verfahrens bereitgestellte Mischung kann demnach in Form von einer Mischung, vorzugsweise in Pulverform, oder in Form von zwei, drei, vier oder mehr getrennt voneinander vorliegenden flüssigen und / oder gelartigen und / oder pastösen und / oder pulverförmigen Vor-Mischungen vorliegen, die vor oder während des Auftragens oder Einbringens auf / in das zu behandelnde Substrat in Schritt (c) miteinander vermischt werden.

Vorteilhafterweise ist eine einmalige Durchführung der Schritte (b) bis (d) des erfindungsgemäßen Verfahrens in der Regel ausreichend, um eine zufriedenstellende Unkrautunterdrückung zu gewährleisten.

Gemäß einer weiteren Ausführungsform können die Schritte (b) bis (d) bzw. (b) und (c) bei Bedarf jedoch einmal, zweimal, dreimal oder mehr wiederholt werden, um eine besonders effektive Biozementierung des zu behandelnden Substrats, und damit eine besonders effektive Unkrautunterdrückung, zu gewährleisten.

Optional können gemäß einer weiteren Ausführungsform vor dem Auftragen oder Einbringen der in Schritt (b) bereitgestellten Mischung auf / in das zu behandelnde Substrat (wie in Schritt (a) des erfindungsgemäßen Verfahrens identifiziert) ein oder mehrere weitere Verfahrensschritte erfolgen, wie beispielsweise das Abflammen von Pflanzen, vorzugsweise Unkräutern, die sich auf / in dem Substrat befinden, das manuelle Entfernen (Jäten) von Pflanzen, vorzugsweise Unkräutern, die sich auf / in dem Substrat befinden, und / oder die Behandlung der Pflanzen, vorzugsweise Unkräuter, die sich auf / in dem Substrat befinden, mit chemischen Unkrautbekämpfungsmitteln. Diese vorgelagerten Schritte können ebenfalls jeweils einmal, zweimal, dreimal oder mehr wiederholt werden.

Eine bevorzugte Ausführungsform bezieht sich auf ein Verfahren wie hierin beschrieben, wobei das Ausbilden einer Biozement-Schicht in Schritt (d) des Verfahrens keine exotherme Reaktion (wie hierin definiert) umfasst.

Gemäß einer bevorzugten Ausführungsform des erfindungsgemäßen Verfahrens ist ein Schritt des Entfernens des in Schritt (a) identifizierten Substrats, auf / in dem ein Pflanzenwachstum, vorzugsweise ein Wachstum von Unkraut, verhindert oder reduziert werden soll, nicht zum Verhindern oder Reduzieren von Pflanzenwachstum notwendig und damit vorzugsweise nicht Bestandteil eines erfindungsgemäßen Verfahrens, insbesondere da gerade eine Verfestigung und / oder Verhärtung des Substrats während des Ausbildens der Biozement-Schicht in Schritt (d) des Verfahrens das Verhindern oder Reduzieren von Pflanzenwachstum, vorzugsweise des Wachstums von Unkraut, bewirkt.

Des Weiteren ist im Rahmen des erfindungsgemäßen Verfahrens wie hierin beschrieben vorteilhafterweise kein Schritt der Kompaktierung des Substrats, auf / in welchem das Pflanzenwachstum reduziert oder verhindert werden soll, bzw. der ausgebildeten Biozement-Schicht notwendig, um ein Verhindern oder Reduzieren von Pflanzenwachstum, vorzugsweise des Wachstums von Unkraut, zu erreichen, und damit vorzugsweise nicht Bestandteil eines erfindungsgemäßen Verfahrens.

Das hierin für eine erfindungsgemäße Verwendung Gesagte gilt ebenso für ein hierin beschriebenes erfindungsgemäßes Verfahren und *vice versa.* Dies gilt insbesondere für (bevorzugte) Ausführungsformen der erfindungsgemäßen Verwendung, die (bevorzugten) Ausführungsformen des erfindungsgemäßen Verfahrens entsprechen oder von diesen abgeleitet werden können und umgekehrt.

Nachfolgend wird die Erfindung anhand von ausgewählten Beispielen näher erläutert. Sofern nicht anders angegeben, beziehen sich alle Angaben auf das Gewicht.

Abbildungen:

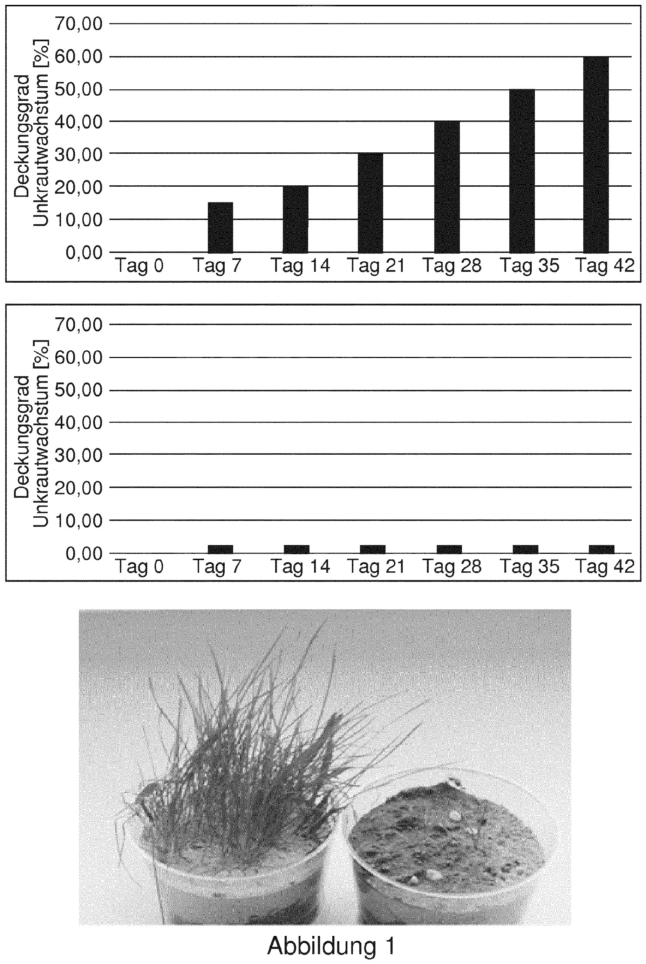

**Abbildung 1:** Unterdrückung von Unkrautwachstum durch nicht-ureolytische Biozementierung mit Hilfe des Bakterienstammes *B. pseudofirmus*: Wirkung gegen Monokotyle (Einjähriges Rispengras) und Dikotyle (Spitzwegerich). Mittlere Deckungsgrade des Unkrautwachstums im Dokumentationszeitraum von 42 Tagen bei wöchentlicher Kontrolle der Kontrolle (oben) gegenüber der mit der Biozementierungsmischung 1 behandelten Probe (Mitte). Visuelle Darstellung (unten) des Unkrautwachstums in der Kontrollapplikation (unten links) im Vergleich zur Behandlung mit Biozementierungsmischung 1 (unten rechts) nach 42 Tagen Wachstum.

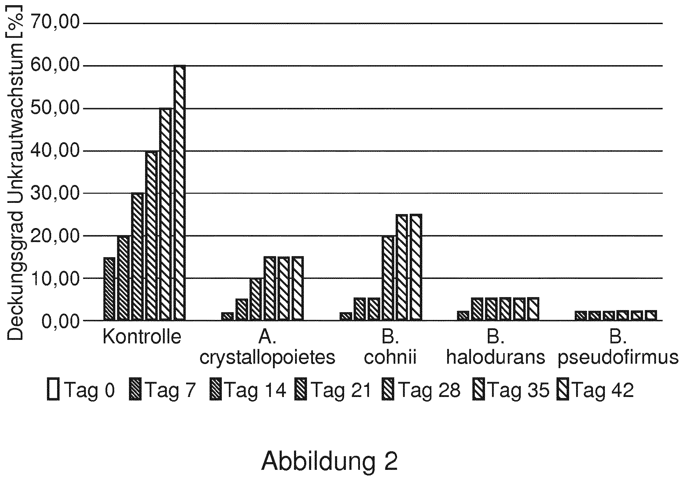

**Abbildung 2:** Unterdrückung von Unkrautwachstum durch nicht-ureolytische Biozementierung mit Hilfe der Bakterienstämme *A. crystallopoietes, B. cohnii, B. halodurans,* und *B. pseudofirmus*: Wirkung gegen Monokotyle (Einjähriges Rispengras) und Dikotyle (Spitzwegerich). Mittlere Deckungsgrade des Unkrautwachstums im Dokumentationszeitraum von 42 Tagen bei wöchentlicher Messung der Kontrolle gegenüber der mit der Biozementierungsmischung 1 behandelten Proben.

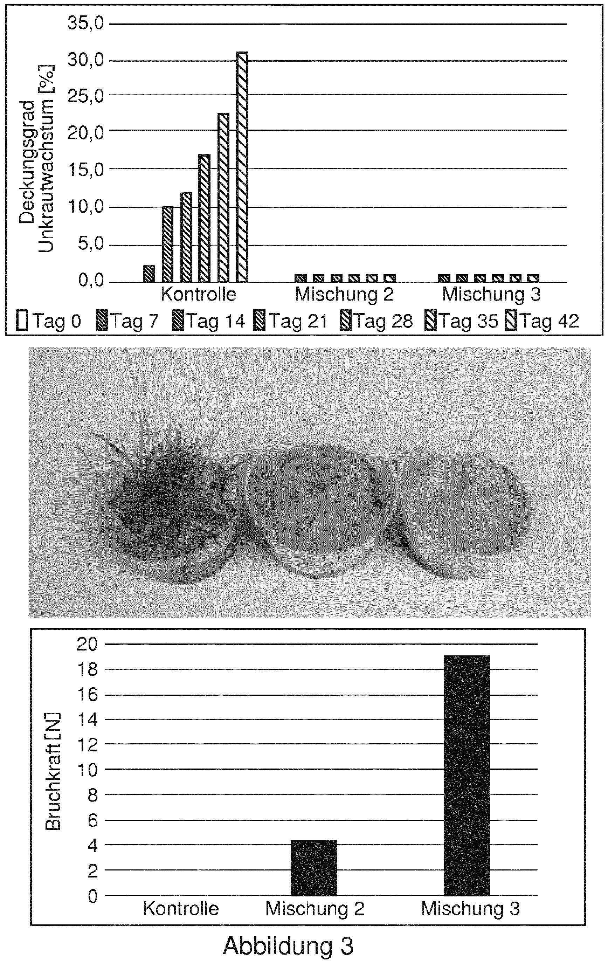

**Abbildung 3:** Anwendung der ureolytischen Biozementierung mit *L. sphaericus* zur Unterdrückung von Unkrautwachstum in Quarzsand: Wirkung gegen monokotyle (Einjähriges Rispengras) und dikotyle (Spitzwegerich) Unkräuter. Mittlere Deckungsgrade des Unkrautwachstums (oben) im Dokumentationszeitraum von 42 Tagen bei wöchentlicher Bonitur von Kontrolle gegenüber Biozementierungsmischung 2 und Biozementierungsmischung 3. Visuelle Darstellung (Mitte) des Unkrautwachstums in der Kontrollapplikation (Mitte links) im Vergleich zur Behandlung mit Biozementierungsmischung 2 (Mitte Mitte) und Biozementierungsmischung 3 (Mitte rechts) nach 42 Tagen Wachstum im Labor. Grafische Darstellung der Verfestigung der Biozementierungsschichten (unten) durch Untersuchung der mittleren Bruchkraft der Proben.

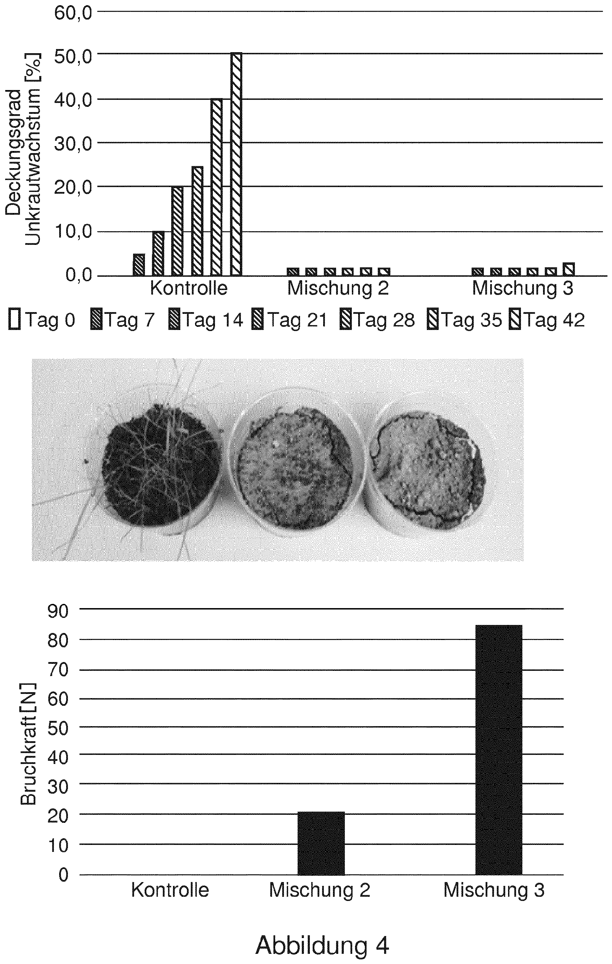

**Abbildung 4:** Anwendung der ureolytischen Biozementierung mit *L. sphaericus* zur Unterdrückung von Unkrautwachstum in Landerde: Wirkung gegen monokotyle (Einjähriges Rispengras) und dikotyle (Spitzwegerich) Unkräuter. Mittlere Deckungsgrade des Unkrautwachstums (oben) im Dokumentationszeitraum von 42 Tagen bei wöchentlicher Bonitur von Kontrolle gegenüber Biozementierungsmischung 2 und Biozementierungsmischung 3. Visuelle Darstellung (Mitte) des Unkrautwachstums in der Kontrollapplikation (Mitte links) im Vergleich zur Behandlung mit Biozementierungsmischung 2 (Mitte Mitte) und Biozementierungsmischung 3 (Mitte rechts) nach 42 Tagen Wachstum im Labor. Grafische Darstellung der Verfestigung der Biozementierungsschichten (unten) durch Untersuchung der mittleren Bruchkraft der Proben.

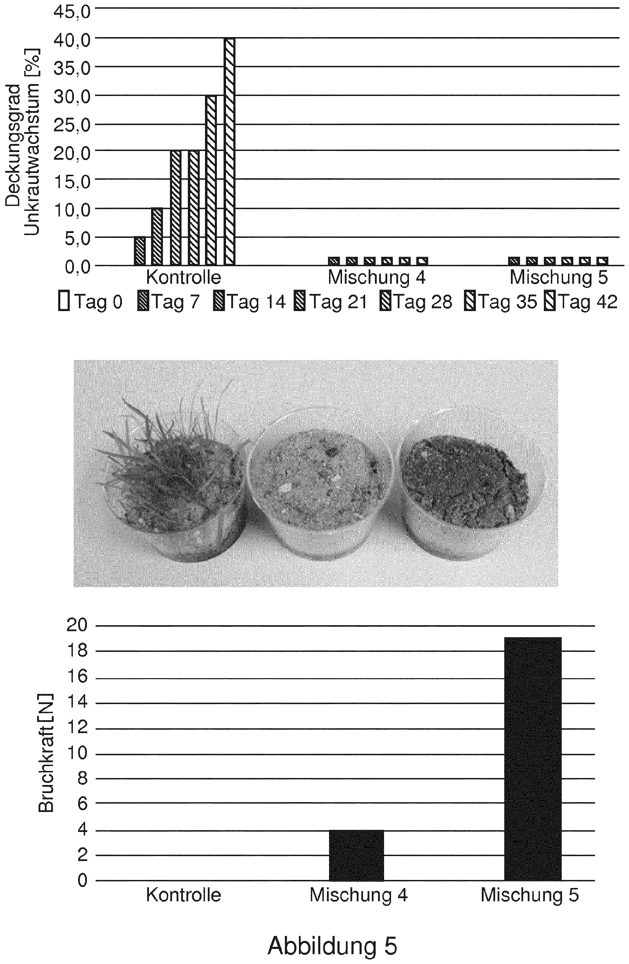

**Abbildung 5:** Anwendung der ureolytischen Biozementierung mit *Sp. pasteurii* zur Unterdrückung von Unkrautwachstum in Quarzsand: Wirkung gegen monokotyle (Einjähriges Rispengras) und dikotyle (Spitzwegerich) Unkräuter. Mittlere Deckungsgrade des Unkrautwachstums (oben) im Dokumentationszeitraum von 42 Tagen bei wöchentlicher Bonitur von Kontrolle gegenüber Biozementierungsmischung 4 und Biozementierungsmischung 5. Visuelle Darstellung (Mitte) des Unkrautwachstums in der Kontrollapplikation (Mitte links) im Vergleich zur Behandlung mit Biozementierungsmischung 4 (Mitte Mitte) und Biozementierungsmischung 5 (Mitte rechts) nach 42 Tagen Wachstum im Labor. Grafische Darstellung der Verfestigung der Biozementierungsschichten (unten) durch Untersuchung der mittleren Bruchkraft der Proben.

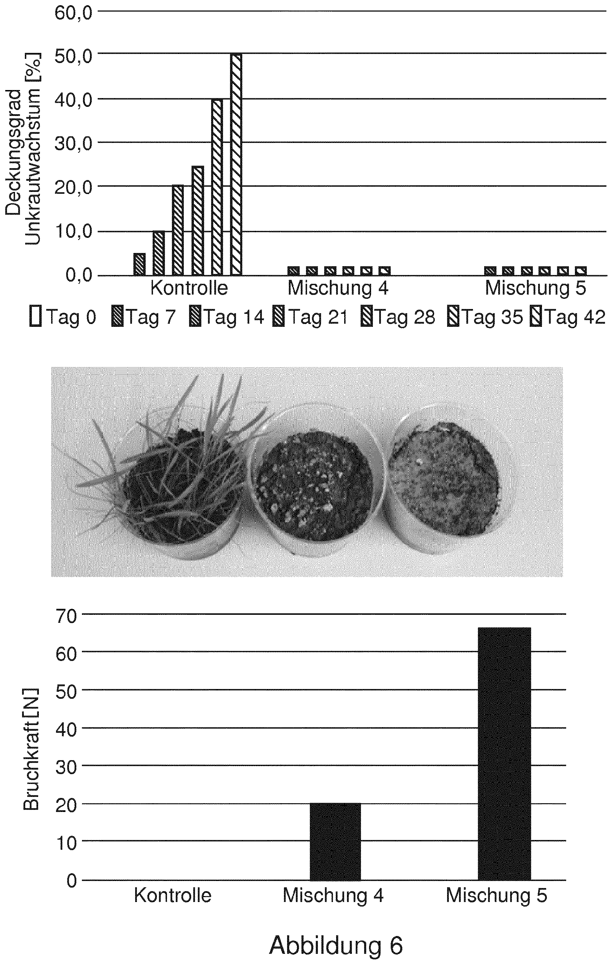

**Abbildung 6:** Anwendung der ureolytischen Biozementierung mit *Sp. pasteurii* zur Unterdrückung von Unkrautwachstum in Landerde: Wirkung gegen monokotyle (Einjähriges Rispengras) und dikotyle (Spitzwegerich) Unkräuter. Mittlere Deckungsgrade des Unkrautwachstums (oben) im Dokumentationszeitraum von 42 Tagen bei wöchentlicher Bonitur von Kontrolle gegenüber Biozementierungsmischung 4 und Biozementierungsmischung 5. Visuelle Darstellung (Mitte) des Unkrautwachstums in der Kontrollapplikation (Mitte links) im Vergleich zur Behandlung mit Biozementierungsmischung 4 (Mitte Mitte) und Biozementierungsmischung 5 (Mitte rechts) nach 42 Tagen Wachstum im Labor. Grafische Darstellung der Verfestigung der Biozementierungsschichten (unten) durch Untersuchung der mittleren Bruchkraft der Proben.

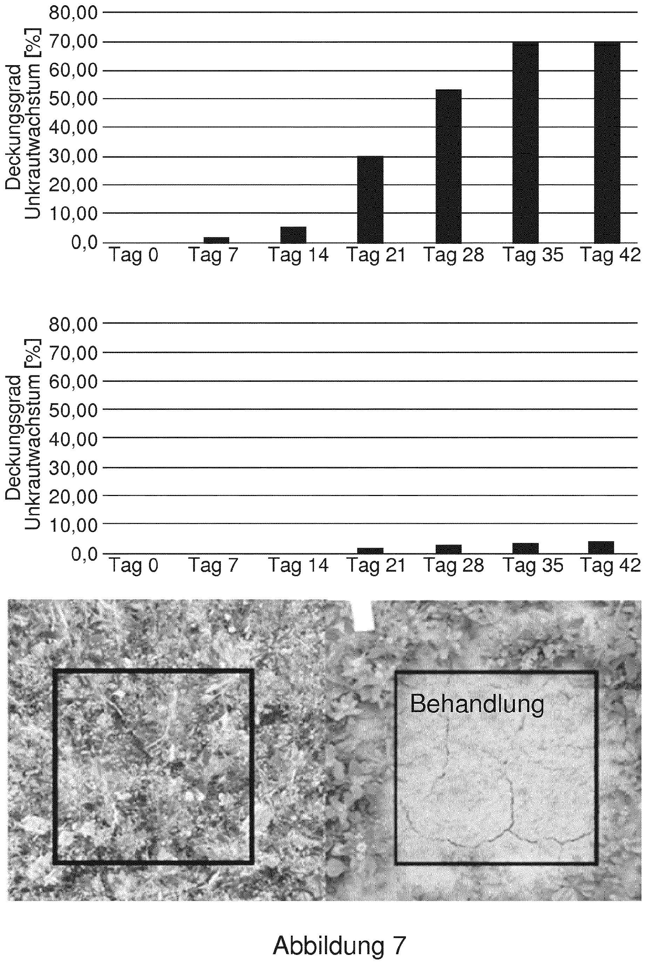

**Abbildung 7:** Anwendung der Biozementierung zur Unterdrückung von Unkrautwachstum im Freiland: Wirkung gegen nicht gekeimte und frisch gekeimte Unkräuter auf landwirtschaftlichen Nutzflächen. Mittlere Deckungsgrade der Wasserkontrolle (oben) im Vergleich zur mit Biozementierungsmischung 6 behandelten Fläche (Mitte) im Dokumentationszeitraum von 42 Tagen bei wöchentlicher Bonitur. Visuelle Darstellung des Unkrautwachstums in der Kontrollapplikation (unten links) im Vergleich zur Behandlung mit Biozementierungsmischung 6 (unten rechts) nach 42 Tagen Wachstum im Freiland.

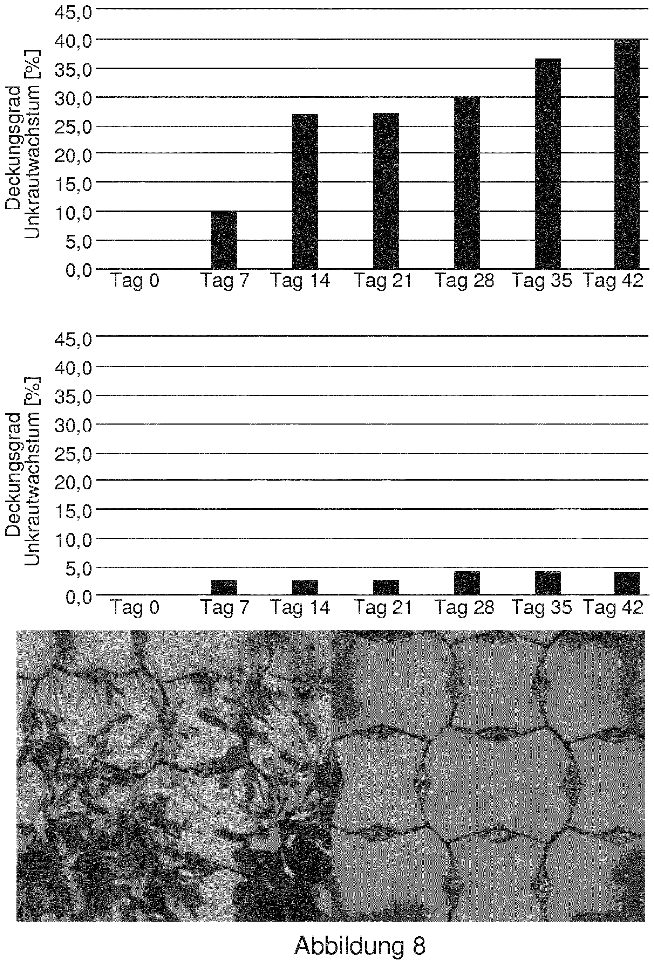

**Abbildung 8:** Anwendung der Biozementierung zur Unterdrückung von Unkrautwachstum im Freiland: Wirkung gegen nicht gekeimte und frisch gekeimte Unkräuter in Pflasterfugen. Mittlere Deckungsgrade der Wasserkontrolle (oben) im Vergleich zur mit Biozementierungsmischung 6 behandelten Fläche (Mitte) im Dokumentationszeitraum von 42 Tagen bei wöchentlicher Bonitur. Visuelle Darstellung des Unkrautwachstums in der Kontrollapplikation (unten links) im Vergleich zur Behandlung mit Biozementierungsmischung 6 (unten rechts) nach 42 Tagen Wachstum im Freiland.

Beispiele:

**Beispiel 1: Nicht-ureolvtische Biozementierung mit *B. pseudofirmus* - Unterdrückung des Wachstums von einkeimblättrigen und zweikeimblättrigen Unkräutern**

Material und Methoden:

Der Versuch wurde im Labor in Pflanzentöpfen mit einem Volumen von 450 cm$^3$ durchgeführt. Die Applikationsfläche betrug jeweils 78,5 cm$^2$. Es wurden insgesamt 6 Proben behandelt.

Das Bodensubstrat im Versuch bestand aus einen Quarzsand mit einer Körnung von 0-2 mm. Der Sand war vom Hersteller gewaschen sowie getrocknet und wurde direkt verwendet. Es wurden 300 g Quarzsand pro Pflanzentopf als Bodensubstrat verwendet.

Der Quarzsand war vor Behandlung frei von Unkrautwuchs und enthielt lediglich Reste von endemischen Unkrautsamen bzw. Zuflugsamen. Diese waren jedoch nicht ausreichend für ein effizientes Unkrautwachstum. Es wurde eine Unkrautaussaat mit jeweils 0,2 g *Plantago lanceolata* (Spitzwegerich) und 0,1 g *Poa annua* (einjähriges Rispengras) pro Gefäß vorgenommen. Hierfür wurden die Unkraut-Samen in die oberste Bodenschicht in 2-4 mm Tiefe eingearbeitet.

Es wurde eine flüssige Biozementierungsmischung 1 benutzt, welche aus den folgenden Bestandteilen in den folgenden Konzentrationen bestand:

| | | |
|---|---|---|
| 20,0 | g/l | Hefeextrakt |
| 0,2 | M | Calciumacetat |
| 0,2 | M | Calciumlactat |
| 6,0 | g/l | Harnstoff |
| 5 x 10^8 | Zellen/ml | *B. pseudofirmus* |

Des Weiteren sind in der Mischung Spurenelemente und Spuren von beispielsweise Salzen und Zuckern enthalten (<1 Gew.-%). Harnstoff diente in diesem Medium primär als Stickstoffquelle (und nicht als Carbonatquelle).

Alle Komponenten der vorliegenden Mischung, die zur Biozementierung in der Lage ist, bis auf die Bakterien des Stammes *B. pseudofirmus,* lagen in fester Form vor. Die Bakterien lagen als Flüssigkultur in einem aus dem Stand der Technik bekannten Kultivierungsmedium vor, wie beispielsweise in Jonkers H. M. et al., Tailor Made Concrete Structures - Walraven & Stoelhorst (eds), 2008, Taylor & Francis Group, London, ISBN 978-0-415-47535-8, Abschnitt 2.1, beschrieben, wobei im Rahmen der vorliegenden Erfindung 5 g/L Hefeextrakt verwendet wurden. Die festen Bestandteile und die Bakterien in Flüssigkultur wurden direkt vor Verwendung gemischt, wobei sich die festen Bestandteile auflösten.

Die Biozementierungsmischung 1 sowie eine Wasserkontrolle wurden in jeweils drei Replikaten auf die Versuchsflächen aufgebracht. Die Applikationsmenge pro Quadratmeter war durchgehend 5 Liter je Replikat. Zur Applikation wurde eine Pipette verwendet.

Nach der Applikation der Biozementierungsmischung 1 erfolgte eine Inkubation über 48 Stunden, in der keine Bewässerung stattfand. In diesem Zeitraum herrschte eine Minimaltemperatur von 14,2 °C und eine Maximaltemperatur von 25,2 °C.

Das Wachstum von Unkraut wurde über 42 Tage nach Applikation dokumentiert. Die Minimal- bzw. Maximaltemperatur lag in diesem Zeitraum bei 10,7 °C bzw. 34,0 °C. Die Gefäße wurden je nach Bedarf ein bis drei mal pro Woche gegossen. Die Pflanzentöpfe wurden einer natürlichen Beleuchtung mit Tages- und Nachtrhythmus ausgesetzt.

Die Dokumentation des Unkrautwachstums erfolgte wöchentlich. Hierbei wurde sowohl die Biozementierungsschicht (Schichtdicke, Festigkeit) als auch der sogenannte Deckungsgrad bestimmt. Die Deckungsgrade des Unkrautwuchses wurden durch manuelle visuelle Bonitur der Pflanzentöpfe zu den angegebenen Zeitpunkten ermittelt. Der Deckungsgrad beschreibt prozentual die Fläche, welche durch Unkraut bewachsen ist. Daraus wurde wiederum der Wirkungsgrad nach Abbott wie folgt berechnet:

Wirkungsgrad = (Deckungsgrad Kontrolle$_{Tag\ xy}$ - Deckungsgrad Produkt$_{Tag\ xy}$) / Deckungsgrad Kontrolle$_{Tag\ xy}$

Zur Verifizierung der Carbonatbildung wurden darüber hinaus 10 ml der Biozementierungsmischung 1 in einem Reaktionsgefäß für 24 h bei Raumtemperatur offen inkubiert. Anschließend wurde folglich das präzipitierte Pellet durch Zentrifugation und Trocknung gewonnen. Mit dem getrockneten Pellet erfolgte ein Carbonat-Nachweis nach Scheibler.

Ergebnisse:

Der Unkrautwuchs wurde im Vergleich zur Kontrolle fast vollständig reduziert (Abb. 1). Der durchschnittliche Deckungsgrad nach 42 Tagen lag auf der behandelten Fläche bei 2% (Abb. 1, Mitte) und auf der Kontrollfläche bei 60% (Abb. 1, oben). Bei Behandlung mit der oben angegebenen Biozementierungsmischung 1 wurde eine Biozementierungsschicht gebildet. Das Wachstum von Unkraut trat hauptsächlich in den Bereichen auf, in denen die Biozementierungsschicht beschädigt war (z.B. in Trocknungsrissen). Die Zeitverläufe über die 42 Tage können Abbildung 1 (oben und Mitte) entnommen werden. Im Zeitverlauf ist eine Wirkung der Biozementierung bei der Unkrautunterdrückung sichtbar. Abbildung 1 veranschaulicht den direkten Vergleich zwischen einer Kontrollprobe (unten links) und einer Applikationsprobe (unten rechts) nach 42 Tagen Wachstum. Der Wirkungsgrad des Biozementierungsproduktes lag final bei 96,7%.

Die Biozementierungsmischung ist vorteilhafterweise ähnlich effektiv wie viele marktübliche Unkrautunterdrückungsmittel (Daten nicht gezeigt), wobei diverse Nachteile solcher Unkrautunterdrückungsmittel vermieden werden können.

Die qualitative Analyse der Carbonatbildung nach Scheibler erbrachte für die Biozementierungsmischung eine positive Reaktion. Die Kontrolle wies dagegen keinerlei Carbonatbildung auf (Daten nicht gezeigt).

Vergleichbare Wirkungen auf das Unkrautwachstum wurden auch bei leicht abgewandelten Formulierungen der Biozementierungsmischung 1 erzielt, die Calciumacetat, Calciumlactat und / oder Calciumchlorid in einer Konzentration von jeweils 0,05 bis 0,3 M enthielten und eine Gesamtcalciumkonzentration in der Mischung von 0,4 M nicht überschritten (Daten nicht gezeigt). Eine Variation in der Harnstoffkonzentration (0,0 bis 0,2 M) oder bei der Hefeextraktmenge (0,1 bis 30 g/l) erbrachte ebenfalls gute Wirkungsgrade. Die Unkrautunterdrückung war jeweils abhängig von den eingesetzten Konzentrationen der Bestandteile der Biozementierungsmischung (Daten nicht gezeigt).

Der gesamte vorangehend beschriebene Versuch wurde alternativ mit Unkrautsamen durchgeführt, die vor dem Auftragen der Biozementierungsmischung bereits 24 Stunden gekeimt hatten. Hierfür erfolgte die Applikation der Biozementierungsmischung 1 24 Stunden nach Keimungsstart. Die erzielten Ergebnisse waren vergleichbar mit den im vorliegenden Beispiel beschriebenen und eine nahezu vollständige Reduktion des Unkrautwachstums durch Anwendung der Mischung wurde erzielt (Daten nicht gezeigt).

Des Weiteren wurde in der vorangehend beschriebenen Biozementierungsmischung 1 der Bakterienstamm *B. pseudofirmus* durch die gleiche Zellzahl-Konzentration an jeweils *B. cohnii, B. halodurans* oder *A. crystallopoietes* ersetzt, wobei der Versuch jeweils wie oben beschrieben durchgeführt wurde. *B. cohnii* und *B. halodurans* lagen dabei im gleichen Kultivierungsmedium wie *B. pseudofirmus* vor (siehe oben) und A. *crystallopoietes* lag in einem bekannten Kultivierungsmedium, wie beispielsweise in Hamilton, R. W. et al., Journal of Bacteriology 1977, 129(2), 874-879 beschrieben (s. Abschnitt "Materials and Methods", S. 874-875), vor. Die Testergebnisse der Unkrautunterdrückung mit diesen alternativen Biozementierungsmischungen sind in Abbildung 2 dargestellt.

**Beispiel 2: Ureolytische Biozementierung mit *L. sphaericus* - Unterdrückung des Wachstums von einkeimblättrigen und zweikeimblättrigen Unkräutern**

Material und Methoden:

Im vorliegenden Versuch wurden zwei Biozementierungsmischungen mit jeweils dem gleichen Bakterienstamm auf zwei verschiedenen Bodensubstraten untersucht.

Der Versuch wurde im Labor in Pflanzentöpfen mit einem Volumen von 450 cm$^3$ durchgeführt. Die Applikationsfläche pro Gefäß betrug jeweils 78,5 cm$^2$. Es wurden insgesamt 9 Pflanzentöpfe je Bodensubstrat mit den beiden verschiedenen Biozementierungsmischungen (s.u.) behandelt.

Das erste Bodensubstrat im Versuch bestand aus einen Quarzsand mit einer Körnung von 0-2 mm. Der Quarzsand war vom Hersteller gewaschen sowie getrocknet und wurde direkt verwendet. Es wurden 300 g Quarzsand pro Pflanzentopf als Bodensubstrat verwendet. In einer weiteren Reihe wurde als zweites Bodensubstrat eine gesiebte Landerde verwendet. Hier wurden 250 g Landerde pro Applikationsgefäß eingesetzt.

Beide Bodensubstrate waren vor Behandlung frei von Unkrautwuchs. In beiden Böden waren jedoch minimale Reste von endemischen Unkrautsamen bzw. Zuflugsamen enthalten. Diese waren jedoch nicht ausreichend für ein effizientes Unkrautwachstum. Es wurde eine Unkrautaussaat mit jeweils 0,2 g *Plantago lanceolata* (Spitzwegerich) und 0,1 g *Poa annua* (einjähriges Rispengras) pro Gefäß vorgenommen. Hierfür wurden die Unkräuter in die oberste Bodenschicht in einer Tiefe von 2-4 mm eingearbeitet.

Bei dem Versuch wurden zwei verschiedene flüssige Biozementierungsmischungen eingesetzt.

Mischung 2 setzte sich aus den folgenden Bestandteilen in den folgenden Konzentrationen zusammen:

| | | |
|---|---|---|
| 20,0 | g/l | Hefeextrakt |
| 0,25 | M | Calciumchlorid |
| 18,0 | g/l | Harnstoff |
| 4 x 10^8 | Zellen/ml | *L. sphaericus* |

Des Weiteren waren in der Mischung Spurenelemente und Spuren von beispielsweise Salzen und Zuckern enthalten (<1%). Harnstoff diente in diesem Medium primär als Carbonatquelle und sekundär als Stickstoffquelle.

In Mischung 3 wurde zusätzlich 50 ml/l Silicade 8 (Kieselsol-Acryldispersion) als Additiv zugegeben. Das Additiv wurde verwendet, um eine länger andauernde Stabilität der Biozementierungsschicht zu erreichen.

Die Bestandteile der Biozementierungsmischungen 2 und 3 (ohne Bakterien) lagen jeweils in fester Form vor. Die Bakterien lagen jeweils als Flüssigkultur in einem aus dem Stand der Technik bekannten Kultivierungsmedium vor, wie beispielsweise in Dick, J. et al., Biodegradation 2006, 17, 357-367 beschrieben (s. Abschnitt "Materials and Methods", S. 359). Die festen Bestandteile und die Bakterien in Flüssigkultur wurden jeweils direkt vor Verwendung gemischt, wobei sich die festen Bestandteile auflösten. Silicade 8 lag in flüssiger Form vor und wurde nur zu Mischung 3 hinzugemischt.

Die Biozementierungsmischungen 2 und 3 sowie eine Wasserkontrolle wurden in jeweils drei Replikaten nebeneinander auf die beiden Versuchsböden aufgebracht. Die Applikationsmenge pro Quadratmeter war durchgehend 5 Liter je Replikat. Zur Applikation wurde eine Pipette verwendet.

Nach der Applikation der Biozementierungsmischungen erfolgte eine Inkubation über 48 Stunden, in der keine Bewässerung stattfand. In diesem Zeitraum herrschte eine Minimaltemperatur von 12,4 °C und eine Maximaltemperatur von 24,2 °C.

Das Wachstum von Unkraut wurde über 42 Tage nach Applikation dokumentiert. Die Minimal- bzw. Maximaltemperatur lag in diesem Zeitraum bei 9,7 °C bzw. 27,9 °C. Die Gefäße wurden je nach Bedarf ein bis drei mal pro Woche gegossen. Die Pflanzentöpfe wurden einer natürlichen Beleuchtung mit Tages- und Nachtrhythmus ausgesetzt.

Die Dokumentation des Unkrautwachstums erfolgte wöchentlich. Hierbei wurde sowohl die Biozementierungsschicht (Schichtdicke, Festigkeit) als auch der sogenannte Deckungsgrad bestimmt. Die Deckungsgrade des Unkrautwuchses wurden durch manuelle visuelle Bonitur der Pflanzentöpfe zu den angegebenen Zeitpunkten ermittelt. Der Deckungsgrad beschreibt prozentual die Fläche, welche durch Unkraut bewachsen ist. Daraus wurde wiederum der Wirkungsgrad nach Abbott wie folgt berechnet:

$$\text{Wirkungsgrad} = (\text{Deckungsgrad Kontrolle}_{\text{Tag xy}} - \text{Deckungsgrad Produkt}_{\text{Tag xy}}) / \text{Deckungsgrad Kontrolle}_{\text{Tag xy}}$$

Zur Verifizierung der Carbonatbildung wurde darüber hinaus jeweils 10 ml der Biozementierungsmischungen 2 und 3 in einem Reaktionsgefäß für 24 h bei Raumtemperatur offen inkubiert. Es wurde anschließend jeweils das präzipitierte Pellet durch Zentrifugation und Trocknung gewonnen. Mit den getrockneten Pellets erfolgte ein Carbonat-Nachweis nach Scheibler.

Ergebnisse:

Auf dem Quarzsand wurde der Unkrautwuchs im Vergleich zur Kontrolle mit beiden Biozementierungsmischungen 2 und 3 vollständig reduziert (Abb. 3). Der durchschnittliche Deckungsgrad nach 42 Tagen lag auf der mit der Biozementierungsmischung 2 behandelten Fläche bei 0%, auf der mit der Biozementierungsmischung 3 behandelten bei 0% und auf der Kontrollfläche bei 31%. Bei beiden Behandlungen (mit Biozementierungsmischung 2 und 3) wurde eine Biozementierungsschicht gebildet. Das Wachstum von Unkraut trat hauptsächlich in den Bereichen auf, in denen die Biozementierungsschicht beschädigt war (z.B. in Trocknungsrissen). Die Zeitverläufe über die 42 Tage können Abbildung 3 (oben) entnommen werden. Die Wirkung der Biozementierung bei der Unkrautunterdrückung ist in Abbildung 3 (Mitte) veranschaulicht und demonstriert den direkten Vergleich zwischen einer Kontrolle (Mitte links), der Biozementierungsmischung 2 (Mitte Mitte) und der Biozementierungsmischung 3 (Mitte rechts). Der Wirkungsgrad beider Biozementierungsmischungen lag final bei jeweils 100%. Nach 42 Tagen wurden die Festigkeiten der Biozementierungsschichten ermittelt (wie oben beschrieben). Die Biozementierungsprobe mit Mischung 2 wies eine Schicht mit einer mittleren Bruchkraft von 4,3 N auf, jedoch ist diese geringer als mit Mischung 3 mit 19,1 N (vgl. Abb. 3 (unten)). Durch Einbau des Additives Silicade 8 in die Biozementierungsschicht (durch Biozementierungsmischung 3) konnte somit eine erhöhte Beständigkeit gegen Umweltparameter und damit eine voraussichtlich längere Wirksamkeit erzielt werden. Bei der Kontrollprobe war keine Biozement-Schicht vorhanden.

Auf der Landerde wurde der Unkrautwuchs im Vergleich zur Kontrolle nahezu vollständig reduziert (Abb. 4). Der durchschnittliche Deckungsgrad nach 42 Tagen lag auf der mit der Biozementierungsmischung 2 behandelten Fläche bei 0%, auf der mit der Biozementierungsmischung 3 behandelten bei 2% und auf der Kontrollfläche bei 50%. Bei beiden Behandlungen (mit Biozementierungsmischung 2 und 3) wurde eine Biozementierungsschicht gebildet. Das Wachstum von Unkraut trat hauptsächlich in den Bereichen auf, in denen die Biozementierungsschicht beschädigt war (z.B. in Trocknungsrissen). Die Zeitverläufe über die 42 Tage können Abbildung 4 (oben) entnommen werden. Die Wirkung der Biozementierung bei der Unkrautunterdrückung ist in Abbildung 4 (Mitte) veranschaulicht und demonstriert den direkten Vergleich zwischen einer Kontrollprobe (Mitte links), der Biozementierungsmischung 2 (Mitte Mitte) und der Biozementierungsmischung 3 (Mitte rechts). Der Wirkungsgrad der beiden Biozementierungsmischungen 2 und 3 lag final bei 100% bzw. 96%. Nach 42 Tagen wurden die Festigkeiten der entstandenen Biozementierungsschichten ermittelt (wie oben beschrieben). Die Biozementierungsprobe mit Mischung 2 wies eine Schicht mit einer mittleren Bruchkraft von 20,5 N auf, jedoch ist diese geringer als mit Mischung 3 mit 84,3 N. Durch Einbau des Additives Silicade 8 in die Biozementierungsschicht (durch Biozementierungsmischung 3) konnte so eine erhöhte Beständigkeit gegen Umweltparameter und damit eine voraussichtlich längere Wirksamkeit erzielt werden. Bei der Kontrollprobe war keine Biozement-Schicht vorhanden.

Die qualitative Analyse der Carbonatbildung nach Scheibler erbrachte für die Biozementierungsmischungen 2 und 3 eine positive Reaktion. Die Kontrollen wiesen keine Carbonatbildung auf (Daten nicht gezeigt).

Vergleichbare Wirkungen auf Unkrautwachstum wurde auch bei leicht abgewandelten Formulierungen der Biozementierungsmischungen 2 und 3 gezeigt, die Calciumacetat, Calciumlactat und / oder Calciumchlorid in einer Konzentration von jeweils 0,05 bis 0,3 M enthielten und eine Gesamtcalciumkonzentration von 0,4 M nicht überschritten (Daten nicht gezeigt). Eine stärkere Variation in der Harnstoffkonzentration (z.B. 0,1 bis 1,0 M) oder bei der Hefeextraktmenge (z.B. 0,1 bis 30 g/l) erbrachte ebenfalls gute Wirkungsgrade. Die Unkrautunterdrückung war jeweils abhängig von den eingesetzten Konzentrationen der Bestandteile der jeweiligen Biozementierungsmischung (Daten nicht gezeigt).

Die gesamten vorangehend beschriebenen Versuche wurden alternativ mit Unkrautsamen durchgeführt, die vor dem Auftragen der jeweiligen Biozementierungsmischung bereits 24 Stunden gekeimt hatten. Hierfür erfolgte die Applikation der jeweiligen Biozementierungsmischung 24 Stunden nach Keimungsstart. Die erzielten Ergebnisse waren vergleichbar mit den im vorliegenden Beispiel beschriebenen und eine nahezu vollständige Reduktion des Unkrautwachstums durch Anwendung der jeweiligen Mischung wurde erzielt (Daten nicht gezeigt).

**Beispiel 3: Ureolytische Biozementierung mit *Sp. pasteurii* - Wachstumsunterdrückung von einkeimblättrigen und zweikeimblättrigen Unkräutern**

Material und Methoden:

Im vorliegenden Versuch wurden zwei Biozementierungsmischungen mit jeweils dem gleichen Bakterienstamm auf zwei verschiedenen Bodensubstraten untersucht.

Der Versuch wurde im Labor in Pflanzentöpfen mit einem Volumen von 450 $cm^3$ durchgeführt. Die Applikati-onsfläche betrug jeweils 78,5 $cm^2$. Es wurden insgesamt 9 Pflanzentöpfe je Bodensubstrat mit den beiden verschiedenen Biozementierungsmischungen (s.u.) behandelt. Die Applikationsfläche pro Gefäß betrug jeweils 78,5 $cm^2$.

Das erste Bodensubstrat im Versuch bestand aus einen Quarzsand mit einer Körnung von 0-2 mm. Der Quarzsand war vom Hersteller gewaschen sowie getrocknet und wurde direkt verwendet. Es wurden 300 g Quarzsand pro Pflanzentopf als Bodensubstrat verwendet. In einer weiteren Reihe wurde als zweites Bodensubstrat eine gesiebte Landerde verwendet. Hier wurden 250 g Landerde pro Applikationsgefäß eingesetzt.

Beide Bodensubstrate waren vor Behandlung frei von Unkrautwuchs. In beiden Böden waren minimale Reste von endemischen Unkrautsamen bzw. Zuflugsamen enthalten. Diese waren jedoch nicht ausreichend für ein effizientes Unkrautwachstum. Es wurde eine Unkrautaussaat mit jeweils 0,2 g *Plantago lanceolata* (Spitzwegerich) und 0,1 g *Poa annua* (einjähriges Rispengras) pro Gefäß vorgenommen. Hierfür wurden die Unkräuter in die oberste Bodenschicht in einer Tiefe von 2-4 mm eingearbeitet.

Bei dem Versuch wurden zwei verschiedene flüssige Biozementierungsmischungen eingesetzt.

Mischung 4 setzte sich aus den folgenden Bestandteilen in den folgenden Konzentrationen zusammen:

| 20,0 | g/l | Hefeextrakt |
|---|---|---|
| 0,25 | M | Calciumchlorid |
| 18,0 | g/l | Harnstoff |
| 4x10^8 | Zellen/ml | *Sp. pasteurii* |

Des Weiteren waren in der Mischung Spurenelemente und Spuren von beispielsweise Salzen und Zuckern enthalten (<1%). Harnstoff diente in diesem Medium primär als Carbonatquelle und sekundär als Stickstoffquelle.

In Mischung 5 wurde zusätzlich 50 ml/l Silicade 8 (Kieselsol-Acryldispersion) als Additiv zugegeben. Das Additiv wurde verwendet, um eine länger andauernde Stabilität der Biozementierungsschicht zu erreichen.

Die Bestandteile der Biozementierungsmischungen 4 und 5 (ohne Bakterien) lagen jeweils in fester Form vor. Die Bakterien lagen jeweils als Flüssigkultur in einem aus dem Stand der Technik bekannten Kultivierungsmedium vor, wie beispielsweise in Cuthbert, M. O. et al., Ecological Engineering 2012, 41, 32-40 beschrieben (s. Abschnitt 2.2, S. 33). Die festen Bestandteile und die Bakterien in Flüssigkultur wurden jeweils direkt vor Verwendung gemischt, wobei sich die festen Bestandteile auflösten. Silicade 8 lag in flüssiger Form vor und wurde nur zu Mischung 5 hinzugemischt.

Die Biozementierungsmischungen 4 und 5 sowie eine Wasserkontrolle wurden in jeweils drei Replikaten nebeneinander auf die beiden Versuchsböden aufgebracht. Die Applikationsmenge pro Quadratmeter war durchgehend 5 Liter je Replikat. Zur Applikation wurde eine Pipette verwendet.

Nach der Applikation der jeweiligen Biozementierungsmischungen erfolgte eine Inkubation über 48 Stunden, in der keine Bewässerung stattfand. In diesem Zeitraum herrschte eine Minimaltemperatur von 12,4 °C und eine Maximaltemperatur von 24,2 °C.

Das Wachstum von Unkraut wurde über 42 Tage nach Applikation dokumentiert. Die Minimal- bzw. Maximaltemperatur lag in diesem Zeitraum bei 9,7 °C bzw. 27,9 °C. Die Gefäße wurden je nach Bedarf ein bis drei mal pro Woche gegossen. Die Pflanzentöpfe wurden einer natürlichen Beleuchtung mit Tages- und Nachtrhythmus ausgesetzt.

Die Dokumentation des Unkrautwachstums erfolgte wöchentlich. Hierbei wurde sowohl die Biozementierungsschicht (Schichtdicke, Festigkeit) als auch der sogenannte Deckungsgrad bestimmt. Die Deckungsgrade des Unkrautwuchses wurden durch manuelle visuelle Bonitur der Pflanzentöpfe zu den angegebenen Zeitpunkten ermittelt. Der Deckungsgrad beschreibt prozentual die Fläche, welche durch Unkraut bewachsen ist. Daraus wurde wiederum der Wirkungsgrad nach Abbott wie folgt berechnet:

$$\text{Wirkungsgrad} = (\text{Deckungsgrad Kontrolle}_{\text{Tag } xy} - \text{Deckungsgrad Produkt}_{\text{Tag } xy}) / \text{Deckungsgrad Kontrolle}_{\text{Tag } xy}$$

Zur Verifizierung der Carbonatbildung wurde darüber hinaus jeweils 10 ml von Biozementierungsmischung 4 und 5 in einem Reaktionsgefäß für 24 h bei

Raumtemperatur offen inkubiert. Anschließend wurde das präzipitierte Pellet durch Zentrifugation und Trocknung gewonnen. Mit den getrockneten Pellets erfolgte ein Carbonat-Nachweis nach Scheibler.

Ergebnisse:

Auf dem Quarzsand wurde der Unkrautwuchs im Vergleich zur Kontrolle vollständig reduziert (Abb. 5). Der durchschnittliche Deckungsgrad nach 42 Tagen lag auf der mit der Biozementierungsmischung 4 behandelten Fläche bei 0%, auf der mit der Biozementierungsmischung 5 behandelten Fläche bei 0% und auf der Kontrollfläche bei 40%. Bei Behandlung mit den Mischungen wurde eine Biozementierungsschicht gebildet. Das Wachstum von Unkraut trat hauptsächlich in den Bereichen auf, in denen die Biozementierungsschicht beschädigt war (z.B. in Trocknungsrissen). Die Zeitverläufe über die 42 Tage können Abbildung 5 (oben) entnommen werden. Die Wirkung der Biozementierung bei der Unkrautunterdrückung ist in Abbildung 5 (Mitte) veranschaulicht und demonstriert den direkten Vergleich zwischen einer Kontrolle (Mitte links), der Biozementierungsmischung 4 (Mitte Mitte) und der Biozementierungsmischung 5 (Mitte rechts). Der Wirkungsgrad der beiden Biozementierungsmischungen lag final bei jeweils nahezu 100%. Nach 42 Tagen wurden die Festigkeiten der Biozementierungsschichten ermittelt (wie oben beschrieben). Die Biozementierungsprobe mit Mischung 4 wies eine Schicht mit einer mittleren Bruchkraft von 4,1 N auf, die Probe mit Mischung 5 zeigte eine mittlere Bruchkraft von 19,3 N (vgl. Abb. 5 (unten)). Durch Einbau des Additives Silicade 8 in die Biozementierungsschicht (durch Biozementierungsmischung 5) konnte so eine erhöhte Beständigkeit gegen Umweltparameter und damit eine voraussichtlich längere Wirksamkeit erzielt werden. Bei der Kontrolle war keine Biozement-Schicht vorhanden.

Auf der Landerde wurde der Unkrautwuchs im Vergleich zur Kontrolle nahezu vollständig reduziert (Abb. 6). Der durchschnittliche Deckungsgrad nach 42 Tagen lag auf der mit dem Biozementierungsmischung 4 behandelten Fläche bei 0%, auf der mit der Biozementierungsmischung 5 behandelten Fläche bei 0% und auf der Kontrollfläche bei 50%. Bei Behandlung mit den Mischungen wurde eine Biozementierungsschicht gebildet. Das Wachstum von Unkraut trat hauptsächlich in den Bereichen auf, in denen die Biozementierungsschicht beschädigt war (z.B. in Trocknungsrissen). Die Zeitverläufe über die 42 Tage können Abbildung 6 (oben) entnommen werden. Die Wirkung der Biozementierung bei der Unkrautunterdrückung ist in Abbildung 6 (Mitte) veranschaulicht und demonstriert den direkten Vergleich zwischen einer Kontrollprobe (Mitte links), Mischung 4 (Mitte Mitte) und Mischung 5 (Mitte rechts). Der Wirkungsgrad der beiden Biozementierungsmischungen lag final bei jeweils 100%. Nach 42 Tagen wurden die Festigkeiten der entstandenen Biozementierungsschichten ermittelt. Die Biozementierungsprobe mit Mischung 4 wies eine Schicht mit einer mittleren Bruchkraft von 20,8 N auf, die Probe mit Mischung 5 hatte eine mittlere Bruchkraft von 66,8 N. Durch Einbau des Additives Silicade 8 in die Biozementierungsschicht (durch Biozementierungsmischung 5) konnte so eine erhöhte Beständigkeit gegen Umweltparameter und damit eine voraussichtlich längere Wirksamkeit erzielt werden. Bei der Kontrolle war keine Biozement-Schicht vorhanden.

Die qualitative Analyse der Carbonatbildung nach Scheibler erbrachte für die Biozementierungsmischung 4 und 5 jeweils eine positive Reaktion. Die Kontrollen wiesen keine Carbonatbildung auf (Daten nicht gezeigt).

Vergleichbare Wirkungen auf Unkrautwachstum wurde auch bei leicht abgewandelten Formulierungen der Biozementierungsmischungen 4 und 5 gezeigt, die Calciumacetat, Calciumlactat und / oder Calciumchlorid in einer Konzentration von jeweils 0,05 bis 0,3 M enthielten und eine Gesamtcalciumkonzentration von 0,4 M nicht überschritten (Daten nicht gezeigt). Eine stärkere Variation in der Harnstoffkonzentration (z.B. 0,1 bis 1,0 M) erbrachte ebenfalls gute Wirkungsgrade. Die Unkrautunterdrückung war jeweils abhängig von den eingesetzten Konzentrationen der Bestandteile der jeweiligen Biozementierungsmischung (Daten nicht gezeigt).

Die gesamten vorangehend beschriebenen Versuche wurden alternativ mit Unkrautsamen durchgeführt, die vor dem Auftragen der jeweiligen Biozementierungsmischung bereits 24 Stunden gekeimt hatten. Hierfür erfolgte die Applikation der jeweiligen Biozementierungsmischung 24 Stunden nach Keimungsstart. Die erzielten Ergebnisse waren vergleichbar mit den im vorliegenden Beispiel beschriebenen und eine nahezu vollständige Reduktion des Unkrautwachstums durch Anwendung der jeweiligen Mischung wurde erzielt (Daten nicht gezeigt).

**Beispiel 4: Freiland** - **Unterdrückung von Unkräutern auf landwirtschaftlichen Nutzflächen und Pflasterfugen**

Material und Methoden:

Der Versuch wurde auf einer landwirtschaftlichen Nutzfläche und einer verfugten Einfahrt durchgeführt. Die Applikationsfläche betrug jeweils 6 m$^2$.

Das Bodensubstrat der landwirtschaftlichen Nutzfläche bestand aus natürlicher Landerde. Vor der Applikation der erfindungsgemäßen Mischung (s.u.) wurde die landwirtschaftliche Nutzfläche durch chemische Behandlung mit Glyphosat von etablierten Unkräutern befreit (ca. 6 Monate vor vorliegendem Versuch). Nach dieser Vorbehandlung waren auf der Oberfläche keine Pflanzenreste mehr vorhanden.

Das Fugenmaterial der Einfahrt bestand hauptsächlich aus Fugenschotter und Fugensand. Diese Flächen wurden vor der Applikation mechanisch durch einen Freischneider von etablierten Unkräutern befreit. Nach dieser Vorbehandlung waren auf der Oberfläche ebenfalls keine Pflanzenreste mehr vorhanden.

Beide Böden enthielten die dort vorkommenden Unkrautsamen, Zuflugsamen und ggf. frische Keimlinge bzw. Pflanzenreste. Es wurde keine künstliche Unkrautaussaat vorgenommen, da genug endemische Unkräuter an beiden Standorten vorhanden waren.

Bei dem Versuch wurde eine flüssige Biozementierungsmischung 6 benutzt, welche sich aus folgenden Bestandteilen und Konzentrationen zusammensetzt:

| | | |
|---|---|---|
| 18,0 | g/l | Harnstoff |
| 62,5 | g/l | Ligninsulfonat |
| 5 x 10^8 | Zellen/ml | *Sporosarcina pasteurii* |

Des Weiteren sind in der Lösung Spurenelemente und Spuren von beispielsweise Salzen, Zuckern und Hefeextrakt enthalten (<1%).

Die Bakterien lagen als Flüssigkultur in Kulturmedium vor (s. hierzu Beschreibung im vorangehenden Beispiel 3). Der Harnstoff und das Ligninsulfonat lagen ursprünglich in fester Form vor. Sie wurden direkt vor Verwendung in Wasser gelöst und mit der Flüssigkultur der Bakterien gemischt.

Die Biozementierungsmischung 6 sowie eine Wasserkontrolle wurden in jeweils drei Replikaten auf die zwei Versuchsflächen aufgebracht. Die Applikationsmenge pro Quadratmeter war durchgehend 4 Liter je Replikat. Zur Applikation wurde eine handelsübliche Gießkanne (5 l Volumen) verwendet.

Nach der Applikation der Biozementierungsmischung 6 erfolgte eine Inkubation über 48 Stunden, in der kein Regen oder künstliche Bewässerung stattfand. In diesem Zeitraum herrschte eine Minimaltemperatur von 5 °C und eine Maximaltemperatur von 25 °C.

Das Wachstum von Unkraut wurde über 42 Tage nach Applikation dokumentiert. Die Minimal- bzw. Maximaltemperatur lag bei 5 °C bzw. 33 °C. Der gesamte Niederschlag im Dokumentationszeitraum lag bei 91 mm (l/m$^2$). Aufgrund der Witterung war kein zusätzliches Gießen notwendig.

Die Dokumentation des Unkrautwachstums erfolgte wöchentlich. Hierbei wurde sowohl die Biozementierungsschicht (Schichtdicke, Festigkeit) als auch der sogenannte Deckungsgrad bestimmt. Die Deckungsgrade des Unkrautwuchses wurden durch manuelle visuelle Bonitur der Pflanzentöpfe zu den angegebenen Zeitpunkten ermittelt. Der Deckungsgrad beschreibt prozentual die Fläche, welche durch Unkraut bewachsen ist. Daraus wurde wiederum der Wirkungsgrad nach Abbott wie folgt berechnet:

$$\text{Wirkungsgrad} = (\text{Deckungsgrad Kontrolle}_{\text{Tag } xy} - \text{Deckungsgrad Produkt}_{\text{Tag } xy}) \, / \, \text{Deckungsgrad Kontrolle}_{\text{Tag } xy}$$

Ergebnisse:

Auf der landwirtschaftlichen Nutzfläche wurde der Unkrautwuchs im Vergleich zur Kontrolle deutlich reduziert. Der Deckungsgrad nach 42 Tagen lag auf den behandelten Flächen bei 3,3%, auf der Kontrollfläche bei 70,0%. Eine Biozementierungsschicht wurde gebildet. Das Wachstum von Unkraut trat hauptsächlich in den Bereichen auf, in denen die Biozementierungsschicht beschädigt war (z.B. in Trocknungsrissen). Die Zeitverläufe über die 42 Tage können Abbildung 7 (oben, Wasserkontrolle) und Abbildung 7 (Mitte, Behandlung mit Biozementierungsmischung 6) entnommen werden. Abbildung 7 (unten) veranschaulicht (jeweils innerhalb der Markierung) den direkten Vergleich zwischen der Kontrolle und der Applikation. Der Wirkungsgrad der Biozementierungsmischung 6 lag final bei 95,2%.

Auf der verfugten Einfahrt wurde der Unkrautwuchs im Vergleich zur Kontrolle ebenfalls deutlich reduziert. Der Deckungsgrad nach 42 Tagen lag auf den behandelten Flächen bei 3,7%, auf der Kontrollfläche bei 40,0%. Auch hier kam es zu einer Bildung einer Biozementierungsschicht. Die Zeitverläufe über die 42 Tage können Abbildung 8 (oben, Wasserkontrolle) und Abbildung 8 (Mitte, Behandlung mit Biozementierungsmischung 6) entnommen werden. Abbildung 8 (unten) veranschaulicht den direkten Vergleich zwischen der Kontrolle und der Applikation (innerhalb der Fugen). Der Wirkungsgrad des Biozementierungsproduktes lag final bei 90,8%.

Die Biozementierungsmischung ist vorteilhafterweise ähnlich effektiv wie viele marktübliche Unkrautunterdrückungsmittel (Daten nicht gezeigt), wobei diverse Nachteile solcher Unkrautunterdrückungsmittel vermieden werden können.

Vergleichbare Wirkungen auf Unkrautwachstum im Freiland wurden auch bei alternativen Mischungs-Formulierungen gezeigt, die zusätzlich (bezogen auf Mischung 6) 0,1 M bis 0,3 M CaCl$_2$ enthielten (Daten nicht gezeigt). Eine stärkere Variation in der Harnstoffkonzentration (1,0 bis 0,15 M) erbrachte ebenfalls gute Wirkungsgrade in der Unkrautunterdrückung (Daten nicht gezeigt).

**Patentansprüche**

1. Verwendung einer Mischung, die zur Biozementierung in der Lage ist, als Mittel zum Verhindern oder Reduzieren von Pflanzenwachstum, vorzugsweise des Wachstums von Unkraut,

   wobei die Mischung folgende Bestandteile umfasst oder daraus besteht:

   (i) ein oder mehrere Organismen und / oder Enzyme, das, der bzw. die dazu in der Lage ist / sind, Carbonat zu bilden, die Carbonat-Bildung zu induzieren und / oder zu katalysieren,
   (ii) ein oder mehrere Stoffe zur Bildung von Carbonat,
   (iii) optional: eine oder mehrere Kationen-Quellen, und
   (iv) optional: ein oder mehrere Additive.

2. Verwendung nach Anspruch 1, wobei der Organismus bzw. die Organismen in Bestandteil (i) der Mischung ein Organismus/mehrere Organismen ist/sind, der/die bei Durchführung eines Assays A umfassend folgende Schritte

   Assay A

   (i) Bereitstellen und Inkontaktbringen eines zu charakterisierenden Organismus oder einer zu charakterisierenden Mischung von Organismen, eines oder mehrerer Stoffe zur Bildung von Carbonat und optional weiterer Stoffe und optional eines Substrats,
(ii) Bereitstellen eines Mittels zur Feststellung einer Ureolyse und/oder Carbonatbildung,
(iii) Kombinieren der in Schritt (i) resultierenden Mischung mit dem Mittel aus Schritt (ii), und
(iv) Bestimmen anhand des Mittels aus Schritt (ii), ob eine Ureolyse und/oder Carbonatbildung vorliegt,

in Schritt (iv) dazu führt, dass eine Ureolyse und/oder Carbonatbildung festgestellt wird, vorzugsweise - sofern ein Substrat bereitgestellt wurde - dass eine Biozementierung festgestellt wird, vorzugsweise eine, die ausreicht zum Verhindern oder Reduzieren von Pflanzenwachstum, vorzugsweise des Wachstums von Unkraut.

3.  Verwendung nach einem der vorangehenden Ansprüche, wobei die Mischung in flüssiger Form, als Gel, Paste oder als Pulver vorliegt.

4.  Verwendung nach einem der vorangehenden Ansprüche, wobei einer bzw. der, mehrere oder sämtliche Organismen ausgewählt ist / sind aus der Gruppe bestehend aus Mikroorganismen, vorzugsweise ausgewählt aus der Gruppe bestehend aus Mikroorganismen der Abteilung Firmicutes, vorzugsweise der Klasse Bacilli, vorzugsweise der Ordnung Bacillales, vorzugsweise der Familien Planococcaceae oder Bacillaceae, vorzugsweise der Gattungen *Sporosarcina, Lysinibacillus* oder *Bacillus,* vorzugsweise ausgewählt aus den Arten *Sporosarcina pasteurii, Sporosarcina ureae, Lysinibacillus sphaericus, Lysinibacillus fusiformis, Bacillus megaterium, Lysinibacillus sp., Bacillus pseudofirmus, Bacillus halodurans* oder *Bacillus cohnii;* und Mikroorganismen der Abteilung Proteobacteria, vorzugsweise der Klassen Alphaproteobacteria, Gammaproteobacteria, Deltaproteobacteria oder Epsilonproteobacteria, vorzugsweise der Ordnungen Enterobacteriales, Myxococcales, Campylobacterales, Pseudomonadales oder Caulobacterales, vorzugsweise der Familien Enterobacteriaceae, Myxococcaceae, Helicobacteraceae, Pseudomonadaceae oder Caulobacteraceae, vorzugsweise der Gattungen *Proteus, Myxococcus, Helicobacter, Pseudomonas* oder *Brevundimonas,* vorzugsweise ausgewählt aus den Arten *Proteus vulgaris, Proteus mirabilis, Myxococcus xanthus, Helicobacter pylori, Pseudomonas aeruginosa* oder *Brevundimonas diminuta;* und Mikroorganismen der Abteilung Actinobacteria, vorzugsweise der Klasse Actinobacteria, vorzugsweise der Ordnung Actinomycetales, vorzugsweise der Familien Brevibacteriaceae oder Micrococcineae, vorzugsweise der Gattungen *Brevibacterium* oder *Micrococcaceae,* vorzugsweise ausgewählt aus den Arten *Brevibacterium linens* oder *Arthrobacter crystallopoietes;* und Mikroorganismen der Abteilung Cyanobacteria, vorzugsweise der Klasse Cyanobacteria, vorzugsweise der Ordnung Synechococcales, vorzugsweise der Familie Synechococcaceae, vorzugsweise der Gattung *Synechococcus,* vorzugsweise der Art *Synechococcus;* und aeroben Bakterien, anaeroben Bakterien, fakultativ anaeroben Bakterien und deren Zwischenstufen.

5.  Verwendung nach einem der vorangehenden Ansprüche, wobei ein bzw. das, mehrere oder sämtliche Enzyme ausgewählt ist / sind aus der Gruppe bestehend aus Urease, Asparaginase, Carboanhydrase und metabolischen Enzymen.

6.  Verwendung nach einem der vorangehenden Ansprüche, wobei ein bzw. der, mehrere oder sämtliche Stoffe zur Bildung von Carbonat ausgewählt ist / sind aus der Gruppe bestehend aus Harnstoff und dessen Salze, organischen Säuren wie Milchsäure und deren Salze, bevorzugt Carboxylate, und deren Ester, Gluconsäure und deren Salze, bevorzugt Carboxylate, und deren Ester, Essigsäure und deren Salze, bevorzugt Carboxylate, und deren Ester, Ameisensäure und deren Salze, bevorzugt Carboxylate, und deren Ester, Peptide, vorzugsweise enthaltend Asparagin, Glutamin und / oder Glutaminsäure, Aminosäuren, vorzugsweise Asparagin, Glutamin und Glutaminsäure, und deren Salze, bevorzugt Carboxylate, und deren Ester, pflanzliche und tierische Komplexsubstrate, insbesondere Pepton, Hefeextrakt, Fleischextrakt, Nährbouillon und Casaminosäure, industrielle Reststoffströme, insbesondere Maisquellwasser, Lactose-Mutterlauge, Proteinlysate, vorzugsweise aus Erbsen, Fleisch oder Tomaten, anaerobe Substrate, vorzugsweise Kohlenstoffdioxid und Methan.

7.  Verwendung nach einem der vorangehenden Ansprüche, wobei ein bzw. das, mehrere oder sämtliche Kationen-Quellen ausgewählt ist / sind aus der Gruppe bestehend aus organischen und anorganischen Calcium-Salzen, vorzugsweise Calciumnitrat, Calciumacetat, Calciumlactat und Calciumchlorid, Magnesium-Salzen, Mangan-Salzen, Zink-Salzen, Cobalt-Salzen, Nickel-Salzen, KupferSalzen, Blei-Salzen, Eisen-Salzen, Cadmium-Salzen, Polymeren, vorzugsweise kationischen Polymeren, Schwermetall-Kationen, Leichtmetall-Kationen, radioaktiven Kationen sowie deren Mischungen.

8.  Verwendung nach einem der vorangehenden Ansprüche, wobei ein bzw. das, mehrere oder sämtliche Additive ausgewählt ist / sind aus der Gruppe bestehend aus Nährstoffen; (Bio-)Polymeren, vorzugsweise Polyhydroxybutyrat, Polylactid, Polybutylensuccinat, Polyacrylsäure, Polymethacrylat, Poly(2-hydroxyethylmethacrylat), Polyvinylalkohol, Polyvinylacetat, Polyvinylpyrrolidon, Poly(2-ethyl-2-oxazolin), Polystyrol, Polyamid, Copolymerisate, Polyaminosäuren, Cellulose und deren Derivate, Stärke und deren Derivate, Lignine und deren Derivate, Pektine und deren Derivate, natürliche Klebstoffe, insbesondere Gummi arabicum, Latex, Kautschuk, und deren Derivate, Chitin und dessen Derivate, Chitosan und dessen Derivate, Cyclodextrine und deren Derivate, Dextrine und deren Derivate; Hydrogelbildner, vorzugsweise Xanthan, Alginate und Agar Agars; kaltlösliche und / oder warmlösliche (Pflanzen-)Leime; Calciumcarbonate und Mischungen enthaltend Calciumcarbonate, vorzugsweise Perlmutter, amorphe Calciumcarbonate, präzipitiertes Calciumcarbonat, Aragonit, Calcit, Vaterit sowie Mischformen und Derivate davon; Polysaccharide und extrazelluläre polymere Substanzen (EPS), vorzugsweise mikrobielle Exopolysaccharide, vorzugsweise enthaltend oder bestehend aus Maleinsäure, Essigsäure, Milchsäure, Lactose, Saccharose, Glucose, Fructose und / oder Inulin; Proteinquellen, Fasern und Faserstoffe, vorzugsweise Casein, Albumin, Hefeextrakte, Peptone, Cellulosefasern, Holzfasern, Holzcellulosefasern; Reststoffe und Industriestoffe, vorzugsweise Maisquellwasser, Lactose-Mutterlauge, Proteinlysate, Melasse, Proteinabfälle, vorzugsweise aus der Hefeproduktion, Fleischherstellung, Milchindustrie und Papierfabrikation; Silikate und deren Derivate; Acrylate und deren Derivate; Wassergläser und Wasserglas-ähnliche Bindemittel; Zemente und Zementaddidive, vorzugsweise Sand, Kalk und dessen Derivate, Aluminiumoxid, Calciumoxid, Calciumhydroxid, Aluminiumhydroxid, Asche, vorzugsweise Flugasche und Knochenasche, Microsilica, Kaoline, Bentonite, Füllmaterialien, vorzugsweise Weisskalk(hydrat), Kalksteinbrechsand und Kalksteinmehl; Harze und Epoxide; natürliche und chemische Herbizide; Fungizide; Molluskizide; Insektizide; Hydrophobizierer und Wachsemulsionen; Emulgierhilfen; Bindemittel; Thixotropiermittel; Kristallisationskeime und Kristallisationsmodifizierer; Fettsäuren; Mineralien und Spurenelemente; Salze, vorzugsweise Phosphate und Sulfate; Gesteine, vorzugsweise Bimsstein und Schiefermehl; Bakterien, die zur Bildung von Polymeren in der Lage sind; und Substanz(en), die die Biozementierung modifiziert / modifizieren.

9. Verwendung nach einem der vorangehenden Ansprüche, wobei die Pflanze bzw. das Unkraut ausgewählt ist aus der Gruppe bestehend aus Dikotylen der Gattungen: *Abutilon, Aegopodium, Aethusa, Amaranthus, Ambrosia, Anachusa, Anagallis, Anoda, Anthemis, Aphanes, Arabidopsis, Atriplex, Barbarea, Bellis, Bidens, Bunias, Capsella, Carduus, Cassia, Centaurea, Chenopodium, Chrysanthemum, Cirsium, Conium, Conyza, Consolida, Convolvulus, Datura, Descurainia, Desmodium, Emex, Equisetum, Erigeron, Erodium, Erysimum, Euphorbia, Fumaria, Galeopsis, Galinsoga, Galium, Geranium, Heracleum, Hibiscus, Ipomoea, Kochia, Lamium, Lapsana, Lathyrus, Lepidium, Lithoserpermum, Linaria, Lindernia, Lycopsis, Malva, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Sisymbrium, Solanum, Sonchus, Sphenoclea, Stachys, Stellaria, Taraxacum, Thlaspi, Trifolium, Tussaligo, Urtica, Veronica, Viola, Xanthium;* Dikotylen der Gattungen: *Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia;* Monokotylen der Gattungen: *Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Juncus, Leptochloa, Lolium, Monochoria, Panicum, Paspalum, Phalaris, Phleum, Poa, Rottboellia, Sagittaria, Scirpus, Setaria, Sorghum;* und Monokotylen der Gattungen: *Allium, Ananas, Asparagus, Avena, Hordeum, Oryza, Panicum, Saccharum, Secale, Sorghum, Triticale, Triticum, Zea;* Moosen der Abstammungslinien Lebermoose, Hornmoose, Laubmoose (Bryopsida); vorzugsweise wobei das Wachstum von wenigstens zwei, drei, vier, fünf, sechs, sieben, acht, neun, zehn, mehr als zehn oder sämtlichen dieser Pflanzen verhindert oder reduziert wird.

10. Verfahren zum Verhindern oder Reduzieren von Pflanzenwachstum, vorzugsweise des Wachstums von Unkraut, auf / in einem Substrat, bestehend aus oder umfassend folgende Schritte:

(a) Identifizieren eines zu behandelnden Substrats, auf / in dem ein Pflanzenwachstum, vorzugsweise ein Wachstum von Unkraut, verhindert oder reduziert werden soll,
(b) Bereitstellen einer Mischung wie in einem der Ansprüche 1 bis 8 definiert,
(c) Auftragen und/oder Einbringen der in Schritt (b) bereitgestellten Mischung auf / in das zu behandelnde Substrat, in einer Menge, die ausreicht, um eine Biozementierung zu ermöglichen, und
(d) Ausbilden einer Biozement-Schicht, so dass das Pflanzenwachstum bzw. das Wachstum von Unkraut auf / in dem Substrat verhindert oder reduziert wird.

11. Verfahren nach Anspruch 10, wobei das Substrat ausgewählt ist aus der Gruppe bestehend aus Sand, Erde, vorzugsweise Landerde und Pflanzenerde, Humus, Schotter, Kies, Lehm, Ton, Schluff, Sägemehl, Papier, Karton, Spanplatten, Weichholz, Kalkstein, Kohle sowie Gemische davon.

12. Verfahren nach Anspruch 10 oder 11, wobei die Pflanze bzw. das Unkraut ausgewählt ist aus der Gruppe bestehend aus Dikotylen der Gattungen: *Abutilon, Aegopodium, Aethusa, Amaranthus, Ambrosia, Anachusa, Anagallis, Anoda, Anthemis, Aphanes, Arabidopsis, Atriplex, Barbarea, Bellis, Bidens, Bunias, Capsella, Carduus, Cassia, Centaurea, Chenopodium, Chrysanthemum, Cirsium, Conium, Conyza, Consolida, Convolvulus, Datura, Descurainia, Desmodium, Emex, Equisetum, Erigeron, Erodium, Erysimum, Euphorbia, Fumaria, Galeopsis, Galinsoga, Galium, Geranium, Heracleum, Hibiscus, Ipomoea, Kochia, Lamium, Lapsana, Lathyrus, Lepidium, Lithoserpermum, Linaria, Lindernia, Lycopsis, Malva, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Sisymbrium, Solanum, Sonchus, Sphenoclea, Stachys, Stellaria, Taraxacum, Thlaspi, Trifolium, Tussaligo, Urtica, Veronica, Viola, Xanthium;* Dikotylen der Gattungen: *Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia;* Monokotylen der Gattungen: *Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Juncus, Leptochloa, Lolium, Monochoria, Panicum, Paspalum, Phalaris, Phleum, Poa, Rottboellia, Sagittaria, Scirpus, Setaria, Sorghum;* und Monokotylen der Gattungen: *Allium, Ananas, Asparagus, Avena, Hordeum, Oryza, Panicum, Saccharum, Secale, Sorghum, Triticale, Triticum, Zea;* Moosen der Abstammungslinien Lebermoose, Hornmoose, Laubmoose.

13. Verfahren nach einem der Ansprüche 10 bis 12, wobei die Mischung in flüssiger Form, als Gel, Paste oder als Pulver vorliegt.

## Claims

1. Use of a mixture capable of biocementation as a means for preventing or reducing plant growth, preferably weed growth,
   wherein the mixture comprises or consists of the following components:

   (i) one or more organisms and/or enzymes capable of forming carbonate and/or of inducing and/or catalyzing carbonate formation,
   (ii) one or more substances for the formation of carbonate,
   (iii) optionally: one or more cation sources, and
   (iv) optionally: one or more additives.

2. Use according to claim 1, wherein the organism or organisms in component (i) of the mixture is/are one organism/several organisms which, when assay A comprising the following steps is carried out
   Assay A

   (i) providing and contacting an organism to be characterised or a mixture of organisms to be characterised, one or more substances for the formation of carbonate and optionally further substances and optionally a substrate,
   (ii) providing a means for detecting a ureolysis and/or carbonate formation,
   (iii) combining the mixture resulting from step (i) with the means from step (ii), and
   (iv) determining from the means from step (ii) whether a ureolysis and/or carbonate formation is present,

   leads to the detection of a ureolysis and/or carbonate formation in step (iv), preferably - if a substrate has been provided - the detection of biocementation, preferably one that is sufficient to prevent or reduce plant growth, preferably the growth of weed.

3. Use according to any of the preceding claims, wherein the mixture is present in liquid form, as a gel, paste or powder.

4. Use according to any of the preceding claims, wherein one or the, several or all organisms is/are selected from the group consisting of microorganisms, preferably is/are selected from the group consisting of microorganisms of the phylum Firmicutes, preferably of the class Bacilli, preferably of the order Bacillales, preferably of the families Planococcaceae or Bacillaceae, preferably of the genera *Sporosarcina, Lysinibacillus* or *Bacillus,* preferably selected from the species *Sporosarcina pasteurii, Sporosarcina ureae, Lysinibacillus sphaericus, Lysinibacillus fusiformis, Bacillus megaterium, Lysinibacillus* sp., *Bacillus pseudofirmus, Bacillus halodurans* or *Bacillus cohnii*; and microorganisms of the phylum Proteobacteria, preferably of the classes Alphaproteobacteria, Gammaproteobacteria, Deltaproteobacteria or Epsilonproteobacteria, preferably of the orders Enterobacteriales, Myxococcales, Campylobacterales, Pseudomonadales or Caulobacterales, preferably of the families Enterobacteriaceae, Myxococcaceae, Helicobacteraceae, Pseudomonadaceae or Caulobacteraceae, preferably of the genera *Proteus, Myxococcus, Helicobacter, Pseudomonas* or *Brevundimonas,* preferably selected from the species *Proteus vulgaris, Proteus mirabilis, Myxococcus xanthus, Helicobacter pylori, Pseudomonas aeruginosa* or *Brevundimonas diminuta;* and microorganisms of the phylum Actinobacteria, preferably of the class Actinobacteria, preferably of the order Actinomycetales, preferably of the families Brevibacteriaceae or Micrococcineae, preferably of the genera *Brevibacterium* or *Micrococcaceae,* preferably selected from the species *Brevibacterium linens* or *Arthrobacter crystallopoietes;* and microorganisms of the phylum Cyanobacteria, preferably of the class Cyanobacteria, preferably of the order Synechococcales, preferably of the family Synechococcaceae, preferably of the genus *Synechococcus,* preferably of the species *Synechococcus;* and aerobic bacteria, anaerobic bacteria, facultative anaerobic bacteria and their intermediates.

5. Use according to any of the preceding claims, wherein one or the, several or all enzymes is/are selected from the group consisting of urease, asparaginase, carbonic anhydrase and metabolic enzymes.

6. Use according to any of the preceding claims, wherein one or the, several or all substances for the formation of carbonate is/are selected from the group consisting of urea and salts thereof, organic acids such as lactic acid and salts thereof, preferably carboxylates, and esters thereof, gluconic acid and salts thereof, preferably carboxylates, and esters thereof, acetic acid and salts thereof, preferably carboxylates, and esters thereof, formic acid and salts thereof, preferably carboxylates, and esters thereof, peptides, preferably containing asparagine, glutamine and/or glutamic acid, amino acids, preferably asparagine, glutamine and glutamic acid, and salts thereof, preferably carboxylates, and esters thereof, vegetable and animal complex substrates, in particular peptone, yeast extract, meat extract, nutrient broth and casamino acid, industrial waste streams, in particular maize steep liquor, lactose mother liquor, protein lysates, preferably from peas, meat or tomatoes, anaerobic substrates, preferably carbon dioxide and methane.

7. Use according to any of the preceding claims, wherein one or the, several or all cation sources is/are selected from the group consisting of organic and inorganic calcium salts, preferably calcium nitrate, calcium acetate, calcium lactate and calcium chloride, magnesium salts, manganese salts, zinc salts, cobalt salts, nickel salts, copper salts, lead salts, iron salts, cadmium salts, polymers, preferably cationic polymers, heavy metal cations, light metal cations, radioactive cations and mixtures thereof.

8. Use according to any of the preceding claims, wherein one or the, several or all of the additives is/are selected from the group consisting of nutrients; (bio-)polymers, preferably polyhydroxybutyrate, polylactide, polybutylene succinate, polyacrylic acid, polymethacrylate, poly(2-hydroxyethylmethacrylate), polyvinyl alcohol, polyvinyl acetate, polyvinylpyrrolidone, poly(2-ethyl-2-oxazoline), polystyrene, polyamide, copolymers, polyamino acids, cellulose and derivatives thereof, starch and derivatives thereof, lignins and derivatives thereof, pectins and derivatives thereof, natural adhesives, in particular gum arabic, latex, rubber and derivatives thereof, chitin and derivatives thereof, chitosan and derivatives thereof, cyclodextrins and derivatives thereof, dextrins and derivatives thereof; hydrogel formers, preferably xanthan gum, alginates and agar agars; cold soluble and/or warm soluble (plant) glues; calcium carbonates and mixtures containing calcium carbonates, preferably mother-of-pearl, amorphous calcium carbonates, precipitated calcium carbonate, aragonite, calcite, vaterite and mixtures and derivatives thereof; polysaccharides and extracellular polymeric substances (EPS), preferably microbial exopolysaccharides, preferably containing or consisting of maleic acid, acetic acid, lactic acid, lactose, sucrose, glucose, fructose and/or inulin; protein sources, fibres and fibrous materials, preferably casein, albumin, yeast extracts, peptones, cellulose fibres, wood fibres, wood cellulose fibres; residues and industrial materials, preferably maize steep liquor, lactose mother liquor, protein lysates, molasses, protein waste, preferably from yeast production, meat production, dairy industry and paper production; silicates and derivatives thereof; acrylates and derivatives thereof; water glasses and water glass-like binders; cements and cement additives, preferably sand, lime and derivatives thereof, aluminium oxide, calcium oxide, calcium hydroxide, aluminium hydroxide, ash, preferably fly ash and bone ash, microsilica, kaolins, bentonites, filling materials, preferably white lime (hydrate), limestone crushed sand and limestone powder; resins and epoxides; natural and chemical herbicides; fungicides; molluscicides; insecticides; hydrophobizers and wax emulsions; emulsifiers; binders; thixotropic agents; crystallization nuclei and crystallization modifiers; fatty acids; minerals and trace elements; salts, preferably phosphates and sulphates; rocks, preferably pumice stone and slate powder; bacteria capable of forming polymers; and substance(s) modifying the biocementation.

9. Use according to any of the preceding claims, wherein the plant or weed is selected from the group consisting of dicotyls of the genera: *Abutilon, Aegopodium, Aethusa, Amaranthus, Ambrosia, Anachusa, Anagallis, Anoda, An-*

*themis, Aphanes, Arabidopsis, Atriplex, Barbarea, Bellis, Bidens, Bunias, Capsella, Carduus, Cassia, Centaurea, Chenopodium, Chrysanthemum, Cirsium, Conium, Conyza, Consolida, Convolvulus, Datura, Descurainia, Desmodium, Emex, Equisetum, Erigeron, Erodium, Erysimum, Euphorbia, Fumaria, Galeopsis, Galinsoga, Galium, Geranium, Heracleum, Hibiscus, Ipomoea, Kochia, Lamium, Lapsana, Lathyrus, Lepidium, Lithoserpermum, Linaria, Lindernia, Lycopsis, Malva, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Sisymbrium, Solanum, Sonchus, Sphenoclea, Stachys, Stellaria, Taraxacum, Thlaspi, Trifolium, Tussaligo, Urtica, Veronica, Viola, Xanthium;* dicotyls of the genera: *Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia;* monocotyls of the genera: *Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Juncus, Leptochloa, Lolium, Monochoria, Panicum, Paspalum, Phalaris, Phleum, Poa, Rottboellia, Sagittaria, Scirpus, Setaria, Sorghum;* and monocotyls of the genera: *Allium, Ananas, Asparagus, Avena, Hordeum, Oryza, Panicum, Saccharum, Secale, Sorghum, Triticale, Triticum, Zea;* mosses of the lineages liverworts, hornworts, mosses (Bryopsida);
preferably wherein the growth of at least two, three, four, five, six, seven, eight, nine, ten, more than ten or all of these plants is prevented or reduced.

**10.** Method for preventing or reducing plant growth, preferably weed growth, on/in a substrate consisting of or comprising the following steps:

(a) Identifying a substrate to be treated on/in which plant growth, preferably weed growth, is to be prevented or reduced,
(b) providing a mixture as defined in any of the claims 1 to 8,
(c) applying and/or introducing the mixture provided in step (b) onto/into the substrate to be treated in an amount sufficient to enable biocementation, and
(d) forming a biocement layer so that plant growth or weed growth on/in the substrate is prevented or reduced.

**11.** Method according to claim 10, wherein the substrate is selected from the group consisting of sand, soil, preferably land soil and plant soil, humus, crushed stone, gravel, loam, clay, silt, sawdust, paper, cardboard, chipboard, softwood, limestone, coal and mixtures thereof.

**12.** Method according to claim 10 or 11, wherein the plant or weed is selected from the group consisting of dicotyls of the genera: *Abutilon, Aegopodium, Aethusa, Amaranthus, Ambrosia, Anachusa, Anagallis, Anoda, Anthemis, Aphanes, Arabidopsis, Atriplex, Barbarea, Bellis, Bidens, Bunias, Capsella, Carduus, Cassia, Centaurea, Chenopodium, Chrysanthemum, Cirsium, Conium, Conyza, Consolida, Convolvulus, Datura, Descurainia, Desmodium, Emex, Equisetum, Erigeron, Erodium, Erysimum, Euphorbia, Fumaria, Galeopsis, Galinsoga, Galium, Geranium, Heracleum, Hibiscus, Ipomoea, Kochia, Lamium, Lapsana, Lathyrus, Lepidium, Lithoserpermum, Linaria, Lindernia, Lycopsis, Malva, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Sisymbrium, Solanum, Sonchus, Sphenoclea, Stachys, Stellaria, Taraxacum, Thlaspi, Trifolium, Tussaligo, Urtica, Veronica, Viola, Xanthium;* dicotyls of the genera: *Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia;* monocotyls of the genera: *Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Juncus, Leptochloa, Lolium, Monochoria, Panicum, Paspalum, Phalaris, Phleum, Poa, Rottboellia, Sagittaria, Scirpus, Setaria, Sorghum;* and monocotyls of the genera: *Allium, Ananas, Asparagus, Avena, Hordeum, Oryza, Panicum, Saccharum, Secale, Sorghum, Triticale, Triticum, Zea;* mosses of the lineages liverworts, hornworts, mosses.

**13.** Method according to any of the claims 10 to 12, wherein the mixture is present in liquid form, as a gel, paste or powder.

**Revendications**

**1.** Utilisation d'un mélange, qui est en mesure d'effectuer un biocimentation, en tant qu'agent pour empêcher ou réduire la croissance végétale, de préférence la croissance de mauvaises herbes,
le mélange comprenant ou étant constitué par les ingrédients suivants :

(i) un ou plusieurs organismes et/ou enzymes, qui est/sont en mesure, de former un carbonate, d'induire la formation de carbonate et/ou de catalyser la formation de carbonate,
(ii) une ou plusieurs matières pour la formation de carbonate,
(iii) éventuellement : une ou plusieurs sources de cations, et
(iv) éventuellement : un ou plusieurs additifs.

2. Utilisation selon la revendication 1, l'organisme ou les organismes dans l'ingrédient (i) du mélange étant un ou des organisme(s), qui conduit/conduisent, lors de la réalisation d'une analyse A comprenant les étapes suivantes analyse A

(i) mise à disposition et mise en contact d'un organisme devant être caractérisé ou d'un mélange d'organismes devant être caractérisé, d'une ou plusieurs matières pour la formation de carbonate et éventuellement d'autres matières et éventuellement d'un substrat,
(ii) mise à disposition d'un agent pour la détermination d'une uréolyse et/ou d'une formation de carbonate,
(iii) combinaison du mélange résultant dans l'étape (i) avec l'agent de l'étape (ii), et
(iv) détermination au moyen de l'agent de l'étape (ii), qu'une uréolyse et/ou qu'une formation de carbone est présente,

à l'étape (iv), au fait qu'une uréolyse et/ou une formation de carbonate est constatée, de préférence - pour autant qu'un substrat ait été mis à disposition - qu'une biocimentation est constatée, de préférence une biocimentation qui suffit pour empêcher ou réduire la croissance végétale, de préférence la croissance de mauvaises herbes.

3. Utilisation selon l'une quelconque des revendications précédentes, le mélange étant présent sous forme liquide, en tant que gel, pâte ou en tant que poudre.

4. Utilisation selon l'une quelconque des revendications précédentes, un organisme, respectivement l'organisme, plusieurs organismes ou tous les organismes étant choisi(s) dans le groupe constitué par les micro-organismes, de préférence choisi(s) dans le groupe constitué par les micro-organismes de la division Firmicutes, de préférence de la classe Bacilli, de préférence de l'ordre Bacillales, de préférence des familles Planococcaceae ou Bacillaceae, de préférence des genres *Sporosarcina, Lysinibacillus* ou *Bacillus,* de préférence choisi(s) parmi les espèces *Sporosarcina pasteurii, Sporosarcina ureae, Lysinibacillus sphaericus, Lysinibacillus fusiformis, Bacillus megaterium, Lysinibacillus sp., Bacillus pseudofirmus, Bacillus halodurans* et *Bacillus cohnii,* et les micro-organismes de la division Proteobacteria, de préférence des classes Alphaproteobacteria, Gammaproteobacteria, Deltaproteobacteria ou Epsilonproteobacteria, de préférence des ordres Enterobacteriales, Myxococcales, Campylobacterales, Pseudomonadales ou Caulobacterales, de préférence des familles Enterobacteriaceae, Myxococcaceae, Helicobacteraceae, Pseudomonadaceae ou Caulobacteraceae, de préférence des genres *Proteus, Myxococcus, Helicobacter, Pseudomonas* ou *Brevundimonas,* de préférence choisi(s) parmi les espèces *Proteus vulgaris, Proteus mirabilis, Myxococcus xanthus, Helicobacter pylori, Pseudomonas aeruginosa* et *Brevundimonas diminuta ;* et les micro-organismes de la division Actinobacteria, de préférence de la classe Actinobacteria, de préférence de l'ordre Actinomycetales, de préférence des familles Brevibacteriaceae ou Micrococcineae, de préférence des genres *Brevibacterium* ou *Micrococcaceae,* de préférence choisi(s) parmi les espèces *Brevibacterium linens* et *Arthrobacter crystallopoietes ;* et les micro-organismes de la division Cyanobacteria, de préférence de la classe Cyanobacteria, de préférence de l'ordre Synechococcales, de préférence de la famille Synechococcaceae, de préférence du genre *Synechococcus,* de préférence de l'espèce *Synechococcus ;* et des bactéries aérobes, des bactéries anaérobes, facultativement des bactéries anaérobes et leurs formes intermédiaires.

5. Utilisation selon l'une quelconque des revendications précédentes, une enzyme, respectivement l'enzyme, plusieurs enzymes ou toutes les enzymes étant choisie(s) dans le groupe constitué par les uréases, les asparaginases, les anhydrases carboniques et les enzymes métaboliques.

6. Utilisation selon l'une quelconque des revendications précédentes, une matière, respectivement la matière, plusieurs matières ou toutes les matières pour la formation de carbonate étant choisie(s) dans le groupe constitué par l'urée et ses sels, les acides organiques tels que l'acide lactique et ses sels, préférablement des carboxylates, et leurs esters, l'acide gluconique et ses sels, préférablement des carboxylates, et leurs esters, l'acide acétique et ses sels, préférablement des carboxylates, et leurs esters, l'acide formique et ses sels, préférablement des carboxylates, et leurs esters, les peptides, contenant de préférence de l'asparagine, de la glutamine et/ou de l'acide glutamique, les acides aminés, de préférence l'asparagine, la glutamine et l'acide glutamique et leurs sels, préférablement des carboxylates, et leurs esters, les substrats complexes animaux et végétaux, en particulier une peptone, un extrait de levure, un extrait de viande, un bouillon nutritif et un acide casamino, les flux de matières résiduelles industrielles, en particulier les eaux de trempe du maïs, les liqueurs mères de lactose, les lysats de protéines, de préférence provenant de pois, de viande ou de tomates, les substrats anaérobes, de préférence le dioxyde de carbone et le méthane.

7. Utilisation selon l'une quelconque des revendications précédentes, une source, respectivement la source, plusieurs sources ou toutes les sources de cations étant choisie(s) dans le groupe constitué par les sels de calcium organiques et inorganiques, de préférence le nitrate de calcium, l'acétate de calcium, le lactate de calcium et le chlorure de calcium, les sels de magnésium, les sels de manganèse, les sels de zinc, les sels de cobalt, les sels de nickel, les sels de cuivre, les sels de plomb, les sels de fer, le sel de cadmium, les polymères, de préférence les polymères cationiques, les cations de métaux lourds, les cations de métaux légers, les cations radioactifs ainsi que leurs mélanges.

8. Utilisation selon l'une quelconque des revendications précédentes, un additif, respectivement l'additif, plusieurs additifs ou tous les additifs étant choisi(s) dans le groupe constitué par les substances nutritives ; les (bio)polymères, de préférence le polyhydroxybutyrate, le polylactide, le poly(succinate de butylène), le poly(acide acrylique), le polyméthacrylate, le poly(méthacrylate de 2-hydroxyéthyle), le poly(alcool vinylique), le poly(acétate de vinyle), la polyvinylpyrrolidone, la poly(2-éthyl-2-oxazoline), le polystyrène, le polyamide, des copolymérisats, les poly(acides aminés), les celluloses et leur dérivés, les amidons et leurs dérivés, les lignines et leurs dérivés, les pectines et leurs dérivés, les adhésifs naturels, en particulier la gomme arabique, le latex, le caoutchouc, et leurs dérivés, la chitine et ses dérivés, le chitosane et ses dérivés, les cyclodextrines et leurs dérivés, les dextrines et leurs dérivés ; les agents de formation d'hydrogel, de préférence le xanthane, les alginates et les agars-agars ; les colles (végétales) solubles à froid et/ou soluble à chaud ; les carbonates de calcium et des mélanges contenant des carbonates de calcium, de préférence la nacre, les carbonates de calcium amorphes, le carbonate de calcium précipité, l'aragonite, la calcite, la vatérite ainsi que des formes mixtes et des dérivés correspondants ; les polysaccharides et les substances polymériques extracellulaires (SPE), de préférence les exopolysaccharides microbiens, de préférence contenant ou étant constitués par de l'acide maléique, de l'acide acétique, de l'acide lactique, du lactose, du saccharose, du glucose, du fructose et/ou de l'inuline ; les sources de protéines, les fibres et les matières fibreuses, de préférence la caséine, l'albumine, les extraits de levure, les peptones, les fibres de cellulose, les fibres de bois, les fibres de cellulose de bois ; les matières résiduaires et les matières industrielles, de préférence les eaux de trempe de maïs, les liqueurs mères de lactose, les lysats de protéines, les mélasses, les déchets protéiques, de préférence provenant de la production de levures, de la préparation de viande, de l'industrie laitière et de la fabrication du papier ; les silicates et leurs dérivés ; les acrylates et leurs dérivés ; les verres solubles et les liants de type verre soluble ; les ciments et les additifs de ciment, de préférence le sable, la chaux et ses dérivés, l'oxyde d'aluminium, l'oxyde de calcium, l'hydroxyde de calcium, l'hydroxyde d'aluminium, les cendres, de préférence les cendres volantes et les cendres d'os, la micro silice, les kaolins, la bentonite, les matériaux de charges, de préférence la chaux blanche (hydratée), le grès et la farine de calcaire ; les résines et les époxydes ; les herbicides naturels et chimiques ; les fongicides ; les molluscicides ; les insecticides ; les agents hydrophobisants et les émulsions de cire ; les auxiliaires d'émulsification ; les liants ; les agents thixotropes ; les germes de cristallisation et les modificateurs de cristallisation ; les acides gras ; les minéraux et les éléments de traces ; les sels, de préférence des phosphates et des sulfates ; les roches, de préférence la pierre ponce et la farine de schiste ; les bactéries qui sont en mesure de former des polymères ; et la ou les substance(s), qui modifie(nt) la biocimentation.

9. Utilisation selon l'une quelconque des revendications précédentes, le végétal respectivement les mauvaises herbes étant choisi(e)s dans le groupe constitué par les dicotylédones des genres : *Abutilon, Aegopodium, Aethusa, Amaranthus, Ambrosiah Anachusa, Anagallis, Anoda, Anthemis, Aphanes, Arabidopsis , Atriplex, Barbarea, Bellis, Bidens, Bunias, Capsella, Carduus, Cassia, Centaurea, Chenopodium, Chrysanthemum, Cirsium, Conium, Conyza, Consolida, Convolvulus, Datura, Descurainia, Desmodium, Emex, Equisetum, Erigeron, Erodium, Erysimum, Euphorbia, Fumaria, Galeopsis, Galinsoga, Galium, Geranium, Heracleum, Hibiscus, Ipomoea, Kochia, Lamium, Lapsana, Lathyrus, Lepidium, Lithoserpermum, Linaria, Lindemia, Lycopsis, Malva, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Sisymbrium, Solanum, Sonchus, Sphenoclea, Stachys, Stellaria, Taraxacum, Thiaspi, Trifolium, Tussaligo, Urtica, Veronica, Viola, Xanthium* ; les dicotylédones des genres : *Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia* ; les monocotylédones des genres : *Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleochahs, Eleusine, Eragrostis, Eriochloa, Festuca, Fimbristylis, Heteranthera, Imperata, Ischaemum, Juncus, Leptochloa, Lolium, Monochoria, Panicum, Paspalum, Phalaris, Phleum, Poa, Rottboellia,*

*Sagittaria, Scirpus, Setaria, Sorghum* ; et les monocotylédones des genres : *Allium, Ananas, Asparagus, Avena, Hordeum, Oryza, Panicum, Saccharum, Secale, Sorghum, Triticale, Triticum,* Zea; les mousses des lignées phylogénétiques hépatiques, anthocérotes, mousses (Bryopsida);
de préférence, la croissance d'au moins deux, trois, quatre, cinq, six, sept, huit, neuf, dix, plus de dix ou de tous ces végétaux étant empêchée ou réduite.

**10.** Procédé pour empêcher ou réduire la croissance végétale, de préférence la croissance de mauvaises herbes, sur/dans un substrat, constitué par ou comprenant les étapes suivantes :

(a) l'identification d'un substrat devant être traité, sur/dans lequel une croissance végétale, de préférence une croissance de mauvaises herbes, doit être empêchée ou réduite,
(b) la mise à disposition d'un mélange tel que défini selon l'une quelconque des revendications 1 à 8,
(c) l'application et/ou l'introduction du mélange mis à disposition dans l'étape (b) sur/dans le substrat devant être traité, en une quantité qui suffit pour rendre possible une biocimentation, et
(d) la formation d'une couche de biociment, de sorte que la croissance végétale respectivement la croissance de mauvaises herbes sur/dans le substrat est empêchée ou réduite.

**11.** Procédé selon la revendication 10, le substrat étant choisi dans le groupe constitué par le sable, la terre, de préférence la terre de sol et la terre végétale, l'humus, le gravier, les gravillons, la glaise, l'argile, le limon, la sciure, le papier, le carton, les panneaux de particules, le bois mou, le calcaire, le charbon ainsi que des mélanges correspondants.

**12.** Procédé selon la revendication 10 ou 11, le végétal respectivement les mauvaises herbes étant choisi(e)s dans le groupe constitué par les dicotylédones des genres : *Abutilon, Aegopodium, Aethusa, Amaranthus Ambrosia, Anachusa, Anagallis, Anoda, Anthemis, Aphanes, Arabidopsis, Atriplex, Barbarea, Bellis, Bidens, Bunias, Capsella, Carduus, Cassia, Centaurea, Chenopodium, Chrysanthemum, Cirsium, Conium, Conyza, Consolida, Convolvulus, Datura, Descurainia, Desmodium, Emex, Equisetum, Erigeron, Erodium, Erysimum, Euphorbia, Fumaria, Galeopsis, Galinsoga, Galium, Geranium, Heracleum, Hibiscus, Ipomoea, Kochia, Lamium, Lapsana, Lathyrus, Lepidium, Lithoserpermum, Linaria, Lindemia, Lycopsis, Malva, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Sisymbrium, Solanum, Sonchus, Sphenoclea, Stachys, Stellaria, Taraxacum, Thlaspi, Trifolium, Tussaligo, Urtica, Veronica, Viola, Xanthium* ; les dicotylédones des genres : *Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia* ; les monocotylédones des genres : *Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Juncus, Leptochloa, Lolium, Monochoria, Panicum, Paspalum, Phalaris, Phleum, Poa, Rottboellia, Sagittaria, Scirpus, Setaria, Sorghum*; et les monocotylédones des genres : *Allium, Ananas, Asparagus, Avena, Hordeum, Oryza, Panicum, Saccharum, Secale, Sorghum, Triticale, Triticum,* Zea ; les mousses des lignées phylogénétiques hépatiques, anthocérotes, mousses (Bryopsida).

**13.** Procédé selon l'une quelconque des revendications 10 à 12, le mélange étant présent sous forme liquide, en tant que gel, pâte ou en tant que poudre.

Abbildung 1

Abbildung 2

Abbildung 3

Abbildung 4

Abbildung 5

Abbildung 6

Abbildung 7

Abbildung 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006066326 A1
- WO 2016010434 A1

**In der Beschreibung aufgeführte Nicht-Patentliteratur**

- **HORVÁTH, B. et al.** A Simple Method for Measuring the Carbonate Content of Soils. *Soil Science Society of America Journal,* 2005, vol. 69, 1066-1068
- Microbial CaCO3 Precipitation for the production of Biocement. **V. S. WHIFFIN.** Dissertation. Murdoch University, 2004
- **JONKERS H. M. et al.** Tailor Made Concrete Structures. Taylor & Francis Group, 2008
- **HAMILTON, R. W. et al.** *Journal of Bacteriology,* 1977, vol. 129 (2), 874-879
- *Materials and Methods,* 874-875
- **DICK, J. et al.** *Biodegradation,* 2006, vol. 17, 357-367
- *Materials and Methods,* 359
- **CUTHBERT, M. O. et al.** *Ecological Engineering,* 2012, vol. 41, 32-40